(19) Europäisches Patentamt / European Patent Office / Office européen des brevets

(11) **EP 4 300 913 A1**

(12) **EUROPEAN PATENT APPLICATION**
published in accordance with Art. 153(4) EPC

(43) Date of publication:
**03.01.2024  Bulletin 2024/01**

(21) Application number: **22773956.2**

(22) Date of filing: **18.02.2022**

(51) International Patent Classification (IPC):
**H04L 45/16** *(2022.01)*

(52) Cooperative Patent Classification (CPC):
**H04L 45/16; H04L 45/48; H04L 47/10**

(86) International application number:
**PCT/CN2022/076838**

(87) International publication number:
**WO 2022/199294 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.03.2021  CN 202110304363**

(71) Applicant: **Huawei Technologies Co., Ltd.
Shenzhen, Guangdong 518129 (CN)**

(72) Inventors:
* **WANG, Chuang
  Shenzhen, Guangdong 518129 (CN)**
* **MENG, Rui
  Shenzhen, Guangdong 518129 (CN)**
* **CHEN, Zhe
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **MULTICAST PACKET SENDING METHOD AND DEVICE**

(57)    This application relates to the field of communications technologies, and provides a multicast packet sending method and an apparatus. In the method, a first node obtains a first multicast packet including multicast routing information of a second node, and sends the first multicast packet to the second node. The second node is a non-leaf subnode of the first node in a multicast tree. Multicast routing information of a node includes a multicast routing identifier of the node and multicast routing information of a non-leaf subnode of the node in the multicast tree. A multicast routing identifier of a node is used by the node to determine a subnode of the node in the multicast tree. The multicast routing information is embedded in the multicast packet, and multicast routing information of a tree recursive structure included in the multicast packet can describe packet forwarding information of the multicast tree or a subtree of the multicast tree. Therefore, scalability is good, and a forwarding path can be conveniently planned and specified based on a requirement.

EP 4 300 913 A1

```
┌────────────┐                              ┌─────────────┐
│ First node │                              │ Second node │
└────────────┘                              └─────────────┘
┌──────────────────────────────────────┐
│ 601. Obtain a first multicast packet, │
│ where the first multicast packet      │
│ includes multicast information of the │
│ second node, the second node is a     │
│ non-leaf subnode of the first node in │
│ a multicast tree, the multicast       │
│ information of the second node         │
│ includes multicast routing information│
│ of the second node, multicast routing │
│ information of a node includes a       │
│ multicast routing identifier of the   │
│ node and multicast routing information │
│ of a non-leaf subnode of the node in  │
│ the multicast tree, and a multicast   │
│ routing identifier of a node is used  │
│ by the node to determine a subnode    │
│ of the node in the multicast tree     │
└──────────────────────────────────────┘
                        602. First multicast packet
                  ─────────────────────────────────────►
```

FIG. 6

**Description**

This application claims priority to Chinese Patent Application No. 202110304363.4, filed with the China National Intellectual Property Administration on March 22, 2021 and entitled "MULTICAST PACKET SENDING METHOD AND APPARATUS", which is incorporated herein by reference in its entirety.

**TECHNICAL FIELD**

This application relates to the field of communications technologies, and in particular, to a multicast packet sending method and an apparatus.

**BACKGROUND**

Multicast means that a sender sends packets carrying same data to a plurality of specific receivers. In an initial implementation, a sender replicates data in a packet to generate a plurality of copies based on a quantity of receivers, and separately encapsulates the copies and sends the copies to the receivers. This causes repeated transmission of packets on some links, reduces network resource utilization, and increases a possibility of network congestion.

To resolve the foregoing problems, a series of multicast technologies are proposed in the industry. A most typical multicast technology is protocol independent multicast-sparse mode (protocol independent multicast-sparse mode, PIM-SM). PIM-SM needs to maintain a multicast forwarding information base (multicast forwarding information base, MFIB) table for each multicast stream in a network. Therefore, there is a severe scalability problem.

**SUMMARY**

Embodiments of this application provide a multicast packet sending method and an apparatus to improve scalability of a multicast packet.

According to a first aspect, a multicast packet sending method is provided. The method includes the following step: A first node obtains a first multicast packet including multicast information of a second node, and sends the first multicast packet to the second node. The second node is a non-leaf subnode of the first node in a multicast tree, the multicast information of the second node includes multicast routing information of the second node, multicast routing information of a node includes a multicast routing identifier of the node and multicast routing information of a non-leaf subnode of the node in the multicast tree, and a multicast routing identifier of a node is used by the node to determine a subnode of the node in the multicast tree. In the method provided in the first aspect, the multicast routing information is embedded in the multicast packet, and multicast routing information of a tree recursive structure included in the multicast packet can describe packet forwarding information of the multicast tree or a subtree of the multicast tree. Therefore, scalability is good, and a forwarding path can be conveniently planned and specified based on a requirement.

In a possible implementation, a multicast routing identifier of a node is used by the node to determine, in a first node set corresponding to the node, a subnode of the node in the multicast tree, and the first node set corresponding to the node includes a part or all of potential subnodes of the node.

In a possible implementation, a multicast routing identifier of a node includes subnode quantity information of the node and an identifier of each subnode of the node.

In a possible implementation, a multicast routing identifier of a node includes a third field and X fourth fields, the third field indicates a quantity X of subnodes of the node, and one fourth field indicates an identifier of one subnode of the node. In the possible implementation, in a multicast scenario in which density of nodes in the multicast tree is extremely low, multicast encapsulation with highest efficiency can be provided.

In a possible implementation, a multicast routing identifier of a node includes N third fields, N is a quantity of nodes in a first node set corresponding to the node, one third field indicates whether a node in the first node set is a subnode of the node in the multicast tree, and the first node set corresponding to the node includes a part or all of potential subnodes of the node. In the possible implementation, in a multicast scenario in which density of nodes in the multicast tree is high, multicast encapsulation with highest efficiency can be provided.

In a possible implementation, a multicast routing identifier of a node includes a third field, the third field includes a first group identifier, the first group identifier indicates a first node group corresponding to the node, and all nodes in the first node group corresponding to the node are subnodes of the node. In the possible implementation, in a multicast scenario in which density of nodes in the multicast tree is highest, multicast encapsulation with highest efficiency can be provided.

In a possible implementation, multicast routing information of a node further includes an addressing field of the node, and the addressing field of the node is used by the node to determine a position of multicast routing information of a non-leaf subnode of the node.

In a possible implementation, the addressing field of the node indicates a length of the multicast routing information of the non-leaf subnode of the node. In the possible implementation, bit overheads of the addressing field can be reduced, and resource utilization can be improved.

In a possible implementation, the addressing field of the node indicates a start position or an end position of the multicast routing information of the non-leaf subnode of the node. In the possible implementation, the node can quickly determine the position of the multicast routing information. Therefore, multicast efficiency is improved.

In a possible implementation, the addressing field of the node includes a plurality of delimitation fields, and the multicast routing information of the non-leaf subnode of the node is separated by the plurality of delimitation fields.

In a possible implementation, the multicast information of the second node further includes a first field of the second node, and the first field indicates a length of the multicast routing information of the second node or a length of the multicast information of the second node.

In a possible implementation, the multicast information of the second node further includes a second field, and the second field is used to align bytes of the multicast information of the second node.

In a possible implementation, the first multicast packet is an IP packet, a destination address in the first multicast packet is an address of the second node, the first multicast packet further includes data, and the multicast information of the second node in the first multicast packet is located between an IP header and the data of the first multicast packet.

In a possible implementation, that a first node obtains a first multicast packet includes: the first node receives a second multicast packet, where the second multicast packet includes multicast routing information of the first node; the first node determines that the second node is a non-leaf subnode of the first node; the first node obtains the multicast routing information of the second node based on the multicast routing information of the first node; and the first node performs packet encapsulation based on the multicast routing information of the second node to obtain the first multicast packet.

In a possible implementation, that the first node obtains the multicast routing information of the second node based on the multicast routing information of the first node includes: the first node determines a position of the multicast routing information of the second node based on an addressing field in the multicast routing information of the first node; and the first node obtains the multicast routing information of the second node based on the position of the multicast routing information of the second node.

In a possible implementation, the first node is a source node of the multicast tree, and that a first node obtains a first multicast packet includes: the first node generates the first multicast packet.

In a possible implementation, the first node is a source node of the multicast tree, and that a first node obtains a first multicast packet includes: the first node generates a second multicast packet, where the second multicast packet includes multicast routing information of the first node; the first node determines that the second node is a non-leaf subnode of the first node; the first node obtains the multicast routing information of the second node based on the multicast routing information of the first node; and the first node performs packet encapsulation based on the multicast routing information of the second node to obtain the first multicast packet.

In a possible implementation, the first node includes at least one entity, the second node includes at least one entity, and the first multicast packet is a multicast packet sent by an entity in the first node to an entity in the second node.

In a possible implementation, a multicast routing identifier of a node is specifically used by an entity in the node to determine a subnode of the node in the multicast tree.

According to a second aspect, a multicast packet sending method is provided, and is applied to a first entity, where the first entity belongs to a first node. The method includes the following steps: The first entity receives a third multicast packet, where the third multicast packet includes first multicast routing information of the first node, the first multicast routing information of the first node includes a first multicast routing identifier of the first node and multicast routing information of a non-leaf subnode corresponding to the first multicast routing identifier of the first node, multicast routing information of a node includes a multicast routing identifier of the node and multicast routing information of a non-leaf subnode of the node in a multicast tree, the multicast routing identifier of the node is used by an entity in the node to determine a subnode of the node in the multicast tree, and the first multicast routing identifier of the first node is the same as a multicast routing identifier of the first node or is obtained by updating a multicast routing identifier of the first node; the first entity determines a second entity based on the first multicast routing identifier of the first node, where the second entity is an entity in the first node; and the first entity sends a fourth multicast packet to the second entity, where the fourth multicast packet includes second multicast routing information of the first node, the second multicast routing information of the first node includes a second multicast routing identifier of the first node and multicast routing information of a part or all of non-leaf subnodes corresponding to a third multicast routing identifier of the first node, the third multicast routing identifier of the first node is the same as the first multicast routing identifier of the first node or is obtained by updating the first multicast routing identifier of the first node, and the second multicast routing identifier of the first node is the same as the third multicast routing identifier of the first node or is obtained by updating the third multicast routing identifier of the first node. According to the method provided in the second aspect, when one node includes a plurality of entities, multicast packet forwarding between the entities in the node can be implemented.

In a possible implementation, that the first entity determines a second entity based on the first multicast routing identifier of the first node includes: the first entity looks up a multicast forwarding table based on the first multicast routing identifier of the first node to obtain the second entity.

In a possible implementation, the method further includes: the first entity determines a first subnode based on the first multicast routing identifier of the first node, where the first subnode is a subnode corresponding to the first entity, among subnodes of the first node in the multicast tree; and the first entity sends a fifth multicast packet to the first subnode, where the fifth multicast packet includes multicast routing information of the first subnode.

In a possible implementation, the first entity does not belong to the first subnode, and that the first entity sends a fifth multicast packet to the first subnode includes: the first entity sends the fifth multicast packet to a third entity in the first subnode.

In a possible implementation, the first entity belongs to the first subnode, and the method further includes: the first entity determines a second subnode based on a multicast routing identifier of the first subnode, where the second subnode is a subnode corresponding to the first entity, among subnodes of the first subnode in the multicast tree.

In a possible implementation, the first entity belongs to the first subnode, the first subnode further includes a fourth entity, and the method further includes: the first entity sends a sixth multicast packet to the fourth entity, where the sixth multicast packet includes first multicast routing information of the first subnode, the first multicast routing information of the first subnode includes a first multicast routing identifier of the first subnode and multicast routing information of a part or all of non-leaf subnodes corresponding to a second multicast routing identifier of the first subnode, the second multicast routing identifier of the first subnode is the same as a multicast routing identifier of the first subnode or is obtained by updating a multicast routing identifier of the first subnode, and the first multicast routing identifier of the first subnode is the same as the second multicast routing identifier of the first subnode or is obtained by updating the second multicast routing identifier of the first subnode.

According to a third aspect, a first node is provided and includes a processing unit and a communications unit. The processing unit is configured to obtain a first multicast packet, where the first multicast packet includes multicast information of a second node, the second node is a non-leaf subnode of the first node in a multicast tree, the multicast information of the second node includes multicast routing information of the second node, multicast routing information of a node includes a multicast routing identifier of the node and multicast routing information of a non-leaf subnode of the node in the multicast tree, and a multicast routing identifier of a node is used by the node to determine a subnode of the node in the multicast tree. The communications unit is configured to send the first multicast packet to the second node.

In a possible implementation, a multicast routing identifier of a node is used by the node to determine, in a first node set corresponding to the node, a subnode of the node in the multicast tree, and the first node set corresponding to the node includes a part or all of potential subnodes of the node.

In a possible implementation, a multicast routing identifier of a node includes subnode quantity information of the node and an identifier of each subnode of the node.

In a possible implementation, a multicast routing identifier of a node includes a third field and X fourth fields, the third field indicates a quantity X of subnodes of the node, and one fourth field indicates an identifier of one subnode of the node.

In a possible implementation, a multicast routing identifier of a node includes N third fields, N is a quantity of nodes in a first node set corresponding to the node, one third field indicates whether a node in the first node set is a subnode of the node in the multicast tree, and the first node set corresponding to the node includes a part or all of potential subnodes of the node.

In a possible implementation, a multicast routing identifier of a node includes a third field, the third field includes a first group identifier, the first group identifier indicates a first node group corresponding to the node, and all nodes in the first node group corresponding to the node are subnodes of the node.

In a possible implementation, multicast routing information of a node further includes an addressing field of the node, and the addressing field of the node is used by the node to determine a position of multicast routing information of a non-leaf subnode of the node.

In a possible implementation, the addressing field of the node indicates a length of the multicast routing information of the non-leaf subnode of the node.

In a possible implementation, the addressing field of the node indicates a start position or an end position of the multicast routing information of the non-leaf subnode of the node.

In a possible implementation, the addressing field of the node includes a plurality of delimitation fields, and the multicast routing information of the non-leaf subnode of the node is separated by the plurality of delimitation fields.

In a possible implementation, the multicast information of the second node further includes a first field of the second node, and the first field indicates a length of the multicast routing information of the second node or a length of the multicast information of the second node.

In a possible implementation, the multicast information of the second node further includes a second field, and the second field is used to align bytes of the multicast information of the second node.

In a possible implementation, the first multicast packet is an IP packet, a destination address in the first multicast packet is an address of the second node, the first multicast packet further includes data, and the multicast information of the second node in the first multicast packet is located between an IP header and the data of the first multicast packet.

In a possible implementation, the processing unit is specifically configured to: receive a second multicast packet by using the communications unit, where the second multicast packet includes multicast routing information of the first node; determine that the second node is a non-leaf subnode of the first node; obtain the multicast routing information of the second node based on the multicast routing information of the first node; and perform packet encapsulation based on the multicast routing information of the second node to obtain the first multicast packet.

In a possible implementation, the processing unit is specifically configured to: determine a position of the multicast routing information of the second node based on an addressing field in the multicast routing information of the first node; and obtain the multicast routing information of the second node based on the position of the multicast routing information of the second node.

In a possible implementation, the first node is a source node of the multicast tree, and the processing unit is specifically configured to: generate the first multicast packet.

In a possible implementation, the first node is a source node of the multicast tree, and the processing unit is specifically configured to: generate a second multicast packet, where the second multicast packet includes multicast routing information of the first node; determine that the second node is a non-leaf subnode of the first node; obtain the multicast routing information of the second node based on the multicast routing information of the first node; and perform packet encapsulation based on the multicast routing information of the second node to obtain the first multicast packet.

In a possible implementation, the first node includes at least one entity, the second node includes at least one entity, and the first multicast packet is a multicast packet sent by an entity in the first node to an entity in the second node.

In a possible implementation, a multicast routing identifier of a node is specifically used by an entity in the node to determine a subnode of the node in the multicast tree.

According to a fourth aspect, a first entity is provided. The first entity belongs to a first node. The first entity includes a communications unit and a processing unit. The communications unit is configured to receive a third multicast packet, where the third multicast packet includes first multicast routing information of the first node, the first multicast routing information of the first node includes a first multicast routing identifier of the first node and multicast routing information of a non-leaf subnode corresponding to the first multicast routing identifier of the first node, multicast routing information of a node includes a multicast routing identifier of the node and multicast routing information of a non-leaf subnode of the node in a multicast tree, the multicast routing identifier of the node is used by an entity in the node to determine a subnode of the node in the multicast tree, and the first multicast routing identifier of the first node is the same as a multicast routing identifier of the first node or is obtained by updating a multicast routing identifier of the first node. The processing unit is configured to determine a second entity based on the first multicast routing identifier of the first node, where the second entity is an entity in the first node. The communications unit is further configured to send a fourth multicast packet to the second entity, where the fourth multicast packet includes second multicast routing information of the first node, the second multicast routing information of the first node includes a second multicast routing identifier of the first node and multicast routing information of a part or all of non-leaf subnodes corresponding to a third multicast routing identifier of the first node, the third multicast routing identifier of the first node is the same as the first multicast routing identifier of the first node or is obtained by updating the first multicast routing identifier of the first node, and the second multicast routing identifier of the first node is the same as the third multicast routing identifier of the first node or is obtained by updating the third multicast routing identifier of the first node.

In a possible implementation, the processing unit is specifically configured to look up a multicast forwarding table based on the first multicast routing identifier of the first node to obtain the second entity.

In a possible implementation, the processing unit is further configured to determine a first subnode based on the first multicast routing identifier of the first node, where the first subnode is a subnode corresponding to the first entity, among subnodes of the first node in the multicast tree; and the communications unit is further configured to send a fifth multicast packet to the first subnode, where the fifth multicast packet includes multicast routing information of the first subnode.

In a possible implementation, the first entity does not belong to the first subnode; and the communications unit is specifically configured to send the fifth multicast packet to a third entity in the first subnode.

In a possible implementation, the first entity belongs to the first subnode; and the processing unit is further configured to determine a second subnode based on a multicast routing identifier of the first subnode, where the second subnode is a subnode corresponding to the first entity, among subnodes of the first subnode in the multicast tree.

In a possible implementation, the first entity belongs to the first subnode, and the first subnode further includes a fourth entity; and the communications unit is further configured to send a sixth multicast packet to the fourth entity, where the sixth multicast packet includes first multicast routing information of the first subnode, the first multicast routing information of the first subnode includes a first multicast routing identifier of the first subnode and multicast routing information of a part or all of non-leaf subnodes corresponding to a second multicast routing identifier of the first subnode, the second multicast routing identifier of the first subnode is the same as a multicast routing identifier of the first subnode or is obtained by updating a multicast routing identifier of the first subnode, and the first multicast routing identifier of the first subnode is the same as the second multicast routing identifier of the first subnode or is obtained by updating the second multicast routing identifier of the first subnode.

According to a fifth aspect, a communications apparatus is provided and includes a processor. The processor is connected to a memory, the memory is configured to store computer-executable instructions, and the processor executes the computer-executable instructions stored in the memory, so that the communications apparatus implements the method provided in the first aspect or the second aspect. For example, the memory and the processor may be integrated together, or may be independent components. If the memory and the processor are independent components, the memory may be located inside the communications apparatus, or may be located outside the communications apparatus.

In a possible implementation, the processor includes a logic circuit, and further includes an input interface and/or an output interface. For example, the output interface is configured to perform a sending action in a corresponding method, and the input interface is configured to perform a receiving action in the corresponding method.

In a possible implementation, the communications apparatus further includes a communications interface and a communications bus. The processor, the memory, and the communications interface are connected by the communications bus. The communications interface is configured to perform receiving and sending actions in the corresponding method. The communications interface may also be referred to as a transceiver. Optionally, the communications interface includes at least one of a transmitter and a receiver. In this case, the transmitter is configured to perform a sending action in the corresponding method, and the receiver is configured to perform a receiving action in the corresponding method.

In a possible implementation, the communications apparatus exists in a form of a chip product.

According to a sixth aspect, a chip is provided. The chip includes a processor and an interface. The processor is coupled to a memory through the interface. When the processor executes a computer program or instructions in the memory, the method provided in the first aspect or the second aspect is performed.

According to a seventh aspect, a computer-readable storage medium is provided and includes instructions. When the instructions are run on a computer, the computer is enabled to perform the method provided in the first aspect or the second aspect.

According to an eighth aspect, a computer program product is provided, and includes instructions. When the instructions are run on a computer, the computer is enabled to perform the method provided in the first aspect or the second aspect.

For technical effects brought by any implementation in the third aspect to the eighth aspect, refer to technical effects brought by corresponding implementations in the first aspect or the second aspect. Details are not described herein again.

It should be noted that the solutions in the foregoing aspects may be combined on the premise that the solutions are not contradictory.

## BRIEF DESCRIPTION OF DRAWINGS

FIG. 1A is a schematic diagram of packet multicast according to an embodiment of this application;
FIG. 1B is a schematic diagram of a multicast tree and topological connection between entities according to an embodiment of this application;
FIG. 2 is a schematic diagram of another multicast tree and topological connection between entities according to an embodiment of this application;
FIG. 3A is a schematic diagram of another topological connection between entities according to an embodiment of this application;
FIG. 3B is a schematic diagram of multicast packet transmission between routers according to an embodiment of this application;
FIG. 4 is a schematic diagram of an SPT and a representation of an MFIB stored in a router in the SPT;
FIG. 5 is a schematic diagram of division of BFER sets in BIER;
FIG. 6 is a flowchart of a multicast packet sending method according to an embodiment of this application;
FIG. 7 is a schematic diagram of a structure of a multicast packet according to an embodiment of this application;
FIG. 8 is a schematic diagram of another structure of a multicast packet according to an embodiment of this application;
FIG. 9 is a schematic diagram of another structure of a multicast packet according to an embodiment of this application;

FIG. 10 is a schematic diagram of another structure of a multicast packet according to an embodiment of this application;

FIG. 11 is a schematic diagram of a structure of a multicast routing identifier according to an embodiment of this application;

FIG. 12 is a schematic diagram of a correspondence between a bit in a bit sequence and a next-hop address according to an embodiment of this application;

FIG. 13 is a schematic diagram of a correspondence between a bit in a bit sequence in a multicast packet and a next-hop address according to an embodiment of this application;

FIG. 14 is a schematic diagram of another structure of a multicast packet according to an embodiment of this application;

FIG. 15 is a schematic diagram of a structure of a multicast routing identifier according to an embodiment of this application;

FIG. 16 is a schematic diagram of an addressing field according to an embodiment of this application;

FIG. 17 is a schematic diagram of another addressing field according to an embodiment of this application;

FIG. 18 is a schematic diagram of another addressing field according to an embodiment of this application;

FIG. 19 is a flowchart of another multicast packet sending method according to an embodiment of this application;

FIG. 20 is a flowchart of still another multicast packet sending method according to an embodiment of this application;

FIG. 21 is a schematic diagram of a topological connection between entities according to an embodiment of this application;

FIG. 22(a) to FIG. 22(e) are a schematic diagram of a structure of a multicast tree and a multicast packet according to an embodiment of this application;

FIG. 23(a) to FIG. 23(d) are a schematic diagram of another structure of a multicast tree and a multicast packet according to an embodiment of this application;

FIG. 24A(a) to FIG. 24A(d) are a schematic diagram of another structure of a multicast tree and a multicast packet according to an embodiment of this application;

FIG. 24B is a schematic diagram of another structure of a multicast packet according to an embodiment of this application;

FIG. 24C is a schematic diagram of another structure of a multicast packet according to an embodiment of this application;

FIG. 25 is a schematic diagram of another topological connection between entities according to an embodiment of this application;

FIG. 26(a) to FIG. 26(e) are a schematic diagram of another structure of a multicast packet according to an embodiment of this application;

FIG. 27(a) to FIG. 27(e) are a schematic diagram of another structure of a multicast packet according to an embodiment of this application;

FIG. 28 is a schematic diagram of another multicast tree according to an embodiment of this application;

FIG. 29(a) to FIG. 29(d) are a schematic diagram of another structure of a multicast packet according to an embodiment of this application;

FIG. 30 is a schematic composition diagram of a communications apparatus according to an embodiment of this application; and

FIG. 31 is a schematic diagram of a hardware structure of a communications apparatus according to an embodiment of this application.

## DESCRIPTION OF EMBODIMENTS

In the description of this application, unless otherwise stated, "/" means "or". For example, A/B may represent A or B. The term "and/or" in this specification describes only an association relationship for describing associated objects and represents that three relationships may exist. For example, A and/or B may represent the following three cases: Only A exists, both A and B exist, and only B exists. In the description of this application, unless otherwise stated, "at least one" means one or more, and "a plurality of" means two or more.

In addition, to clearly describe the technical solutions in embodiments of this application, terms such as "first" and "second" are used in embodiments of this application to distinguish between same items or similar items having basically same functions and purposes. A person skilled in the art may understand that the terms such as "first" and "second" do not limit a quantity and an execution sequence, and the terms such as "first" and "second" do not indicate a definite difference. It should be noted that, in this application, terms such as "an example" or "for example" are used to represent an example, an instance, or an illustration. Any embodiment or design scheme described as "an example" or "for example" in this application should not be construed as being more preferred or advantageous than other embodiments or design schemes. To be precise, the terms such as "an example" or "for example" are intended to present a related concept in a specific manner.

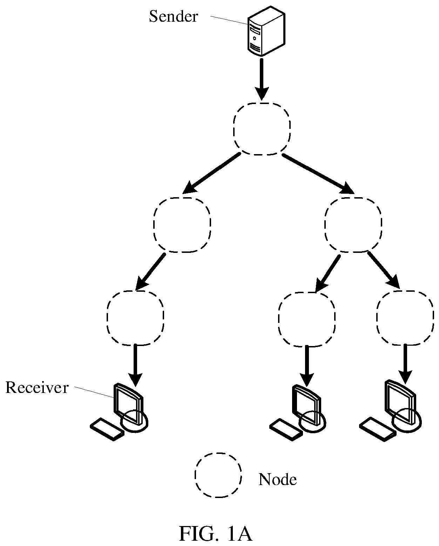

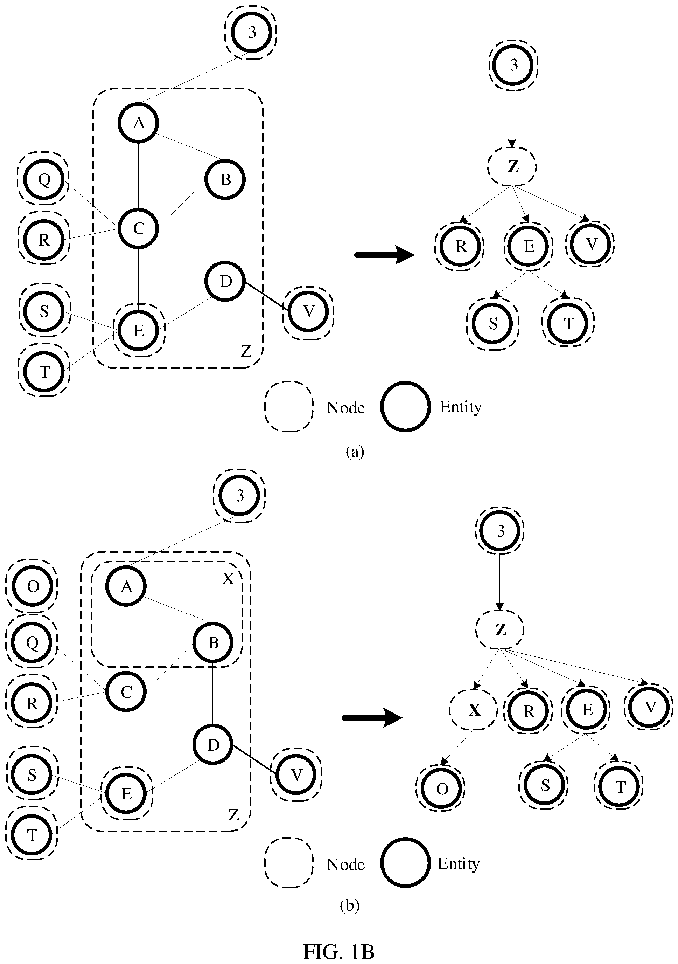

This application may be applied to a scenario in which one sender needs to send a packet carrying same data to a plurality of receivers. Referring to FIG. 1A, the packet may be sent from the sender, and reach a plurality of receivers through a plurality of multicast nodes (hereinafter referred to as nodes). The packet may be referred to as a multicast packet, and data in multicast packets transmitted between different nodes is the same. The sender may be, for example, a server, and the receiver may be, for example, a client. A node has multicast packet sending and forwarding capabilities, and may forward a received multicast packet in multicast mode or send a generated multicast packet in multicast mode. A node may include one or more entities. An entity may belong to only one node or a plurality of nodes. For example, in (a) in FIG. 1B and (b) in FIG. 1B, the left side is a network topology diagram of entities, and the right side is a multicast tree. Referring to (a) in FIG. 1B, node Z includes a plurality of entities, where the plurality of entities are entity A, entity B, entity C, entity D, and entity E. Node E includes one entity, that is, entity E. It can be learned that entity E belongs to both node Z and node E. Referring to (b) in FIG. 1B, node X includes a plurality of entities, where the plurality of entities are entity A and entity B. It can be learned that entity A and entity B belong to both node Z and node X.

It should be noted that, for ease of description, in embodiments of this application, if an entity belongs to only one node, the node and the entity use a same identifier. In this case, an address of the entity may also be described as an address of the node, and an action performed by the node is also an action performed by the entity. Therefore, the address of the node mentioned hereinafter is the address of the entity in the node. For example, a node including only entity A is referred to as node A. In this case, an address of node A is equivalent to an address of entity A. A node including only entity B is referred to as node B. In this case, an address of node B is equivalent to an address of entity B.

In this application, the entity may also be referred to as a functional entity. The entity may be a physical entity or a virtual entity. The physical entity may be, for example, a router, a switch, a server, a host, a network adapter, a line card, a chip, a die (DIE) of a chip, a terminal (for example, a mobile terminal), or an internal module of a device. The virtual entity may be, for example, a virtual machine, a container, a process, or a thread. When the entity is a physical entity, the node may also be referred to as a multicast device.

To make the method provided in this application clearer, some concepts in this application are first briefly described.

1. Multicast tree

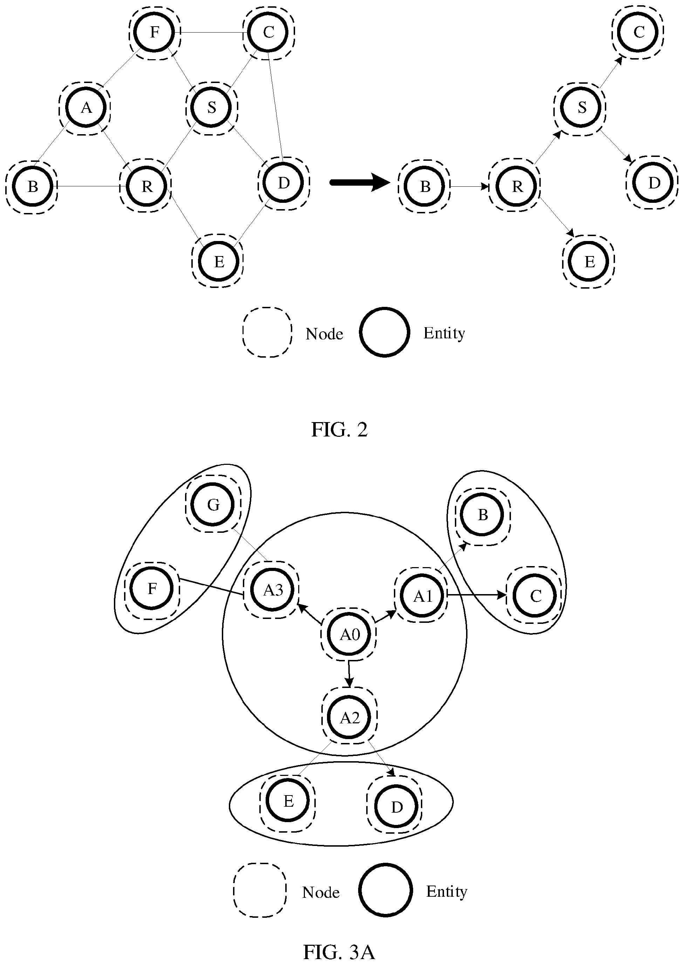

A multicast tree is a path from a source node to all destination nodes, where the path is generated for a combination of the specific source node and destination nodes based on a specific network topology by using a routing protocol (for example, protocol independent multicast (protocol independent multicast, PIM), or an interior gateway protocol (interior gateway protocol, IGP)) or another method (for example, manual configuration or computation by a controller). The path is a tree structure using the source node as a root node and the destination nodes as leaf nodes, and is referred to as a multicast tree. The multicast tree may also be referred to as a multicast distribution tree (multicast distribution tree, MDT). For example, referring to FIG. 2, a network topology diagram of entities is on the left side. If a source node is node B, and destination nodes are node C, node D, and node E, refer to the right side in FIG. 2 for an example of a multicast tree generated for a combination of the source node and the destination nodes.

It should be noted that a sender and/or a receiver may be a node in the multicast tree, or may not be a node in the multicast tree. If the sender and/or the receiver are/is a node in the multicast tree, the source node may be the sender, and the destination node may be the receiver. For ease of description, unless otherwise specified, in embodiments of this application, an example in which the sender and the receiver are nodes in the multicast tree is used to describe the methods provided in embodiments of this application. If the receiver is not a node in the multicast tree, after data reaches a leaf node, the leaf node sends the received data to the receiver connected to the leaf node. In addition, a module other than a network adapter in a server may be considered as a node (assumed to be node a), and the network adapter in the server may be considered as another node (assumed to be node b). In this case, node b may be considered as a subnode of node a. A module other than a line card in a router may be considered as a node (assumed to be node c), and the line card in the router may be considered as another node (assumed to be node d). In this case, node d may be considered as a subnode of node c. For example, referring to FIG. 3A, A is a router, node A0 in FIG. 3A is a module other than a line card in the router, and node A1, node A2, and node A3 are three line cards in the router. A may separately send a multicast packet to node B, node C, node D, node E, node F, and node G by using interfaces on the three line cards. In this case, node A1, node A2, and node A3 may be subnodes of node A0. Alternatively, A may be a server. In this case, node A1, node A2, and node A3 are three network adapters in the server, and A may separately send a multicast packet to node B, node C, node D, node E, node F, and node G by using network interfaces on the three network adapters.

2. Subnode

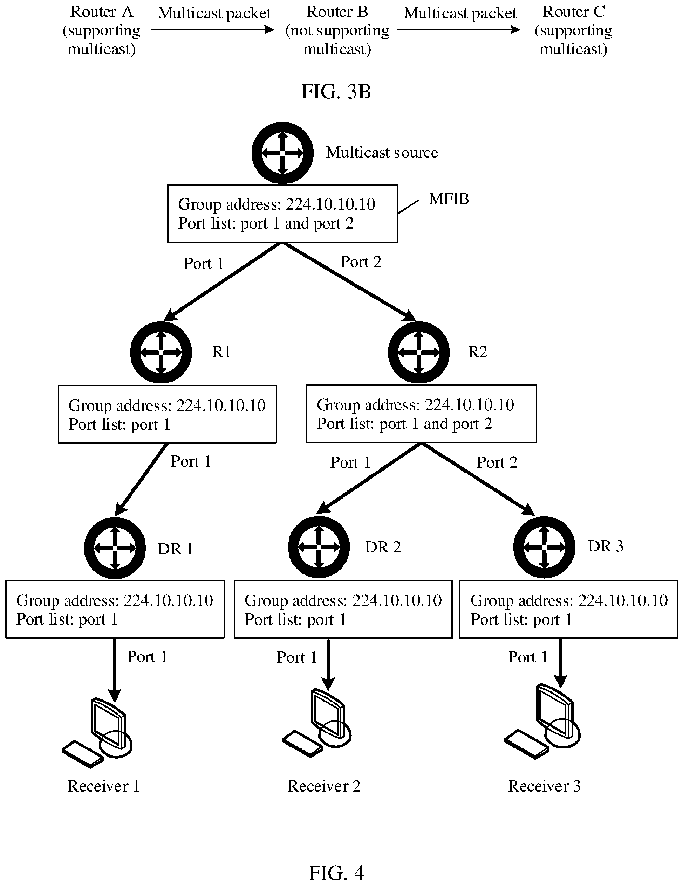

A subnode of a node refers to a node that a packet of the node in the multicast tree can reach through one-hop multicast (that is, multicast forwarding is performed only once). One-hop multicast means looking up a multicast forwarding table once. For example, in FIG. 2, node R is a subnode of node B, node S is a subnode of node R, and node E is a subnode of node R. It should be noted that, if a multicast packet sent by a node that supports multicast in the multicast tree reaches another node that supports multicast in the multicast tree after the multicast packet passes through one or more nodes that do not support multicast, a next node that supports multicast is a subnode of a previous node that supports multicast, that is, through one-hop multicast, the multicast packet from the previous node that supports multicast reaches the next node that supports multicast. For example, referring to FIG. 3B, router A and router C are routers that support multicast, and router B is a router that does not support multicast. In this case, router A sends a multicast packet to router C through router B, and both router A and router C are nodes in the multicast tree. In this case, router C is a subnode of router A.

When a subnode of a node is a leaf node of the multicast tree, the subnode may be referred to as a leaf subnode of the node. When a subnode of a node is not a leaf node of the multicast tree, the subnode may be referred to as a non-leaf subnode of the node.

In the description of this application, unless otherwise specified, a subnode of a node mentioned hereinafter in this application is a subnode of the node in a multicast tree. The subnode may also have another name, for example, a multicast subnode. This is not limited in this application.

It should be noted that a node to which an entity belongs may be a subnode of another node to which the entity belongs. For example, referring to (b) in FIG. 1B, node X to which entity A (or entity B) belongs is a subnode of node Z to which entity A (or entity B) belongs. Certainly, a node to which an entity belongs may alternatively not be a subnode of another node to which the node belongs.

3. Potential subnode

A potential subnode of a node refers to a node that a packet of the node can reach through one-hop multicast. For example, node R and node A in FIG. 2 are both potential subnodes of node B, and node F, node R, node C, and node D are all potential subnodes of node S. It may be understood that a potential subnode of a node includes a subnode of the node in the multicast tree. When a potential subnode of a node is located in the multicast tree, the potential subnode is a subnode of the node in the multicast tree. The potential subnode may also have another name, for example, a multicast object, or a candidate subnode. This is not limited in this application.

4. Multicast routing information, first multicast routing information, and second multicast routing information

In embodiments of this application, multicast routing information of a node is carried in a multicast packet forwarded between nodes. Both first multicast routing information and second multicast routing information of a node are derived from multicast routing information of the node, and are carried in a multicast packet forwarded between entities in the node.

5. Multicast routing identifier, first multicast routing identifier, second multicast routing identifier, and third multicast routing identifier

In embodiments of this application, a multicast routing identifier of a node is carried in a multicast packet forwarded between nodes. A first multicast routing identifier, a second multicast routing identifier, and a third multicast routing identifier of a node are all derived from a multicast routing identifier of the node, and are carried in a multicast packet forwarded between entities in the node.

6. Unicast and multicast packets

First definition of unicast and multicast packets:

Packets are classified based on behavior of packet processing performed by an entity. In this case, both a unicast packet and a multicast packet are for an entity in this application, and whether a packet is a unicast packet or a multicast packet is relative. Specifically:
For an entity, if a received packet does not include any multicast routing information that needs to be processed by the entity or does not include any multicast routing information, the entity does not need to perform multicast forwarding on the packet (or does not need to look up a multicast forwarding table), but only needs to perform unicast forwarding based

9

on unicast encapsulation of the packet (or use a destination address of unicast encapsulation to look up a unicast forwarding table for forwarding) or consume the packet (that is, the entity processes the packet and does not need to forward the packet). In this case, the packet is a unicast packet for the entity.

For an entity, if a received packet includes multicast routing information, and the entity needs to process the multicast routing information, that is, needs to perform multicast forwarding based on the multicast routing information (or needs to look up a multicast forwarding table), the packet is a multicast packet for the entity.

For example, entity A and entity B have a topological connection, and entity B and entity C have a topological connection. A packet sent by entity A to entity C can reach entity C only through entity B. If the packet includes multicast routing information and unicast encapsulation, and a destination address of unicast encapsulation is an address of entity C, the packet is a unicast packet for entity B and a multicast packet for entity C.

For another example, entity A and entity B have a topological connection, and entity A sends a packet to entity B. The packet does not include multicast routing information, but includes unicast encapsulation, and a destination address of unicast encapsulation is an address of entity B. In this case, the packet is a unicast packet for entity B.

Second definition of unicast and multicast packets:

Packets are classified based on structures of the packets. Specifically, a packet whose outermost header is a unicast header is a unicast packet, and a packet whose outermost header is a multicast header is a multicast packet. An IP header whose destination IP address is a unicast address is a unicast header, and a MAC header whose destination media access control (media access control,
MAC) address is a unicast address is also a unicast header. An IP header whose destination IP address is a multicast address is a multicast header, and a MAC header whose destination MAC address is a multicast address is also a multicast header. Multicast information in this application is also a multicast header.

Based on the foregoing two definitions of the unicast and multicast packets, to make the methods provided in embodiments of this application clearer, the first definition is used in this application to describe the methods provided in embodiments of this application. When the second definition is used in this application, whether a packet is a unicast packet or a multicast packet may be determined based on a specific structure of the packet. For example, in the following description, a first node sends a first multicast packet to a second node, and if an outermost header of the first multicast packet is a unicast header, the first multicast packet may be described as a unicast packet when the second definition is used for description.

Unicast encapsulation in a packet in this application may be Internet protocol (Internet protocol, IP) version 4 (IPv4 for short) unicast encapsulation, IP version 6 (IPv6 for short) unicast encapsulation, or any other possible encapsulation form. In this application, unicast encapsulation in any possible form may be performed on a packet including multicast routing information, or unicast encapsulation may not be performed. The unicast encapsulation of the packet enables the packet to traverse a network between two entities in unicast mode (or the packet is transmitted between the two entities). The multicast routing information mentioned in the description of the unicast packet and the multicast packet is multicast routing information defined hereinafter in this application.

It should be noted that, in embodiments of this application, when a multicast packet is an IP packet, and a destination IP address in an IP header of the multicast packet is a unicast address, the IP header of the multicast packet is unicast encapsulation of the multicast packet. It should be noted that if the multicast packet in this application is an IP packet, in the description of this application, the destination address is a destination IP address.

In the following description of this application, if an entity receives a multicast packet and the multicast packet is an IP packet, the entity first determines whether a destination address in an IP header of the multicast packet is an address of the entity, and if yes, parses multicast information after the IP header of the multicast packet, and forwards the multicast packet based on the multicast information. In a process of sending the multicast packet to another entity, the entity first determines multicast information and data that need to be sent to the another entity, then determines a next-hop address (that is, an address of the another entity), fills in a destination address field in the IP header with the address of the another entity, encapsulates the multicast information and data to be sent to the another entity, into the IP header to obtain the multicast packet to be sent to the another entity, and then sends the multicast packet to the another entity. For brevity in the following description of this application, this process is not described in detail in each step, and is centrally described herein. Details are not described again later.

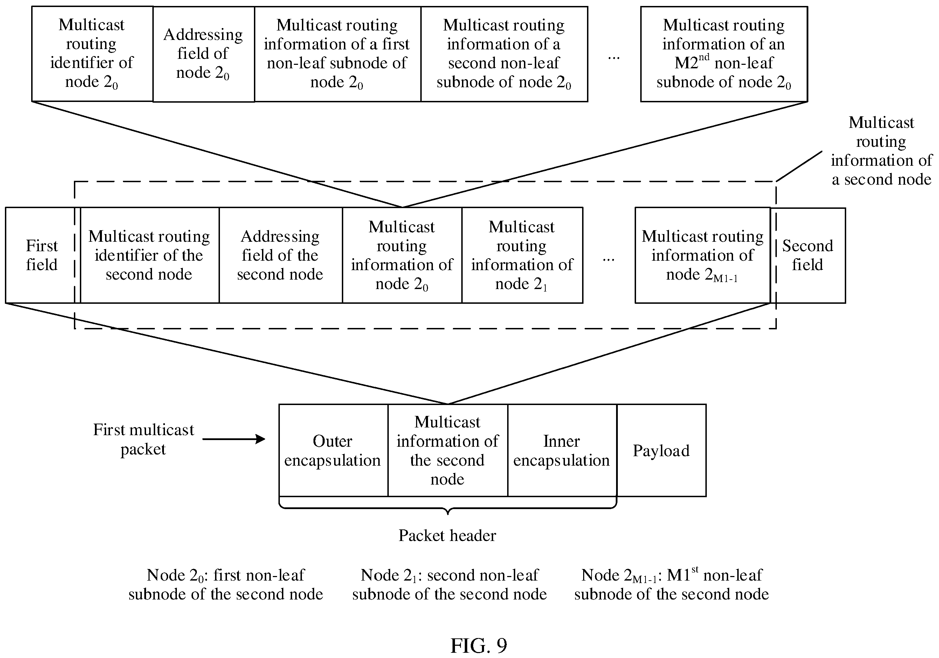

It should be noted that for data in the multicast packet, the data is different for different parts of the multicast packet. Specifically, for a part of the multicast packet, the data is a part after the part of the multicast packet. For example, referring to FIG. 9, for outer encapsulation, data is a part after outer encapsulation (that is, "multicast information of the second node + inner encapsulation + payload (payload)"); for the multicast information of the second node, data is a part after the multicast information of the second node (that is, "inner encapsulation + payload"); and for inner encapsulation, data is a part after inner encapsulation (that is, "payload"). Data mentioned in embodiments of this application is related to multicast information in a multicast packet. For example, data in a first multicast packet shown in FIG. 9 is "inner encapsulation + payload". The foregoing briefly describes some concepts in this application.

Currently, multicast packet forwarding may be implemented by using PIM-SM (denoted as solution 1) or bit index explicit replication (bit index explicit replication, BIER) (denoted as solution 2). The following describes implementation processes and existing problems of the solutions 1 and 2.

Solution 1: A multicast packet is forwarded through PIM-SM.

PIM-SM is a multicast routing protocol. PIM-SM is used to establish an MFIB table hop by hop in a direction from a receiver to a multicast source (a sender or a rendezvous point (rendezvous point, RP)), and finally construct a tree structure that uses the multicast source as a root node and the receiver as a leaf node, that is, a multicast tree. A multicast packet is replicated on each router (which may also be referred to as a multicast router) in a direction from a root node to a leaf node in the multicast tree, until the multicast packet reaches a receiver. All receivers may form a multicast group, and one receiver is a member of the multicast group. A multicast tree that uses an RP as a root node and a member in a multicast group as a leaf node is referred to as a rendezvous point tree (RP Tree, RPT). A multicast tree that uses a sender as a root node and a member in a multicast group as a leaf node is referred to as a shortest path tree (shortest path tree, SPT). RPT and SPT forwarding processes are basically consistent. Using the SPT as an example, after the SPT is constructed, each router stores an MFIB table, where the MFIB table stores a group address (group address) and a port list (port list). When receiving a multicast packet whose destination address is the group address, the router sends the multicast packet through a port in the port list. For example, for an SPT and an MFIB table stored in a router in the SPT, refer to FIG. 4. In FIG. 4, R represents a common router, and a DR represents a designated router (a router that sends a multicast packet to a member in a multicast group).

Solution 1 has the following problems:

1. PIM-SM needs to maintain an MFIB table for each multicast flow in a network. A quantity of entries in the MFIB table maintained on each router is limited. If there are excessive multicast trees or multicast flows, more table space needs to be extended in the router to support multicast packet forwarding. Therefore, scalability is poor.

2. The multicast tree is constructed by establishing the MFIB table hop by hop in the direction from the receiver to the multicast source. Therefore, the multicast tree is completely fixed, and a forwarding path cannot be actively controlled based on planning.

3. Because the multicast tree is constructed by establishing the MFIB table hop by hop in the direction from the receiver to the multicast source, only a previous-hop node knows whether a leaf node joins or leaves the multicast tree, and the multicast source does not know this. In other words, the multicast source does not perceive presence of a user, and manageability is poor.

4. Because the multicast tree is constructed by establishing the MFIB table hop by hop in the direction from the receiver to the multicast source, to maintain a hop-by-hop multicast state, a subnode needs to periodically send join signaling. When there are many multicast streams, the router needs to process a large amount of periodic signaling, causing increase of computational load, power consumption, and processing resources of the router.

Solution 2: A multicast packet is forwarded through BIER.

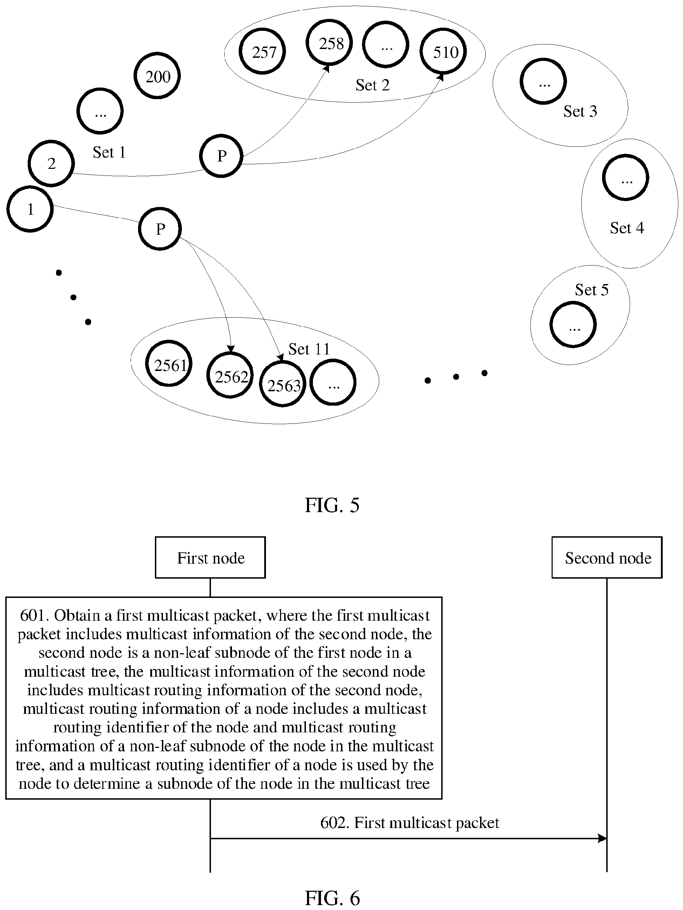

To resolve the problems of PIM-SM, a stateless multicast routing protocol BIER is proposed in the industry. A router supporting BIER is referred to as a BFR (Bit-Forwarding Router), a domain ingress router supporting BIER is referred to as a BFIR (Bit-Forwarding Ingress Router), and a domain egress router supporting BIER is referred to as a bit-forwarding egress router (bit-forwarding egress router, BFER). BIER assigns a unique identifier (ID) to each BFER. The ID is referred to as a BFRID, and a typical value range of the ID is 1 to 65536. Referring to FIG. 5, all BFERs are divided into several sets (set), each set has a set identifier (set identifier, SI), and a typical value range of the set identifier is 0 to 255. Each set includes a maximum of 256 BFERs. Each set occupies SI * 256 + 1 - (SI + 1) * 256 BFRIDs, where "*" indicates "multiplication". As specified in the BIER protocol, a SI and a bit string (bitstring) carried in a header of a multicast packet indicate BFERs to which the multicast packet is sent. A bit string is a bitmap (bitmap) of 256 bits (bit) in length, and each bit corresponds to one BFER. For example, when a value of a bit corresponding to a BFER is 1, it indicates that the multicast packet needs to be multicast to the BFER. One multicast packet can carry only one SI and one bit string. Therefore, one multicast packet can be multicast to only one set. For example, referring to FIG. 5, a BFER whose ID is 2 in set 1 sends a multicast packet through node P (that is, a node in a carrier network) to BFERs whose IDs are 258 and 510 in set 2. The multicast packet includes one SI and one bit string. The SI is 2, bits corresponding to the BFERs whose IDs are 258 and 510 in the bit string are 1, and other bits are 0. In addition, a bit index forwarding table (bit index forwarding table, BIFT) is maintained in each BFER, and the BIFT is a multicast routing table defined by BIER. The BFER may forward the multicast packet based on the SI and bit string carried in a header of the multicast packet and the maintained BIFT.

Solution 2 has the following problems:

1. Because a multicast packet can carry only one SI and one bit string, the multicast packet can be multicast to only one set. This means that if there are 50 sets in total and the multicast packet needs to be sent to BFERs in the 50 sets, 50 multicast packets need to be sent. Excessive packets cause poor multicast efficiency.
2. The BIFT in the BIER is fixed, that is, each node has a fixed next hop. Therefore, a path for routing cannot be planned or specified.

To resolve the problems existing in the foregoing solution 1 and solution 2, this application provides a multicast packet sending method. Referring to FIG. 6, the method includes the following steps.

601. A first node obtains a first multicast packet, where the first multicast packet includes multicast information of a second node, the second node is a non-leaf subnode of the first node in a multicast tree, the multicast information of the second node includes multicast routing information of the second node, multicast routing information of a node includes a multicast routing identifier of the node and multicast routing information of a non-leaf subnode of the node in the multicast tree, and a multicast routing identifier of a node is used by the node to determine a subnode of the node in the multicast tree.

The first node may be any node having a non-leaf subnode in the multicast tree. The first node may include at least one entity. The second node may include at least one entity.

A multicast routing identifier of a node is used to indicate the node to perform multicast routing and forwarding. Optionally, a multicast routing identifier of a node is used by the node to determine, in a first node set corresponding to the node, a subnode of the node in the multicast tree, and the first node set corresponding to the node includes a part or all of potential subnodes of the node. One node may correspond to a plurality of node sets. The node set may be generated by a specific protocol, algorithm, or configuration. The first node set may be one of a plurality of node sets. The first node set corresponding to the node may be indicated by using the multicast routing identifier of the node. For example, the multicast routing identifier of the node may carry a set identifier, and the first node set is indicated by using the set identifier. The first node set corresponding to the node may alternatively be preconfigured in the node.

Optionally, a multicast routing identifier of a node is specifically used by an entity in the node to determine a subnode of the node in the multicast tree.

Multicast routing information of a non-leaf subnode in multicast routing information of a node may be a multicast routing information list, and the list may be arranged in a sequential manner, a chain manner, or another possible manner. This is not limited in this application. It may be understood that, if a node does not have a non-leaf subnode, multicast routing information of the node does not include multicast routing information of the non-leaf subnode, and includes only a multicast routing identifier of the node.

As can be learned from the description of the first multicast packet, the first multicast packet includes multicast routing information of a tree recursive structure, and multicast routing information of a non-leaf subnode of the second node in the first multicast packet may be considered as a recursive unit in the recursive structure. For ease of description, in some of the following descriptions of this application, multicast routing information of a non-leaf subnode of a node is denoted as a recursive unit. It is assumed that a quantity of non-leaf subnodes of a node is M, and that multicast routing information of the $(m+1)^{th}$ non-leaf subnode of the node is denoted as recursive unit m of the node, where m is an integer greater than or equal to 0 and less than M. It may be understood that multicast routing information of each non-leaf subnode of the second node further includes a plurality of recursive units (each recursive unit is multicast routing information of a non-leaf subnode of the non-leaf subnode), and so on. The multicast routing information included in the first multicast packet may describe packet forwarding information of the multicast tree or a subtree of the multicast tree.

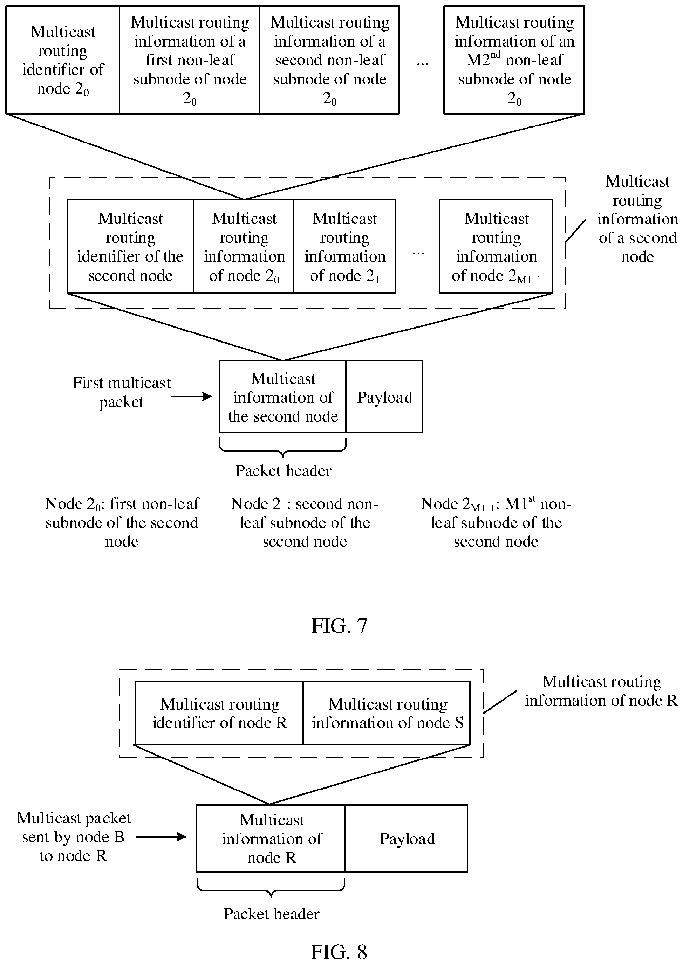

For example, referring to FIG. 7, assuming that there are M1 non-leaf subnodes of the second node, which are denoted as node $2_0$, node $2_1$, node $2_2$, ..., node $2_{M1-1}$, a packet header of the first multicast packet includes the multicast information of the second node, and the multicast information of the second node includes a multicast routing identifier of the second node, and multicast routing information of node $2_0$, node $2_1$, node $2_2$, ..., node $2_{M1-1}$. Further, the multicast routing information of each of node $2_0$, node $2_1$, node $2_2$, ..., node $2_{M1-1}$ further includes multicast routing information of a non-leaf subnode of the corresponding node. For example, assuming that there are M2 non-leaf subnodes of node $2_0$, the multicast routing information of node $2_0$ includes a multicast routing identifier of node $2_0$, and multicast routing information of the first non-leaf subnode, the second non-leaf subnode, ..., the $M2^{nd}$ non-leaf subnode of node $2_0$. Each non-leaf subnode of node $2_0$ further includes multicast routing information of a non-leaf subnode of the non-leaf subnode, and this rule also applies to Node $2_1$, Node $2_2$, ..., Node $2_{M1-1}$.

For example, based on the multicast tree shown in FIG. 2, referring to FIG. 8, a packet header of a multicast packet sent by node B to node R includes multicast information of node R, and the multicast information of node R includes a multicast routing identifier of node R and multicast routing information of a non-leaf subnode (that is, node S) of node R.

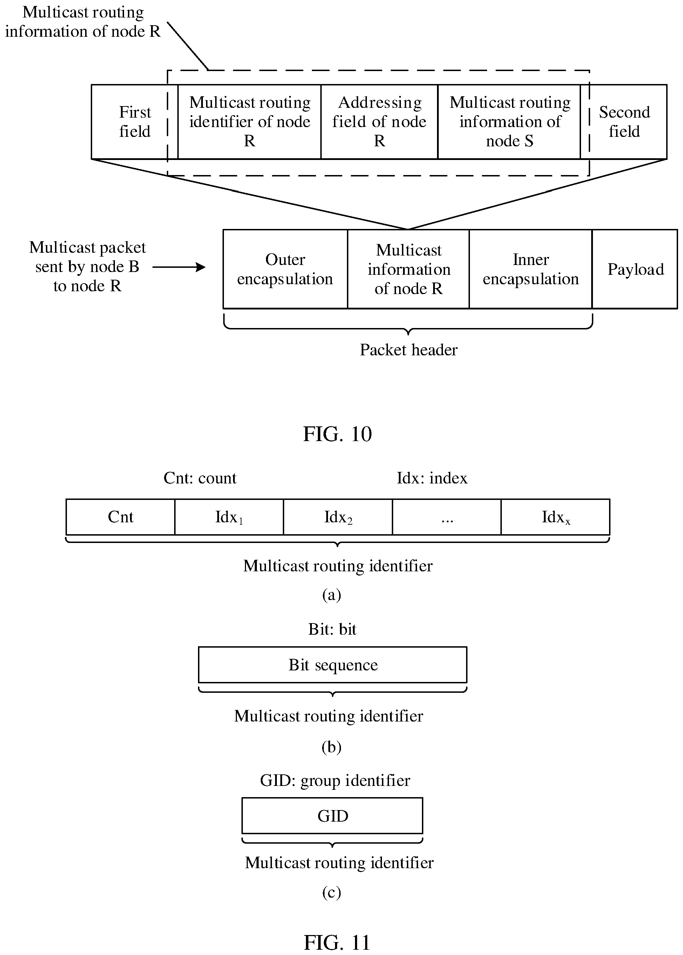

Optionally, multicast routing information of a node further includes an addressing field of the node. An addressing field of a node is used by the node to determine a position of multicast routing information of a non-leaf subnode of the node. The position may be a position of the multicast routing information of the non-leaf subnode of the node in the multicast routing information or multicast information of the node, or may be a position in the multicast packet. For example, referring to FIG. 9, the multicast routing information of the second node includes an addressing field of the second node, the multicast routing information of node $2_0$ includes an addressing field of node $2_0$, and this rule also applies to other nodes. For example, referring to FIG. 10, multicast routing information of node R includes an addressing field of node R. It should be noted that, in addition to being indicated by using the addressing field, the position of the multicast routing information of the non-leaf subnode of the node may also be statically configured in the node. For example, if a quantity of subnodes of a node is fixed, and subnodes of these subnodes are all leaf nodes, multicast routing information of these subnodes includes only multicast routing identifiers of these subnodes, and lengths of the multicast routing identifiers are fixed. In this case, the node may statically maintain a length of the multicast routing information of these subnodes. In this case, the multicast routing information of the node may not include an addressing field of the node. Optionally, the multicast information of the second node further includes a first field, and the first field indicates a sum of one or more of a length of the first field of the second node, a length of the addressing field of the second node, a length of the multicast routing identifier of the second node, and a total length of multicast routing information of non-leaf subnodes of the second node, and the one or more lengths include the total length of the multicast routing information of the non-leaf subnodes of the second node. For example, the first field indicates a length of the multicast routing information of the second node, or a length of the multicast information of the second node, or the total length of the multicast routing information of the non-leaf subnodes in the multicast routing information of the second node. These lengths may be represented by bits, bytes, or the like. The first field may further include a reserved field for subsequent function extension. The first field may be a field of a fixed length, for example, one byte (that is, eight bits). For example, referring to FIG. 9, the multicast information of the second node further includes the first field. For example, referring to FIG. 10, if the second node is node R, multicast information of node R further includes a first field.

Optionally, the multicast information of the second node further includes a second field, and the second field is used to align bytes of the multicast information of the second node. The second field may also be referred to as a padding (padding) field. For example, referring to FIG. 9, the multicast information of the second node further includes the second field. For example, referring to FIG. 10, if the second node is node R, the multicast information of node R further includes a second field. It should be noted that byte alignment may be single-byte alignment. In this case, presence of the second field makes a quantity of bits of the entire multicast information exactly dividable by 8. Alternatively, byte alignment may be 4-byte alignment. In this case, presence of the second field makes the quantity of bits of the entire multicast information be an integer 32. Alternatively, byte alignment may be 8-byte alignment. In this case, presence of the second field makes the quantity of bits of the entire multicast information be an integer 64. A specific length of the second field may be determined based on a quantity of bytes that need to be aligned. It may be understood that, if there is no second field, the multicast routing information of the second node is already byte-aligned, and the second field is not required. For ease of description, in the following description of this application, an example in which byte alignment is single-byte alignment is used to describe the method provided in this embodiment of this application.

The first field and the second field may be added by the first node to the first multicast packet. For example, in a process of the following step (14), the first field and the second field are added to the first multicast packet.

The multicast information of the second node may be carried in the packet header of the first multicast packet. The multicast information of the node may be considered as multicast encapsulation in the packet header of the multicast packet. Referring to FIG. 9 or FIG. 10, a packet header of a multicast packet in this application may further include outer encapsulation (Outer-header) and/or inner encapsulation (Inner-header) and a payload in addition to multicast encapsulation. Outer encapsulation refers to outer encapsulation in contrast to multicast encapsulation, and may be unicast encapsulation. Inner encapsulation refers to inner encapsulation in contrast to multicast encapsulation, and may be transport layer (transmission control protocol (transmission control protocol, TCP), user datagram protocol (user datagram protocol, UDP), or the like) encapsulation or any other possible encapsulation form.

Data in the multicast packet for multicast information is information that actually needs to be sent to a leaf node.

During specific implementation, step 601 may be implemented in the following manner 11, manner 12, or manner 13.

Manner 11: The first node receives a second multicast packet, and obtains the first multicast packet based on the received second multicast packet.

In specific implementation, manner 11 may include the following steps:

(11) The first node receives the second multicast packet, where the second multicast packet includes multicast routing information of the first node, and the multicast routing information of the first node includes a multicast routing identifier of the first node and multicast routing information of a non-leaf subnode of the first node.

(12) The first node determines that the second node is a non-leaf subnode of the first node.

(13) The first node obtains the multicast routing information of the second node based on the multicast routing information of the first node.

(14) The first node performs packet encapsulation based on the multicast routing information of the second node to obtain the first multicast packet.

In step (11), if the first node is not a source node of the multicast tree, the first node may receive the second multicast packet sent by another node in the multicast tree.

In specific implementation of step (12), in a possible implementation, a non-leaf subnode of a node may be configured in the node. In this case, the first node may determine, based on the configuration, whether the second node is a non-leaf subnode of the first node. In another implementation, a non-leaf subnode and/or a leaf subnode of a node may be configured in the node. The first node determines, based on the multicast routing identifier of the first node, whether the second node is a subnode of the first node, and if yes, determines, based on configured information about whether the second node is a leaf node, whether the second node is a non-leaf subnode of the first node.

In specific implementation, step (13) may include the following steps:

(13-1) The first node determines a position of the multicast routing information of the second node based on an addressing field in the multicast routing information of the first node. For specific implementation of step (13-1), refer to the following related description of the addressing field. Details are not described herein again.

(13-2) The first node obtains the multicast routing information of the second node based on the position of the multicast routing information of the second node.

Manner 12: The first node generates the first multicast packet, where the first node is a source node of the multicast tree.

Manner 13: The first node generates a second multicast packet, and obtains the first multicast packet based on the second multicast packet. The second multicast packet includes multicast routing information of the first node.

In specific implementation, manner 13 may include: the first node generates the second multicast packet; the first node determines that the second node is a non-leaf subnode of the first node; the first node obtains the multicast routing information of the second node based on the multicast routing information of the first node; and the first node performs packet encapsulation based on the multicast routing information of the second node to obtain the first multicast packet. For an implementation process of steps same as the steps in manner 11 in specific implementation of manner 13, refer to manner 11. Details are not described again.

602. The first node sends the first multicast packet to the second node. Correspondingly, the second node receives the first multicast packet from the first node.

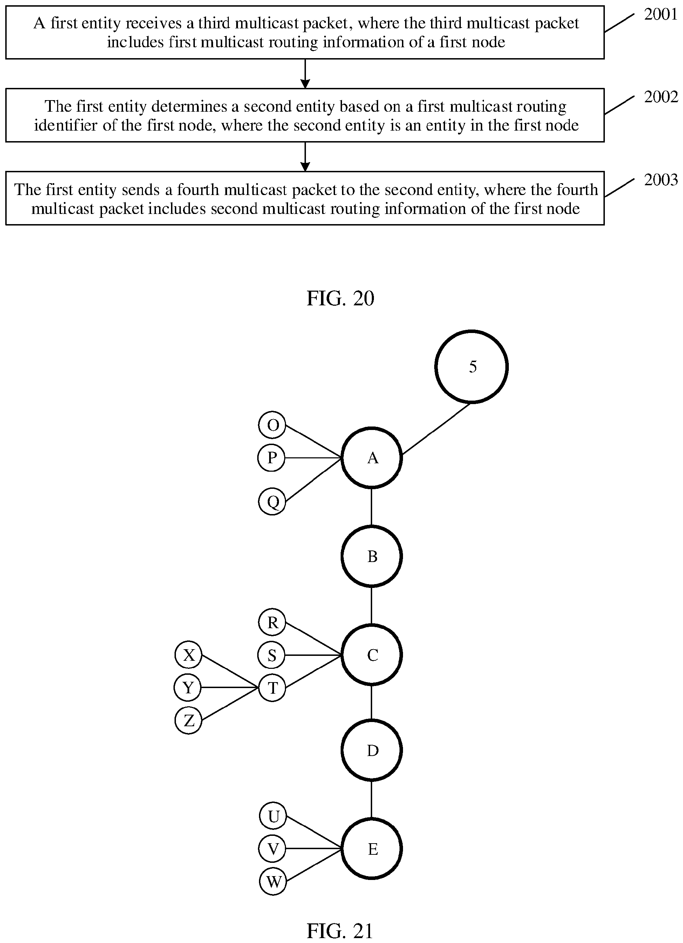

The first multicast packet is a multicast packet sent by an entity in the first node to an entity in the second node. For processing of a multicast packet between entities included in a node, refer to the embodiment shown in FIG. 20.

Optionally, a destination address in unicast encapsulation of the first multicast packet is an address of the second node. Specifically, the first multicast packet may be an IP packet. In this case, the destination address in the first multicast packet is the address of the second node. The first multicast packet further includes data, and the multicast information of the second node in the first multicast packet is located between the IP header and the data of the first multicast packet. The unicast encapsulation may include an indication field. The indication field indicates whether unicast-encapsulated information in the multicast packet includes the multicast information. After receiving the multicast packet, the node or the entity may determine, based on the indication field, whether the unicast-encapsulated information in the multicast packet includes the multicast information. For example, if the unicast encapsulation is IPv4 encapsulation, a "protocol (protocol)" field in an IPv4 header may indicate whether the unicast-encapsulated information in the multicast packet includes the multicast information. If the unicast encapsulation is IPv6 encapsulation, a "next header (Next Header)" field in an IPv6 header may indicate whether the unicast-encapsulated information in the multicast packet includes the multicast information.

It should be noted that, in this embodiment of this application, a source address in unicast encapsulation of a multicast packet sent by a node (for example, node a) to another node (for example, node b) may be an address of node a, or may be an address of a source node in the multicast tree. For example, based on the example shown in FIG. 2, a source address in unicast encapsulation of a multicast packet sent by node R to node S may be an address of node R, or may be an address of node B. A source address in unicast encapsulation of a multicast packet sent by node S to node D may be an address of node S, or may be an address of node B.

It should be noted that, when the multicast packet in this application does not include unicast encapsulation, the node may determine a next-hop node of the multicast packet by using a multicast routing identifier in the multicast packet. For example, a node receives a multicast packet. When a multicast routing identifier of the node is a bit sequence in the following description, a node corresponding to a bit whose value is 1 in the multicast routing identifier is a next-hop node of the multicast packet, that is, a subnode of the node is the next-hop node of the multicast packet. In the method provided in this embodiment of this application, multicast routing information is embedded in the multicast packet, multicast routing information of a tree recursive structure included in the multicast packet can describe packet forwarding information of the multicast tree or a subtree of the multicast tree. Therefore, scalability is good, and a forwarding path can be conveniently planned and specified based on a requirement.

The multicast routing identifier of the node mentioned in the foregoing embodiment may be implemented in the following manner 21, manner 22, or manner 23.

Manner 21: A multicast routing identifier of a node includes subnode quantity information of the node and an identifier of each subnode of the node.

In manner 21, optionally, a multicast routing identifier of a node includes a third field and X fourth fields, the third field indicates a quantity X of subnodes of the node, and one fourth field indicates an identifier of one subnode of the node. For example, an identifier (ID) of the node may be an index of the node, an IP address of the node, or another identifier of the node. For example, the identifier of the node is the index of the node. Referring to (a) in FIG. 11, the third field is denoted as Cnt (that is, an abbreviation of Count) and indicates a quantity, and the fourth field is denoted as Idx (that is, an abbreviation of Index) and indicates an index. $Idx_i$ is an index of the $i^{th}$ subnode of the node, Idxi to $Idx_x$ form an Idx sequence, and i is an integer greater than 0 and less than or equal to X.

In manner 21, nodes in a first node set corresponding to a node may have consecutive numbers, for example, 0, 1, 2, and so on. An index of a node may be a number of the node. A node may determine, by using node indexes carried in a multicast routing identifier of the node in a received multicast packet, nodes to which the multicast packet needs to be sent (that is, determine which nodes are subnodes of the node). In actual implementation, numbers of nodes in a first node set corresponding to a node may alternatively be consecutive values starting from another value (for example, 1) (that is, indexes of nodes in the first node set corresponding to the node are 1, 2, 3, ...), or may be discrete values. This is not limited in this application. When a node in a first node set corresponding to a node is numbered from

$$W = \lceil \log_2 N \rceil$$

0, a bit width of the fourth field is ⎯⎯⎯⎯, where N is a quantity of nodes in the first node set corresponding to the node. The bit width of the fourth field may alternatively be a fixed bit width, for example, 1 byte.

In manner 21, when a value of the third field is a natural number, a bit width of the third field may be

$$\lceil \log_2 (N+1) \rceil$$

. When the value of the third field is N-1 (that is, when the value of the third field is 0, it indicates that N is 1, or when the value of the third field is 1, it indicates that N is 2, and so on), the bit width of the third field may be

$$\lceil \log_2 N \rceil$$

. Alternatively, the third field may be a fixed bit width, for example, 1 byte. In this case, a maximum length of the fourth field is fixed.

In manner 21, the third field may also be referred to as a Cnt field or a Count field. The fourth field may also be referred to as an Idx field or an Index field. In the following description, the third field in manner 21 is referred to as a Cnt field, and the fourth field is referred to as an Idx field.

For example, based on the example shown in FIG. 2, it is assumed that a first node set corresponding to node R includes node B, node A, node S, and node E, and that numbers of the four nodes are 0, 1, 2, and 3 respectively. In the multicast tree shown on the right side of FIG. 2, node S and node E are subnodes of node R. If the value of the third field is N-1, both the third field and the fourth field may be two bits. Because node R has two subnodes, there are two fourth fields, that is, the multicast routing identifier of node R has six bits. Because there are four nodes in the first node set (that is, N = 4), the value of the third field may be 11. If a value of the first fourth field in the two fourth fields is 10, it indicates that a node numbered 2 (that is, node S) is a subnode of node R. If a value of the second fourth field is 11, it indicates that a node numbered 3 (that is, node E) is a subnode of node R. In this case, the multicast routing identifier of node R may be 111011.

In manner 21, each node may store a multicast forwarding table (which may also be referred to as a multicast routing table, a routing forwarding table, or another name). The multicast forwarding table includes a correspondence between a node index in a first node set corresponding to the node and next-hop (nexthop) information (for example, an outbound interface to a next hop and a next-hop address). A node may determine a node index based on an Idx field in the multicast routing identifier, and then look up the multicast forwarding table for the next-hop information and forward the multicast packet to the next hop. For example, based on the example shown in FIG. 2, for a multicast forwarding table of node R, refer to Table 1.

**Table 1: Multicast forwarding table of node R**

| Node index | Next-hop address |
|---|---|
| 0 | Address of node B |
| 1 | Address of node A |
| 2 | Address of node S |
| 3 | Address of node E |

Manner 22: A multicast routing identifier of a node includes N third fields, where N is a quantity of nodes in a first node set corresponding to the node, and one third field indicates whether a node in the first node set is a subnode of the node in the multicast tree.

In manner 22, one third field may be one bit, that is, a multicast routing identifier of one node (assumed to be node 1) includes N bits. Referring to (b) in FIG. 11, the N bits form one bit sequence (bit sequence), the N bits are in a one-to-one correspondence with nodes in a first node set corresponding to node 1, and one bit indicates whether a node that is in the first node set and that corresponds to the bit is a subnode of node 1. Specifically, when a value of a bit is 1 (or may be 0), the bit indicates that a node that is in the first node set and that corresponds to the bit is a subnode of node 1. For ease of description, the method provided in this application is hereinafter described by using an example in which when a value of a bit is 1, it indicates that a node corresponding to the bit is a subnode of another node. The multicast routing identifier in manner 22 is hereinafter referred to as a bit sequence.

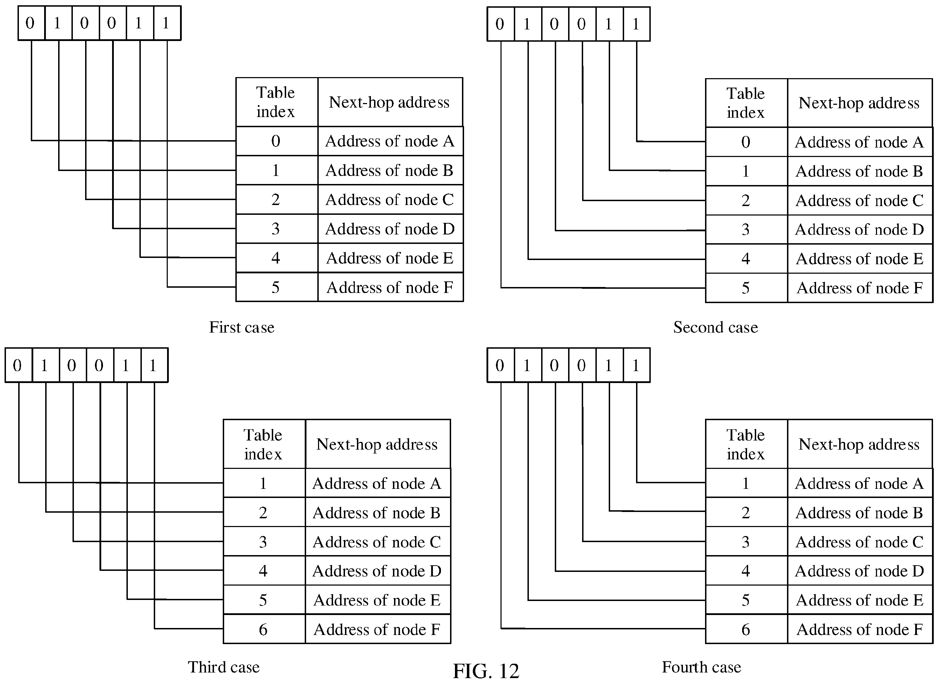

In manner 22, each node may store a multicast forwarding table. The multicast forwarding table includes a correspondence between a bit in a bit sequence and next-hop information (for example, an outbound interface to a next hop and an address of the next hop). A node may determine next-hop information based on a position of a bit in the bit sequence in the multicast forwarding table, and forward the multicast packet to the next hop. The correspondence between a bit in the bit sequence and next-hop information may include four cases. In the first case, a leftmost (leftmost) bit in the bit sequence is the first bit, and bits from left to right are sequentially the first bit, the second bit, the third bit, ..., and the $j^{th}$ bit in the bit sequence corresponds to an entry whose index is j-1. In the second case, a rightmost bit in the bit sequence is the first bit, and bits from right to left are sequentially the first bit, the second bit, the third bit, ..., and the $j^{th}$ bit in the bit sequence corresponds to an entry whose index is j-1. In the third case, a leftmost bit in the bit sequence is the first bit, and bits from left to right are sequentially the first bit, the second bit, the third bit, ..., and the $j^{th}$ bit in the bit sequence corresponds to an entry whose index is j. In the fourth case, a rightmost bit in the bit sequence is the first bit, and bits from right to left are sequentially the first bit, the second bit, the third bit, ...,and the $j^{th}$ bit in the bit sequence corresponds to an entry whose index is j. j is an integer greater than 0. For example, a bit sequence 010011 is used as an example. Six bits correspond to node A to node F. For a correspondence between a bit in the bit sequence and a next-hop address, refer to FIG. 12. In the following description of this application, unless otherwise specified, it is considered that the leftmost bit in the bit sequence is the first bit, and that the bits from left to right are sequentially the first bit, the second bit, the third bit, .... It should be noted that, in addition to the foregoing four cases, indexes of the entries in the multicast forwarding table may be consecutive values or discrete values starting from another value (for example, 2, 3, or 4). This is not limited in this application.

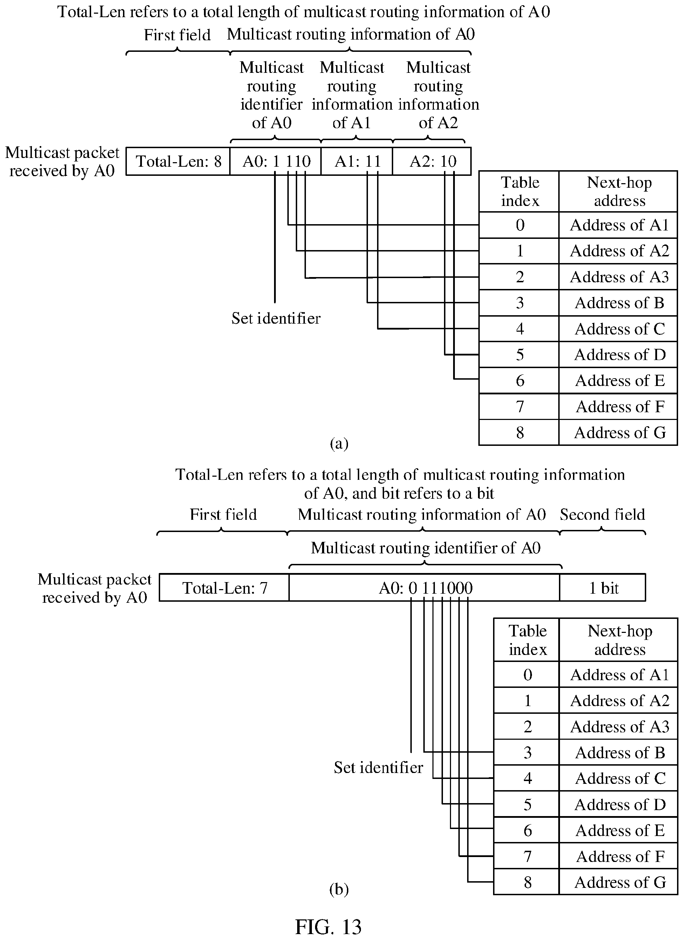

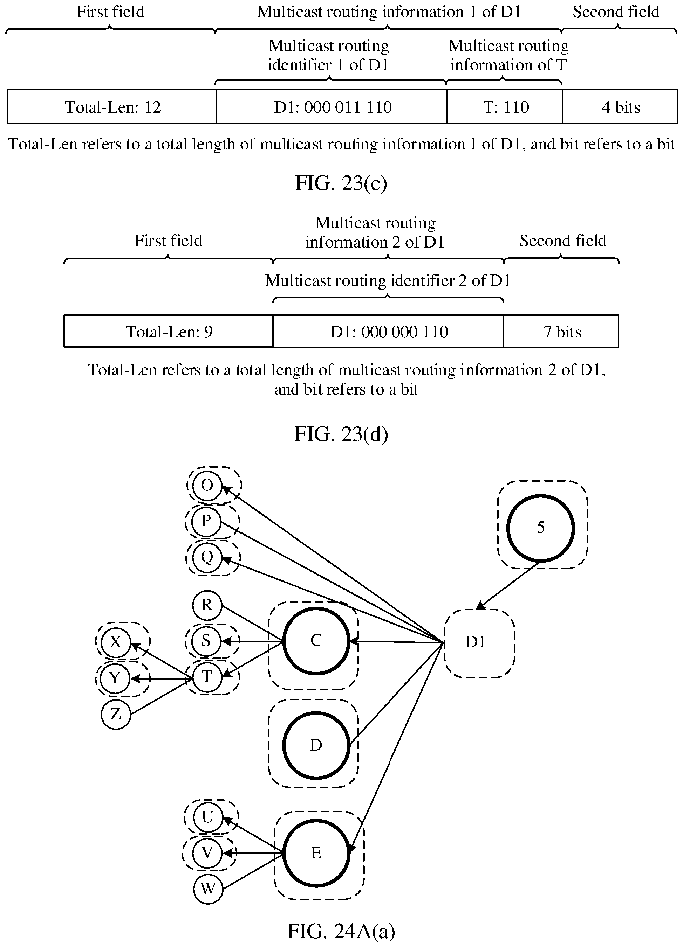

It should be noted that correspondences between bit sequences of different nodes and next-hop information may be different entries in a same table. In this case, indexes of entries corresponding to bit sequences of some nodes do not start from 0 or 1. For example, entries corresponding to a bit sequence of node A1 in (a) in FIG. 13 are entries whose indexes are 3 and 4. Correspondences between bit sequences of different nodes and next-hop information may alternatively be in different tables.

For example (denoted as example 1), based on the network topology diagram of entities shown in FIG. 2, it is assumed that a first node set corresponding to node R includes node B, node A, node S, and node E, and that the four nodes correspond to the first, second, third, and fourth bits in the four bits. In the multicast tree shown on the right side of FIG. 2, node S and node E are subnodes of node R. Assuming that a node corresponding to a bit whose value is 1 in the first node set is a subnode of node R, the multicast routing identifier of node R may be 0011.

For example, based on the example shown in FIG. 3A, node A0 needs to send a multicast packet to node B, node C, and node D. A node set corresponding to node A0 includes {node A1, node A2, node A3} and {node B, node C, node D, node E, node F, node G}. In a multicast routing identifier of node A0, a first node set corresponding to node A0 may be indicated by using a bit. If a value of the bit is 0, it indicates that the first node set corresponding to node A0 is {node B, node C, node D, node E, node F, node G}. If a value of the bit is 1, it indicates that the first node set corresponding to node A0 is {node A1, node A2, node A3}. A first node set corresponding to node A1 is {node B, node C}, a first node set corresponding to node A2 is {node D, node E}, and a first node set corresponding to node A3 is {node F, node G}. Bits in the multicast routing identifier of node A0 are in a one-to-one correspondence with nodes in the first node set corresponding to node A0. When a bit corresponding to a node in the first node set corresponding to node A0 is 1, it indicates that the node is a subnode of node A0, and this rule also applies to other nodes. Node A0 statically maintains lengths of multicast routing information of node A1 and node A2. In this case, the addressing field is null.

If multicast routing information of node A0 in a multicast packet (denoted as multicast packet A) received by node A0 and a correspondence between a bit in a bit sequence and a next-hop address are (a) in FIG. 13, the multicast routing identifier of node A0 indicates that the first node set corresponding to node A0 is {node A1, node A2, node A3}. In addition, node A0 needs to send a multicast packet to node A1 and node A2. The multicast routing information of node A1 indicates that node A1 needs to send a multicast packet to node B and node C. The multicast routing information of node A2 indicates that node A2 needs to send a multicast packet to node D. In this case, a process in which each node in FIG. 3A sends a multicast packet is as follows:

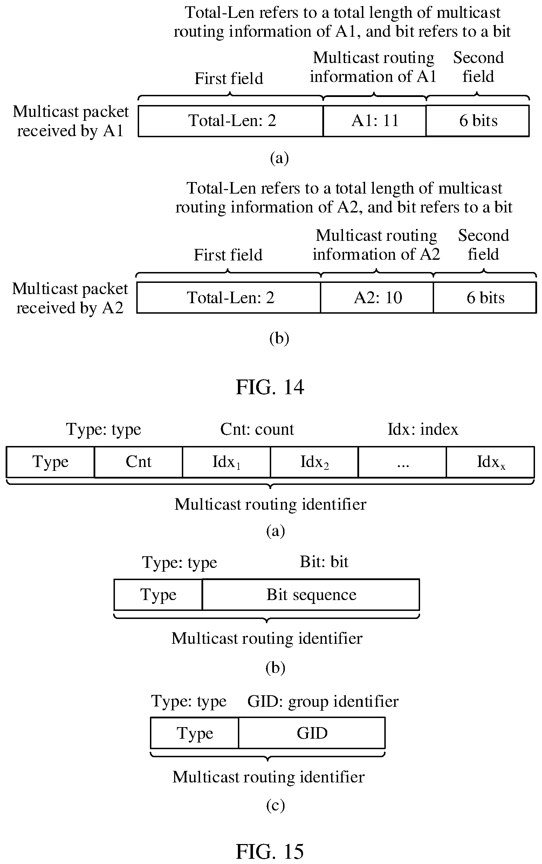

(21) Node A0 parses received multicast packet A, obtains multicast routing information of node A0, and parses a set identifier (that is, the first bit) in a multicast routing identifier of node A0. A parsing result is 1, indicating that a first node set corresponding to node A0 is {node A1, node A2, node A3}. In this case, the multicast routing identifier of node A0 further includes three bits subsequently, and node A0 continues to parse the three bits to obtain a bit sequence 110.
(22) Node A0 traverses the bit sequence 110, finds a first non-zero bit, and looks up a multicast forwarding table based on a position of the bit, to learn that multicast packet B needs to be sent to node A1. For a structure of multicast packet B to be sent to node A1, refer to (a) in FIG. 14.
(23) Node A0 continues to traverse the bit sequence 110, finds a second non-zero bit, and looks up the multicast forwarding table based on a position of the bit, to learn that multicast packet C needs to be sent to node A2. For a structure of multicast packet C to be sent to node A2, refer to (b) in FIG. 14.
(24) Node A0 continues to traverse the bit sequence 110, and finds that there is no other non-zero bit, and no longer sends a multicast packet.
(25) Node A1 receives multicast packet B, parses multicast routing identifier 11 of node A1, and sends unicast packet D to node B and node C. Because node B and node C are leaf nodes in the multicast tree, the packet sent to node B and node C is a unicast packet instead of a multicast packet.
(26) Node A2 receives multicast packet C, parses multicast routing identifier 10 of node A2, and sends unicast packet E to node D. Because node D is a leaf node in the multicast tree, the packet sent to node D is a unicast packet instead of a multicast packet.

If multicast routing information of node A0 in a multicast packet (denoted as multicast packet A) received by node A0 and a correspondence between a bit in a bit sequence and a next-hop address are (b) in FIG. 13, the multicast routing identifier of node A0 indicates that the first node set corresponding to node A0 is {node B, node C, node D, node E, node F, node G}. In addition, node A0 needs to send a multicast packet to node B, node C, and node D. In this case, a process in which each node in FIG. 3A sends a multicast packet is as follows:

(31) Node A0 parses received multicast packet A, obtains multicast routing information of node A0, and parses a set identifier (that is, the first bit) in a multicast routing identifier of node A0. A parsing result is 0, indicating that a first node set corresponding to node A0 is {node B, node C, node D, node E, node F, node G}. In this case, the multicast routing identifier of node A0 further includes six bits subsequently, and node A0 continues to parse the six bits to obtain a bit sequence 111000.
(32) Node A0 traverses the bit sequence 111000, finds non-zero bits, and looks up a multicast forwarding table based on positions of these bits, to learn that a packet needs to be sent to node B, node C, and node D. Because node B, node C, and node D are leaf nodes, node A0 sends a unicast packet to node B, node C, and node D. In unicast encapsulation of a unicast packet sent to node B, a source address is an address of node A0, and a destination address is an address of node B. In unicast encapsulation of a unicast packet sent to node C, a source address is an address of node A0, and a destination address is an address of node C. In unicast encapsulation of a unicast packet sent to node D, a source address is an address of node A0, and a destination address is an address of node D.

Manner 23: A multicast routing identifier of a node includes a third field, the third field includes a first group identifier, the first group identifier indicates a first node group corresponding to the node, and all nodes in the first node group corresponding to the node are subnodes of the node. The first node group corresponding to the node is a subset of a first node set corresponding to the node. Nodes in the first node set corresponding to the node may form at least one node group. One node in the first node set may be located in one node group, or may be located in a plurality of node groups. Which nodes form one node group may be preconfigured. One node group corresponds to one group identifier (Group ID, GID for short). In this case, referring to (c) in FIG. 11, the multicast routing identifier is a GID. A node may determine, by using a GID in a multicast routing identifier of the node in a received multicast packet, nodes in a node group corresponding to the GID, and send the multicast packet to these nodes.

For example (denoted as example 2), based on the example shown in FIG. 2, it is assumed that a first node set corresponding to node R includes node B, node A, node S, and node E. The four nodes may form three node groups. The first node group includes node A and node B. The second node group includes node S and node E. The third node group includes node B, node A, node S, and node E. An identifier of the first node group is identifier 1, an identifier of the second node group is identifier 2, and an identifier of the third node group is identifier 3. In the multicast tree shown on the right side of FIG. 2, node S and node E are subnodes of node R. In this case, the multicast routing identifier of node R may be identifier 2.

Similarly to manner 21 and manner 22, in manner 23, each node may also store a multicast forwarding table, and the multicast forwarding table includes a correspondence between a group identifier of a node group and next-hop information (for example, an outbound interface to a next hop and an address of the next hop). The next hop herein is a node in the node group corresponding to the group identifier. In this case, a node may determine, based on the multicast routing identifier and the correspondence in the multicast forwarding table, to which nodes a multicast packet is to be forwarded. Based on example 1, for an example of the multicast forwarding table of node R, refer to Table 2.

**Table 2: Multicast forwarding table of node R**

| Group identifier | Next-hop address |
| --- | --- |
| Identifier 1 | Address of node B |
| | Address of node A |
| Identifier 2 | Address of node S |
| | Address of node E |
| Identifier 3 | Address of node B |
| | Address of node A |
| | Address of node S |
| | Address of node E |

It may be understood that the multicast routing identifiers in the foregoing manner 21, manner 22, and manner 23 may be converted mutually. For example, the GID in manner 23 may be converted into the bit sequence in manner 22 or the multicast routing identifier in manner 21. For example, the multicast routing identifier (that is, identifier 2) of node R in the foregoing example 2 may be converted into the multicast routing identifier (that is, 0011) of node R in the foregoing example 1.

The multicast routing identifiers in the foregoing manner 21, manner 22, and manner 23 may be respectively referred to as a first-type multicast routing identifier, a second-type multicast routing identifier, and a third-type multicast routing identifier. A length of a multicast routing identifier of one node in the foregoing manner 21, manner 22, and manner 23 may be statically maintained in the node. A node (for example, a source node) that generates the first multicast packet in the multicast tree or a controller may maintain lengths of multicast routing identifiers of all nodes in the multicast tree.

In the foregoing manner 21, in a multicast scenario in which density of nodes in the multicast tree is extremely low, encapsulation efficiency of the multicast packet is optimal. In the foregoing manner 22, in a multicast scenario in which density of nodes in the multicast tree is high, encapsulation efficiency is optimal. In the foregoing manner 23, in a multicast scenario in which density of nodes in the multicast tree is highest, encapsulation efficiency is optimal.

Optionally, a multicast routing identifier of a node further includes a type field, and the type field indicates a type of the multicast routing identifier of the node. The types of multicast routing identifiers include the first-type multicast routing identifier, the second-type multicast routing identifier, and the third-type multicast routing identifier. In this case, the node that receives the multicast packet may determine, based on the type of the multicast routing identifier, how to identify the multicast routing identifier. For example, when the multicast routing identifier further includes the type field, for the multicast routing identifiers in manner 21, manner 22, and manner 23, refer to (a) in FIG. 15, (b) in FIG. 15, and (c) in FIG. 15. The type field is marked as Type in (a) FIG. 15, (b) in FIG. 15, and (c) in FIG. 15.

In actual implementation, a unique type of multicast routing identifier may be used (in this case, the type field is not required), or a type of multicast routing identifier to be used may be indicated by using the type field. In addition, it should be noted that the type field may be considered as a part of the multicast routing identifier, or may be considered as a field independent of the multicast routing identifier. This is not limited in this application. In a multicast packet, types of multicast routing identifiers of different nodes may be the same or may be different. This is not limited in this application.

Optionally, a multicast routing identifier of a node further includes a multicast routing identifier length field and/or a node type field. The multicast routing identifier length field indicates a length of the multicast routing identifier. The node type field indicates a node type. Node types include a single-entity node and a multi-entity node. The single-entity node means that the node includes one entity, and the multi-entity node means that the node includes a plurality of entities. Similar to the type field, the multicast routing identifier length field and/or the node type field may be considered as a part of the multicast routing identifier, or may be considered as a field independent of the multicast routing identifier. This is not limited in this application.

The type field, the multicast routing identifier length field, and the node type field may be collectively referred to as a description field or a dscr field. These fields may have other names. This is not limited in this application.

The addressing field mentioned in the foregoing embodiment may be implemented in the following manner 31, manner 32, or manner 33.

Manner 31: An addressing field of a node indicates a length of multicast routing information of a non-leaf subnode of the node.

It is assumed that the node is node 1, and that there are M non-leaf subnodes of node 1. An addressing field of node 1 may include M-1 or M fields (the field is denoted as a fifth field), one fifth field indicates a length of multicast routing information of a non-leaf subnode of node 1 (the length is denoted as Y), and a bit width of the fifth field may be

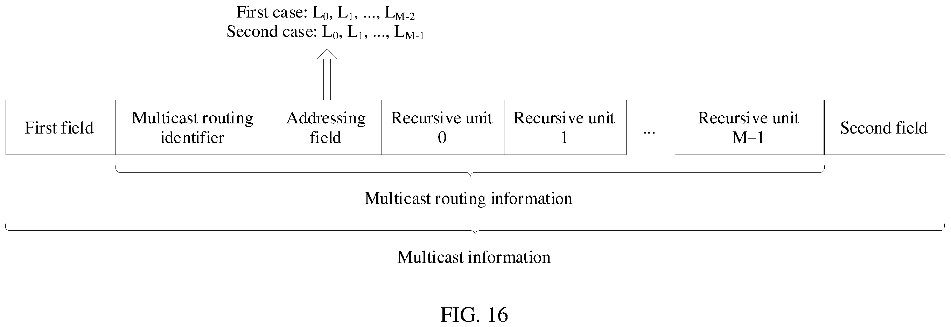

$\lceil \log_2 Y \rceil$ (in this case, the length indicated by the fifth field is a sum of a value of the fifth field and 1), or $\lceil \log_2 (Y+1) \rceil$ (in this case, the length indicated by the fifth field is the value of the fifth field), or a fixed bit width (for example, 1 byte or 2 bytes). For multicast information of node 1, refer to FIG. 16. Recursive unit m represents the $(m+1)^{th}$ recursive unit of node 1 (that is, multicast routing information of the $(m+1)^{th}$ non-leaf subnode of node 1). A length of recursive unit m (that is, the length of the multicast routing information of the $(m+1)^{th}$ non-leaf subnode of node 1) may be denoted as $L_m$, where m is an integer greater than or equal to 0 and less than M.

In the first case, the addressing field of node 1 may indicate lengths of M-1 recursive units of node 1. The M-1 recursive units may be any M-1 recursive units among the M recursive units. In this case, another recursive unit among the M recursive units may be obtained through calculation based on a length indicated by the first field. For example, referring to FIG. 16, the M-1 recursive units are recursive unit 0 to recursive unit M-2, that is, the addressing field of node 1 indicates $L_0$, $L_1$, ..., $LM_{-M-2}$. In this case, if the first field indicates the length (denoted as total length 1) of the multicast routing information of node 1, Length of recursive unit M-1 = Total length 1 - ($L_0$ + $L_1$ + ... + $LM_{-M-2}$) - Length of the multicast routing identifier - Length of the addressing field. If the first field indicates a total length (denoted as total length 2) of the M recursive units, Length of recursive unit M-1 = Total length 2 - ($L_0$ + $L_1$ + ... + $LM_{-M-2}$).

In the second case, referring to FIG. 16, the addressing field of node 1 may indicate lengths of M recursive units of node 1, that is, the addressing field of node 1 indicates $L_0$, $L_1$, ..., $LM_{-M-1}$.

In manner 31, node 1 may determine a start position of recursive unit 0 based on the first field, the multicast routing identifier, and the length of the addressing field, and then determine a start position and/or an end position of each recursive unit based on the length of each recursive unit. The position mentioned in this application may be an offset relative to a start position of the multicast information, or may be an offset relative to another position in the multicast packet. For example, based on the example shown in FIG. 16, for example, the addressing field of node 1 indicates lengths of M recursive units of node 1, the first field indicates total length 1, and the start position of the recursive unit is an offset relative to the start position of the multicast information. A start position of recursive unit m is denoted as $offset_m$. For start positions of the recursive units, refer to Table 3.

Table 3

| Recursive unit | Start position of the recursive unit |
|---|---|
| Recursive unit 0 | $Offset_0$ = Length of the first field + Length of the multicast routing identifier + M * Length of the fifth field |
| Recursive unit 1 | $Offset_1 = Offset_0 + L_0$ |
| ... | ... |
| Recursive unit M-1 | $OffsetM_{-M-1} = OffsetM_{-M-2} + LM_{-M-2}$ |

Manner 32: An addressing field of a node indicates a start position or an end position of multicast routing information of a non-leaf subnode of the node.

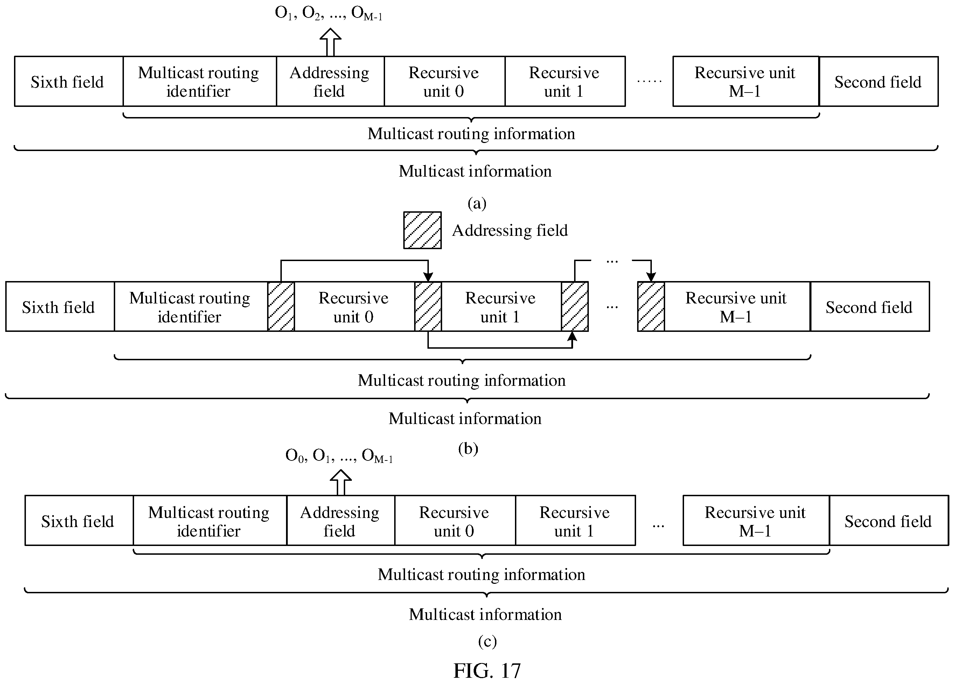

It is assumed that the node is node 1, and that there are M non-leaf subnodes of node 1. An addressing field of node 1 may include M-1 or M fields (the field is denoted as a fifth field), and one fifth field indicates a start position or an end position of multicast routing information of a non-leaf subnode of node 1. The fifth field may be several fixed bits (for example, four bits) or several fixed bytes (for example, one byte). For ease of description, the following describes manner 32 by using an example in which the fifth field indicates the start position. A principle when the fifth field indicates the end position is similar, and may be understood with reference. For the multicast information of node 1, refer to (a) in FIG. 17, (b) in FIG. 17, or (c) in FIG. 17. The start position of recursive unit m (that is, a start position of the multicast routing information of the $(m+1)^{th}$ non-leaf subnode of node 1) may be denoted as $O_m$. In manner 32, the length of recursive unit M-1 may be obtained through calculation by using the length indicated by the first field. A calculation method is similar to that in manner 31, and may be understood with reference. Details are not described again. Alternatively, the length of recursive unit M-1 may be explicitly indicated by a field (denoted as a sixth field). In this case, the first field may or may not exist. If the first field does not exist, the sixth field may be located at a position of the first field, or may be located at another position. This is not limited in this application. For ease of description, in the following description, it is assumed that the first field does not exist when the sixth field exists, and that the sixth field is located at the position of the first field.

Manner 32 may be implemented in the following manner a or manner b.

Manner a: The addressing field of node 1 indicates start positions of M-1 recursive units of node 1.

In manner a, the M-1 recursive units may be recursive unit 1 to recursive unit M-1, that is, the addressing field of node 1 indicates $O_1$, $O_2$, ..., $OM_{M-1}$. In a first possible implementation of manner a, referring to (a) in FIG. 17, the addressing field of node 1 indicates $O_1$, $O_2$, ..., $OM_{M-1}$. In a second possible implementation of manner a, referring to (b) in FIG. 17, there is a fifth field at a position before and adjacent to each recursive unit, and the fifth field indicates a start position of a next recursive unit.

In manner a, node 1 may determine a start position of recursive unit 0 based on lengths of the first field (or the sixth field), the multicast routing identifier, and the addressing field, determine start positions of recursive unit 1 to recursive unit M-1 and lengths of recursive unit 0 to recursive unit M-2 based on the addressing field, and then determine the length of recursive unit M-1 based on the first field (or the sixth field). The position mentioned in this application is similar to that in manner 31, and may be understood with reference. Details are not described again. For example, based on the example shown in (b) in FIG. 17, for example, the length of recursive unit M-1 is determined based on the sixth field. For the start position and the length of each recursive unit, refer to Table 4.

**Table 4**

| Recursive unit | Start position of the recursive unit | Length of the recursive unit |
|---|---|---|
| Recursive unit 0 | $O_0$ = Length of the sixth field + Length of the multicast routing identifier + Length of the fifth field | $O_1$ - $O_0$ - Length of the fifth field |
| Recursive unit 1 | $O_1$ | $O_2$ - $O_1$ - Length of the fifth field |
| ... | ... | ... |
| Recursive unit M-1 | $OM_{M-1}$ | Indication of the sixth field |

Manner b: The addressing field of node 1 indicates start positions of M recursive units of node 1. In manner b, the addressing field of node 1 indicates $O_0$, $O_1$, ..., $OM_{M-1}$. In this case, node 1 may determine start positions of recursive unit 0 to recursive unit M-1 and lengths of recursive unit 0 to recursive unit M-2 based on the addressing field, and then determine the length of recursive unit M-1 based on the first field or the sixth field. The position mentioned in this application is similar to that in manner 31, and may be understood with reference. Details are not described again. For example, based on the example shown in (c) in FIG. 17, for example, the length of recursive unit M-1 is determined based on the sixth field. For the start position and the length of each recursive unit, refer to Table 5.

**Table 5**

| Recursive unit | Start position of the recursive unit | Length of the recursive unit |
|---|---|---|
| Recursive unit 0 | $O_0$ | $O_1$ - $O_0$ |
| Recursive unit 1 | $O_1$ | $O_2$ - $O_1$ |
| ... | ... | ... |

(continued)

| Recursive unit | Start position of the recursive unit | Length of the recursive unit |
|---|---|---|
| Recursive unit M-1 | $OM_{M-1}$ | Indication of the sixth field |

Manner 33: An addressing field of a node includes a plurality of delimitation fields, and multicast routing information of a non-leaf subnode of the node is separated by the plurality of delimitation fields.

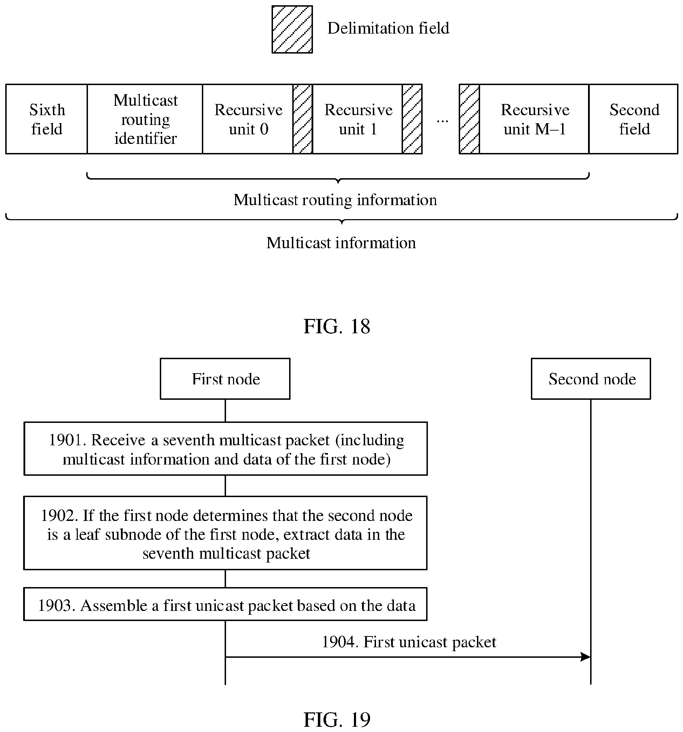

It is assumed that the node is node 1, and that there are M non-leaf subnodes of node 1. The addressing field of node 1 may include M-1 delimitation fields, and a length of the delimitation field may be preconfigured. For multicast information of node 1, refer to FIG. 18. A delimitation field may exist between every two recursive units. In this case, a length of recursive unit M-1 may be obtained through calculation by using a length indicated by the first field. A calculation method is similar to that in manner 31, and may be understood with reference. Details are not described again. Alternatively, the length of recursive unit M-1 may be explicitly indicated by a field (denoted as a sixth field). In this case, the first field may or may not exist. If the first field does not exist, the sixth field may be located at a position of the first field, or may be located at another position. This is not limited in this application. For ease of description, in the following description, it is assumed that the first field does not exist when the sixth field exists, and that the sixth field is located at the position of the first field.

In manner 33, node 1 may determine a start position of recursive unit 0 based on lengths of the first field (or the sixth field) and the multicast routing identifier, determine start positions of recursive unit 1 to recursive unit M-1 and lengths of recursive unit 0 to recursive unit M-2 based on the delimitation fields, and then determine the length of recursive unit M-1 based on the first field (or the sixth field). The position mentioned in this application is similar to that in manner 31, and may be understood with reference. Details are not described again. For example, based on the example shown in FIG. 18, for example, the start position of the recursive unit is an offset relative to the start position of the multicast information, and the length of recursive unit M-1 is determined based on the sixth field. The start position of recursive unit m is denoted as $offset_m$. For the start position and the length of each recursive unit, refer to Table 6.

Table 6

| Recursive unit | Start position of the recursive unit | Length of the recursive unit |
|---|---|---|
| Recursive unit 0 | $Offset_0$ = Length of the sixth field + Length of the multicast routing identifier | $Offset_1$ - $Offset_0$ - Length of the delimitation field |
| Recursive unit 1 | $Offset_1$ = First bit after the first delimitation field | $Offset_2$ - $offset_1$ - Length of the delimitation field |
| ... | ... | ... |
| Recursive unit M-1 | $OffsetM_{M-1}$ = First bit after the (M-1)th delimitation field | Indication of the sixth field |

In the foregoing embodiment, the method provided in this application is described by using an example in which the second node is a non-leaf subnode of the first node in the multicast tree. The second node may alternatively be a leaf subnode of the first node. In this case, the multicast packet sending method provided in this application may be implemented by using a method shown in FIG. 19. The method may specifically include the following steps.

1901. A first node receives a seventh multicast packet, where the seventh multicast packet includes multicast information and data of the first node.

For the description of the multicast information of the first node, refer to the foregoing description. Details are not described again. If the first node is not a source node of a multicast tree, the first node may receive the seventh multicast packet sent by another node in the multicast tree.

1902. If the first node determines that a second node is a leaf subnode of the first node, the first node extracts data in the seventh multicast packet.

For a process in which the first node determines whether a node is a leaf subnode of the first node, refer to related descriptions in step (12). Details are not described again. It may be understood that if the second node is a leaf node of the first node, the second node does not need to forward the multicast packet in multicast mode. Therefore, the first node may send data to the second node. In other words, the packet sent by the first node to the second node is a unicast packet.

1903. The first node assembles a first unicast packet based on the data.

1904. The first node sends the first unicast packet to the second node. Correspondingly, the second node receives the first unicast packet from the first node.

The methods provided in the foregoing embodiments are all described as examples of the method provided in this application from a perspective of a node. A node may include a plurality of entities. In this case, after receiving a multicast packet, an entity in a node may process the multicast packet by using a method shown in FIG. 20. The method is applied to a first entity, and the first entity belongs to a first node. The method specifically includes the following steps.

2001. The first entity receives a third multicast packet, where the third multicast packet includes first multicast routing information of the first node.

The first multicast routing information of the first node includes a first multicast routing identifier of the first node and multicast routing information of a non-leaf subnode corresponding to the first multicast routing identifier of the first node, and the first multicast routing identifier of the first node is the same as a multicast routing identifier of the first node or is obtained by updating a multicast routing identifier of the first node. For the description of the multicast routing information of the node, refer to the foregoing description. Details are not described again.

It can be learned from the foregoing function and description of the multicast routing identifier that, if the multicast routing identifier is a bit sequence, or a Cnt field plus an Idx field, a multicast routing identifier of a node has a bit or an Idx field corresponding to each subnode (including a non-leaf subnode and a leaf subnode). Because the first multicast routing identifier is derived from the multicast routing identifier, the non-leaf subnode corresponding to the first multicast routing identifier of the first node is a non-leaf subnode among subnodes corresponding to bits or Idx fields in the first multicast routing identifier.

The first entity is an entity in the first node. The first entity may receive the third multicast packet from another node other than the first node, or may receive the third multicast packet from another entity in the first node. This is not limited in this application. If the first entity receives the third multicast packet from another node other than the first node, the first multicast routing information of the first node is the same as multicast routing information of the first node. If the first entity receives the third multicast packet from another entity in the first node, the first multicast routing identifier of the first node may be the same as the multicast routing identifier of the first node, or may be obtained by updating the multicast routing identifier of the first node. The first multicast routing information may be obtained through calculation according to a method for processing a multicast packet between the first entity and a second entity. For a specific example, refer to the following description. Details are not described again.

2002. The first entity determines a second entity based on the first multicast routing identifier of the first node, where the second entity is an entity in the first node.

In specific implementation, step 2002 may include: the first entity looks up a multicast forwarding table based on the first multicast routing identifier of the first node, to obtain the second entity. It should be noted that the first entity may obtain a plurality of second entities based on the first multicast routing identifier of the first node. The second entity herein may be any one of the second entities. In this application, an example in which the first entity forwards a multicast packet to one second entity is used for description. When actually processing the multicast packet, the first node may forward the multicast packet to each second entity.

For example, if the first multicast routing identifier is a bit sequence, a next hop corresponding to a bit whose value is 1 in the first multicast routing identifier in the multicast forwarding table is the second entity. If the first multicast routing identifier is a Cnt field plus an Idx field, a next hop corresponding to a value of an Idx field in the multicast forwarding table is the second entity. 2003. The first entity sends a fourth multicast packet to the second entity, where the fourth multicast packet includes second multicast routing information of the first node.

The second multicast routing information of the first node includes a second multicast routing identifier of the first node and multicast routing information of a part or all of non-leaf subnodes corresponding to a third multicast routing identifier of the first node. The third multicast routing identifier of the first node is the same as the first multicast routing identifier of the first node or is obtained by updating the first multicast routing identifier of the first node, and the second multicast routing identifier of the first node is the same as the third multicast routing identifier of the first node or is obtained by updating the third multicast routing identifier of the first node. Specifically, in the following case 1 and case 2, the first entity needs to update the first multicast routing identifier of the first node to obtain the third multicast routing identifier of the first node. In another case, the third multicast routing identifier of the first node is the same as the first multicast routing identifier of the first node. The following describes case 1 and case 2 and an update method by using examples.

Case 1: The first entity belongs to a subnode (assumed to be subnode 1) of the first node.

In case 1, if the first multicast routing identifier is a bit sequence, the first entity sets a bit corresponding to subnode 1 to 0, to obtain the third multicast routing identifier. If the first multicast routing identifier is a Cnt field plus an Idx field, the first entity deletes the Idx field corresponding to subnode 1, and subtracts 1 from a value of the Cnt field to obtain the third multicast routing identifier.

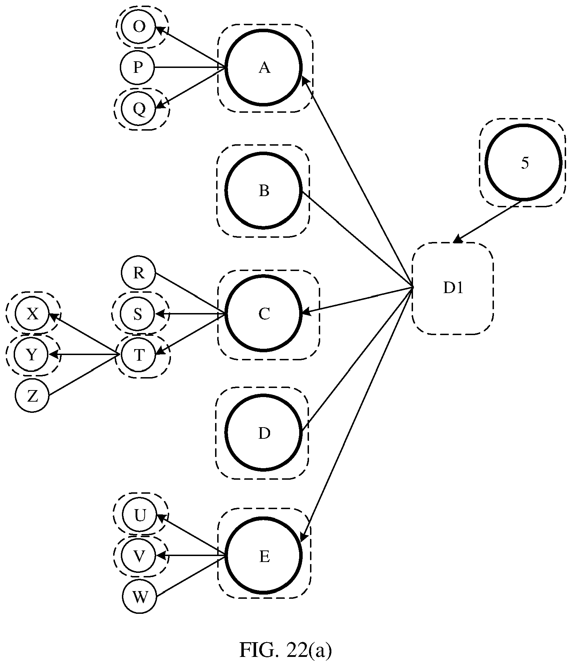

For example, referring to FIG. 22(a), entity A belongs to node A, a multicast routing identifier of node D1 in multicast packet A received by entity A is 110101, and the second bit in the multicast routing identifier corresponds to node A. Therefore, referring to step (53) in the following description, before sending multicast packet C to entity B, entity A may set the second bit in the multicast routing identifier (that is, 110101) of node D1 to 0, to obtain multicast routing identifier 1 (that is, 100101) of node D1. For details, refer to the first case in example 1 in the following description, and details are not described herein again.

Case 2: The first entity does not belong to any subnode of the first node, but the multicast packet can reach one or more subnodes (assumed to be Q subnodes) of the first node only after being forwarded by the first entity in multicast mode.

In case 2, if the first multicast routing identifier is a bit sequence, the first entity sets a bit corresponding to the Q subnodes to 0, to obtain the third multicast routing identifier. If the first multicast routing identifier is a Cnt field plus an Idx field, the first entity deletes the Idx field corresponding to the Q subnodes, and subtracts Q from a value of the Cnt field to obtain the third multicast routing identifier.

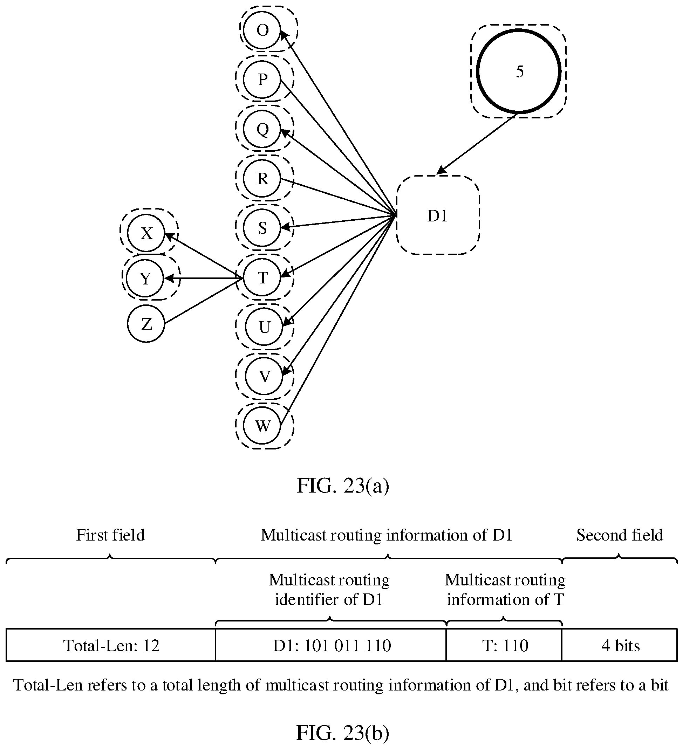

For example, referring to FIG. 23(a), entity A does not belong to any subnode of node D1, and a first node set corresponding to node D1 is {node O, node P, node Q, node R, node S, node T, node U, node V, node W}. Node O, node Q, node S, node T, node U, and node V are subnodes of node D1. A multicast routing identifier of node D1 in multicast packet A received by entity A is 101011110. Multicast packets of node O and node Q among subnodes of node D1 can arrive only after being forwarded by entity A in multicast mode. Because node O and node Q correspond to the first and third bits in 101011110, before entity A sends multicast packet C to entity B, the first and third bits in the multicast routing identifier (that is, 101011110) of node D1 may be set to 0 to obtain multicast routing identifier 1 (that is, 000011110) of node D1. For details, refer to the second case in example 1 in the following description, and details are not described herein again.

Specifically, in the following case 3, the first entity needs to update the third multicast routing identifier of the first node to obtain the second multicast routing identifier of the first node. In another case, the second multicast routing identifier of the first node is the same as the third multicast routing identifier of the first node. The following describes the case 3 and the update method by using an example.

Case 3: The first entity needs to forward the multicast packet to a plurality of second entities.

In case 3, for any second entity, if the third multicast routing identifier is a bit sequence, the first entity needs to set a bit that is in the third multicast routing identifier of the first node and that corresponds to a subnode other than P subnodes to 0, to obtain the second multicast routing identifier. If the third multicast routing identifier is a Cnt field plus an Idx field, the first entity deletes the Idx field corresponding to other subnodes than the P subnodes, and subtracts P from a value of the Cnt field to obtain the second multicast routing identifier. The P subnodes are one or more subnodes of the first node, and these subnodes can receive a multicast packet only after the multicast packet is forwarded by the second entity in multicast mode.

For example, referring to (b) in FIG. 1B, entity A, entity B, entity C, entity D, and entity E form node Z. A first node set corresponding to node Z is {node X, node Q, node R, node E, node V}. Node X, node R, node E, and node V are subnodes of node Z. Multicast packets of node R and node E need to be forwarded by entity C, and a multicast packet of node V needs to be forwarded by entity B. A multicast routing identifier of node Z in multicast packet A received by entity A is 110111. Node R and node E correspond to the fourth and fifth bits in 110111, and node V corresponds to the sixth bit in 110111. Therefore, referring to the following step (93), before sending multicast packet B to entity B, entity A may set the fourth and fifth bits in the multicast routing identifier (that is, 110111) of node Z to 0 to obtain multicast routing identifier 1 (that is, 100001) of node Z, and before sending multicast packet C to entity C, entity A may set the sixth bit in the multicast routing identifier (that is, 110111) of node Z to 0 to obtain multicast routing identifier 2 of node Z (that is, 100110). For details, refer to example 3 in the following description. Details are not described herein again.

It should be noted that whether the second multicast routing information of the first node includes multicast routing information of a part or all of non-leaf subnodes corresponding to the third multicast routing identifier of the first node depends on a quantity of second entities to which the first entity needs to send a multicast packet. If the first entity needs to send a multicast packet to one second entity, the second multicast routing information of the first node includes multicast routing information of all non-leaf subnodes corresponding to the third multicast routing identifier of the first node. If the first entity needs to send a multicast packet to two or more second entities, the second multicast routing information of the first node includes multicast routing information of some non-leaf subnodes corresponding to the third multicast routing identifier of the first node. Optionally, the method further includes:

(41) The first entity determines a first subnode based on the first multicast routing identifier of the first node, where the first subnode is a subnode corresponding to the first entity, among subnodes of the first node in the multicast tree.
(42) The first entity sends a fifth multicast packet to the first subnode, where the fifth multicast packet includes multicast routing information of the first subnode.

It should be noted that an example in which the first subnode is a non-leaf subnode of the first node is used for description herein. If the first subnode is a leaf subnode of the first node, the first entity sends a unicast packet to a third entity of the first subnode.

The subnode corresponding to the first entity is a subnode that can be processed by the first entity. When the first entity belongs to a subnode of the first node, the first subnode is the subnode. When the first entity does not belong to any subnode of the first node, the first subnode is any one of the Q subnodes. In this application, an example in which the first entity sends a multicast packet to one first subnode is used for description. In actual implementation, the first entity may send a multicast packet to each first subnode.

Optionally, when the first entity does not belong to the first subnode, in specific implementation, step (42) may include: the first entity sends the fifth multicast packet to a third entity in the first subnode.

Optionally, when the first entity belongs to the first subnode, the method further includes: the first entity determines a second subnode based on a multicast routing identifier of the first subnode, where the second subnode is a subnode corresponding to the first entity, among subnodes of the first subnode in the multicast tree. In a subsequent process, the first entity sends a packet to the second subnode. If the second subnode is a leaf subnode of the first subnode, the packet is a unicast packet, and the packet includes data in the third multicast packet. If the second subnode is a non-leaf subnode of the first subnode, the packet is a multicast packet (which may be denoted as an eighth multicast packet), and the eighth multicast packet includes multicast routing information and data of the second subnode. For example, referring to (b) in FIG. 1B, if the first entity is entity A, and the first subnode is node X, and entity A belongs to node X, the second subnode is node O.

Optionally, when the first entity belongs to the first subnode, and the first subnode further includes a fourth entity, the method further includes: the first entity sends a sixth multicast packet to the fourth entity, where the sixth multicast packet includes first multicast routing information of the first subnode, the first multicast routing information of the first subnode includes a first multicast routing identifier of the first subnode and multicast routing information of a part or all of non-leaf subnodes corresponding to a second multicast routing identifier of the first subnode, the second multicast routing identifier of the first subnode is the same as a multicast routing identifier of the first subnode or is obtained by updating a multicast routing identifier of the first subnode, and the first multicast routing identifier of the first subnode is the same as the second multicast routing identifier of the first subnode or is obtained by updating the second multicast routing identifier of the first subnode.

It should be noted that, in the embodiment shown in FIG. 20, if an entity belongs to a plurality of nodes, the entity may store a plurality of multicast forwarding tables, and one node corresponds to one or more multicast forwarding tables. A multicast forwarding table corresponding to a node includes a correspondence between a multicast routing identifier (for example, a node index, a bit sequence, or a group identifier of a subnode of the node) of the node and next-hop information, so that the entity determines, based on the multicast routing identifier of the node, subnodes to which a multicast packet needs to be sent. In this case, the multicast routing identifier of the node may further include a multicast forwarding table identifier field, which instructs the entity to look up a specific multicast forwarding table. For example, if the entity stores two multicast forwarding tables, that is, multicast forwarding table 1 and multicast forwarding table 2, the multicast forwarding table identifier field is one bit. When a value of the bit is 1, it indicates that multicast forwarding table 1 is looked up; or when a value of the bit is 0, it indicates that multicast forwarding table 2 is looked up; or vice versa. Alternatively, the multicast forwarding table identifier field may not belong to the multicast routing identifier, but is a separate field in the multicast information.

To make the embodiment shown in FIG. 20 clearer, the following describes the embodiment shown in FIG. 20 by using three examples. In the three examples, all bits corresponding to indexes in the multicast forwarding table refer to bits in the multicast routing identifier except the multicast forwarding table identifier field. Therefore, it may also be understood that when the multicast forwarding table is looked up, all bits used are bits in the multicast routing identifier except the multicast forwarding table identifier field.

Example 1

FIG. 21 shows a topological connection between some entities. Entity A, entity B, entity C, entity D, and entity E form node D1. In the following first case to third case, the embodiment shown in FIG. 20 is described by using an example in which the multicast routing identifier is a bit sequence. Bits in the bit sequence are in a one-to-one correspondence with nodes in the first node set. When a value of a bit in the bit sequence is 1, it indicates that a node corresponding to the bit is a subnode of node D1. Each node may statically maintain a length of the multicast routing identifier of node D1.

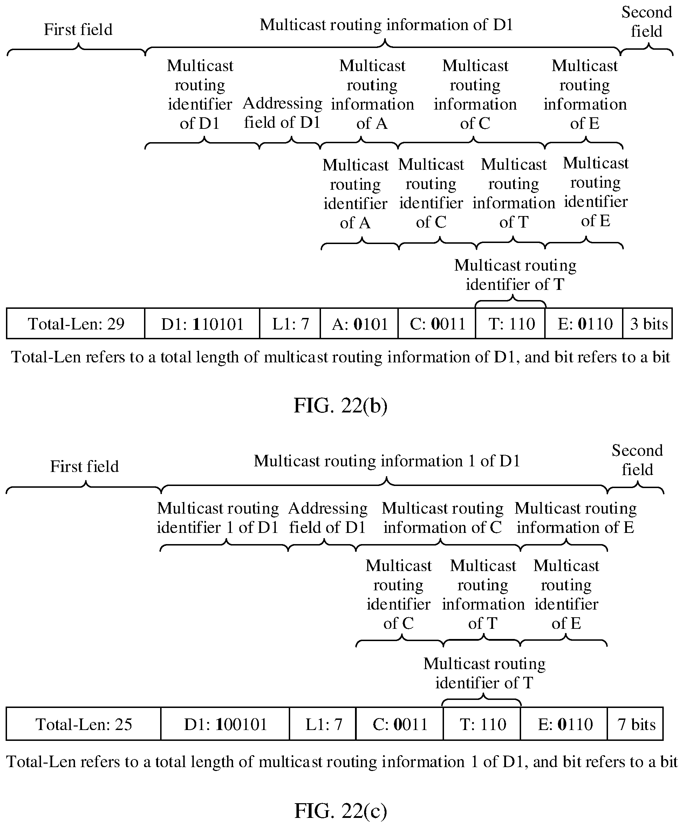

In the first case, referring to FIG. 22(a), a first node set corresponding to node D1 is {node A, node B, node C, node D, node E}. Node A, node C, and node E are subnodes of node D1. Because node 5 and entity A have a topological connection, multicast packet A sent by node 5 to node D1 (for multicast routing information of node D1 in multicast packet A, refer to FIG. 22(b)) is received by entity A in node D1. The multicast routing information of node D1 in multicast packet A includes multicast routing information of three non-leaf subnodes (that is, node A, node C, and node E), a length of the multicast routing information of node A is configured in entity A, and an addressing field of node D 1 indicates a length of the multicast routing information of node C. Entity B and entity D store multicast forwarding table 1, and multicast forwarding table 1 is a multicast forwarding table corresponding to node D1. Entity A, entity C, and entity E store two multicast forwarding tables. Multicast forwarding table 1 stored in entity A, entity C, and entity E is a multicast forwarding table corresponding to node D1, multicast forwarding table 2 stored in entity A is a multicast forwarding table corresponding to node A, multicast forwarding table 2 stored in entity C is a multicast forwarding table corresponding to node C, and multicast forwarding table 2 stored in entity E is a multicast forwarding table corresponding to node E. The multicast routing identifier of node D1 and a multicast routing identifier derived from the multicast routing identifier, a multicast routing identifier of node A, a multicast routing identifier of node C, and a multicast routing identifier of node E all include a multicast forwarding table identifier field. The field is the first bit in these multicast routing identifiers. A value 1 of the bit indicates that multicast forwarding table 1 is looked up, and a value 0 of the bit indicates that multicast forwarding table 2 is looked up.

In the first case, a process of sending a multicast packet by each entity in node D1 is as follows: (51) If receiving multicast packet A, and determining that a value of the first bit in a multicast routing identifier (that is, 110101) of node D1 in multicast packet A is 1, entity A looks up multicast forwarding table 1 (referring to Table 7) based on last five bits in the multicast routing identifier of node D1, and determines that the first bit (that is, the first bit) whose value is 1 among the five bits corresponds to entity A (that is, entity A) and that the other bits whose values are 1 correspond to entity B.

**Table 7**

| Table index | Next-hop address |
|---|---|
| 0 (corresponding to the first bit) | Address of entity A |
| 1 (corresponding to the second bit) | Address of entity B |
| 2 (corresponding to the third bit) | Address of entity B |
| 3 (corresponding to the fourth bit) | Address of entity B |
| 4 (corresponding to the fifth bit) | Address of entity B |

(52) After finding entity A (that is, entity A), entity A obtains multicast routing information of a node (that is, node A) corresponding to the first bit (that is, the first bit) whose value is 1 among the five bits, and determines that a value of the first bit in the multicast routing identifier (that is, 0101) of node A is 0. In this case, entity A looks up multicast forwarding table 2 based on the last three bits in the multicast routing identifier of node A (referring to Table 8). If it is determined that a bit whose value is 1 among the three bits corresponds to entity O and entity Q, entity A sends unicast packet B to entity O and entity Q, where unicast packet B includes data in multicast packet A.

**Table 8**

| Table index | Next-hop address |
|---|---|
| 0 (corresponding to the first bit) | Address of entity O |
| 1 (corresponding to the second bit) | Address of entity P |
| 2 (corresponding to the third bit) | Address of entity Q |

(53) After finding entity B, entity A sends multicast packet C to entity B, where multicast packet C includes multicast routing identifier 1 (that is, 100101) of node D1, an addressing field of node D1, multicast routing information of node C, and multicast routing information and data of node E. For multicast routing information 1 of node D1 in multicast packet C, refer to FIG. 22(c).

It should be noted that, because the multicast routing information of node A is processed by entity A, before sending multicast packet C, entity A updates the multicast routing identifier of node D1 to multicast routing identifier 1 of node D1.

(54) If receiving multicast packet C, and determining that a value of the first bit in multicast routing identifier 1 (that is, 100101) of node D1 in multicast packet C is 1, entity B looks up multicast forwarding table 1 (referring to Table 9) based on the last five bits in multicast routing identifier 1 of node D1, determines that all bits whose values are 1 among the five bits correspond to entity C, and sends multicast packet C to entity C.

**Table 9**

| Table index | Next-hop address |
|---|---|
| 0 (corresponding to the first bit) | Address of entity A |
| 1 (corresponding to the second bit) | Address of entity B |
| 2 (corresponding to the third bit) | Address of entity C |
| 3 (corresponding to the fourth bit) | Address of entity C |
| 4 (corresponding to the fifth bit) | Address of entity C |

(55) If receiving multicast packet C, and determining that a value of the first bit in a multicast routing identifier (that is, 100101) of node D1 in multicast packet C is 1, entity C looks up multicast forwarding table 1 (referring to Table 10) based on last five bits in the multicast routing identifier of node D1, and determines that the first bit (that is, the third bit) whose value is 1 among the five bits corresponds to entity C (that is, entity C) and that the other bits whose values are 1 correspond to entity D.

**Table 10**

| Table index | Next-hop address |
|---|---|
| 0 (corresponding to the first bit) | Address of entity B |
| 1 (corresponding to the second bit) | Address of entity B |
| 2 (corresponding to the third bit) | Address of entity C |
| 3 (corresponding to the fourth bit) | Address of entity D |
| 4 (corresponding to the fifth bit) | Address of entity D |

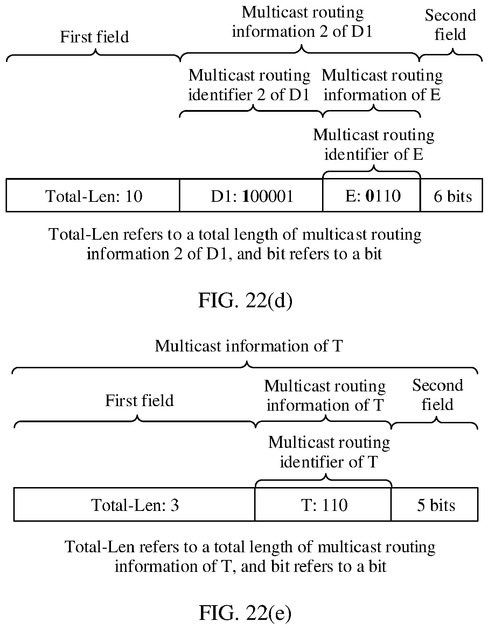

(56) After finding entity C (that is, entity C), entity C obtains multicast routing information of a node (that is, node C) corresponding to the first bit (that is, the third bit) whose value is 1 among the five bits, and determines that a value of the first bit in the multicast routing identifier (that is, 0011) of node C is 0. In this case, entity C looks up multicast forwarding table 2 (referring to Table 11) based on the last three bits in the multicast routing identifier of node C. If it is determined that a bit whose value is 1 among the three bits corresponds to entity S and entity T, entity C sends a packet to entity S and entity T. Unicast packet D sent to entity S includes data in multicast packet A, and multicast packet D sent to entity T includes multicast routing information and data of node T in multicast packet A. For multicast information of node T included in multicast packet D, refer to FIG. 22(e).

Node T receives multicast packet D, looks up a multicast forwarding table (referring to Table 12) based on multicast routing identifier 110 of node T in multicast packet D, determines that a bit whose value is 1 among the three bits corresponds to entity X and entity Y, and sends unicast packet E to entity X and entity Y, where unicast packet E includes data in multicast packet A.

**Table 11**

| Table index | Next-hop address |
|---|---|
| 0 (corresponding to the first bit) | Address of entity R |
| 1 (corresponding to the second bit) | Address of entity S |
| 2 (corresponding to the third bit) | Address of entity T |

**Table 12**

| Table index | Next-hop address |
|---|---|
| 0 (corresponding to the first bit) | Address of entity X |
| 1 (corresponding to the second bit) | Address of entity Y |
| 2 (corresponding to the third bit) | Address of entity Z |

EP 4 300 913 A1

(57) After finding entity D, entity C sends multicast packet F to entity D, where multicast packet F includes multicast routing identifier 2 (that is, 100001) of node D1, and multicast routing information and data of node E. For multicast routing information 2 of node D1 in multicast packet F, refer to FIG. 22(d).

It should be noted that, because the multicast routing information of node C is processed by entity C, before sending multicast packet F, entity C updates multicast routing identifier 1 of node D1 to multicast routing identifier 2 of node D1.

(58) If receiving multicast packet F, and determining that a value of the first bit in multicast routing identifier 2 (that is, 100001) of node D1 in multicast packet F is 1, entity D looks up multicast forwarding table 1 (referring to Table 13) based on the last five bits in multicast routing identifier 2 of node D1, determines that a bit whose value is 1 among the five bits corresponds to entity E, and sends multicast packet F to entity E.

**Table 13**

| Table index | Next-hop address |
| --- | --- |
| 0 (corresponding to the first bit) | Address of entity C |
| 1 (corresponding to the second bit) | Address of entity C |
| 2 (corresponding to the third bit) | Address of entity C |
| 3 (corresponding to the fourth bit) | Address of entity D |
| 4 (corresponding to the fifth bit) | Address of entity E |

(59) If receiving multicast packet F, and determining that a value of the first bit in multicast routing identifier 2 (that is, 100001) of node D1 in multicast packet F is 1, entity E looks up multicast forwarding table 1 (referring to Table 14) based on the last five bits in multicast routing identifier 2 of node D1, determines that a bit whose value is 1 among the five bits corresponds to entity E (that is, entity E), obtains multicast routing information of a node (that is, node E) corresponding to the first bit whose value is 1 (that is, the fifth bit) among the five bits, and determines that a value of the first bit in the multicast routing identifier (that is, 0110) of node E is 0. In this case, entity E looks up multicast forwarding table 2 (referring to Table 15) based on the last three bits in the multicast routing identifier of node E, determines that a bit whose value is 1 among the three bits corresponds to entity U and entity V, and sends unicast packet G to entity U and entity V, where unicast packet G includes data in multicast packet A.

**Table 14**

| Table index | Next-hop address |
| --- | --- |
| 0 (corresponding to the first bit) | Address of entity D |
| 1 (corresponding to the second bit) | Address of entity D |
| 2 (corresponding to the third bit) | Address of entity D |
| 3 (corresponding to the fourth bit) | Address of entity D |
| 4 (corresponding to the fifth bit) | Address of entity E |

**Table 15**

| Table index | Next-hop address |
| --- | --- |
| 0 (corresponding to the first bit) | Address of node U |
| 1 (corresponding to the second bit) | Address of node V |
| 2 (corresponding to the third bit) | Address of node W |

In the second case, referring to FIG. 23(a), a first node set corresponding to node D1 is {node O, node P, node Q, node R, node S, node T, node U, node V, node W}. Node O, node Q, node S, node T, node U, and node V are subnodes of node D1. Because node 5 and entity A have a topological connection, multicast packet A sent by node 5 to node D1 (for multicast routing information of node D1 in multicast packet A, refer to FIG. 23(b)) is received by entity A in node D1. Entity A, entity B, entity C, entity D, and entity E store the multicast forwarding table corresponding to node D 1.

In the second case, a process of sending a multicast packet by each entity in node D1 is as follows: (61) Entity A receives multicast packet A, looks up a multicast forwarding table (referring to Table 16) based on the multicast routing identifier (that is, 101011110) of node D1 in multicast packet A, and determines that the first and second bits whose values are 1 among the nine bits correspond to entity O and entity Q and that the other bits whose values are 1 correspond to entity B.

**Table 16**

| Table index | Next-hop address |
|---|---|
| 0 (corresponding to the first bit) | Address of entity O |
| 1 (corresponding to the second bit) | Address of entity P |
| 2 (corresponding to the third bit) | Address of entity Q |
| 3 (corresponding to the fourth bit) | Address of entity B |
| 4 (corresponding to the fifth bit) | Address of entity B |
| 5 (corresponding to the sixth bit) | Address of entity B |
| 6 (corresponding to the seventh bit) | Address of entity B |
| 7 (corresponding to the eighth bit) | Address of entity B |
| 8 (corresponding to the ninth bit) | Address of entity B |

(62) After finding entity O and entity Q, entity A sends unicast packet B to entity O and entity Q, where unicast packet B includes data in multicast packet A.

(63) After finding entity B, entity A sends multicast packet C to entity B, where multicast packet C includes multicast routing identifier 1 (that is, 000011110) of node D1, and multicast routing information and data of node T. For multicast routing information 1 of node D1 in multicast packet C, refer to FIG. 23(c).

It should be noted that, because the first three bits in the multicast routing identifier of node D1 are processed by entity A, before sending multicast packet C, entity A updates the multicast routing identifier of node D1 to multicast routing identifier 1 of node D1.

(64) Entity B receives multicast packet C, looks up a multicast forwarding table (referring to Table 17) based on multicast routing identifier 1 (that is, 000011110) of node D1 in multicast packet C, determines that all bits whose values are 1 among the nine bits correspond to entity C, and sends multicast packet C to entity C.

**Table 17**

| Table index | Next-hop address |
|---|---|
| 0 (corresponding to the first bit) | Address of entity A |
| 1 (corresponding to the second bit) | Address of entity A |
| 2 (corresponding to the third bit) | Address of entity A |
| 3 (corresponding to the fourth bit) | Address of entity C |
| 4 (corresponding to the fifth bit) | Address of entity C |
| 5 (corresponding to the sixth bit) | Address of entity C |
| 6 (corresponding to the seventh bit) | Address of entity C |
| 7 (corresponding to the eighth bit) | Address of entity C |
| 8 (corresponding to the ninth bit) | Address of entity C |

(65) Entity C receives multicast packet C, looks up a multicast forwarding table (referring to Table 18) based on multicast routing identifier 1 (that is, 000011110) of node D1 in multicast packet C, and determines that the first and second bits whose values are 1 among the nine bits correspond to entity S and entity T and that the other bits whose values are 1 correspond to entity D.

**Table 18**

| Table index | Next-hop address |
| --- | --- |
| 0 (corresponding to the first bit) | Address of entity B |
| 1 (corresponding to the second bit) | Address of entity B |
| 2 (corresponding to the third bit) | Address of entity B |
| 3 (corresponding to the fourth bit) | Address of entity R |
| 4 (corresponding to the fifth bit) | Address of entity S |
| 5 (corresponding to the sixth bit) | Address of entity T |
| 6 (corresponding to the seventh bit) | Address of entity D |
| 7 (corresponding to the eighth bit) | Address of entity D |
| 8 (corresponding to the ninth bit) | Address of entity D |

(66) After finding entity S and entity T, entity C sends unicast packet D to entity S, where unicast packet D includes data in multicast packet A, and entity C sends multicast packet D to entity T, where multicast packet D includes multicast routing information and data of node T in multicast packet A. Entity T receives multicast packet D, looks up a multicast forwarding table (referring to Table 12) based on multicast routing identifier 110 of node T in multicast packet D, determines that a bit whose value is 1 among the three bits corresponds to entity X and entity Y, and sends unicast packet E to entity X and entity Y, where unicast packet E includes data in multicast packet A.

(67) After finding entity D, entity C sends multicast packet E to entity D, where multicast packet E includes multicast routing identifier 2 (that is, 000000110) and data of node D1. For multicast routing information 2 of node D1 in multicast packet E, refer to FIG. 23(d).

It should be noted that, because the middle three bits in the multicast routing identifier of node D1 are processed by entity C, before sending multicast packet E, entity C updates multicast routing identifier 1 of node D1 to multicast routing identifier 2 of node D1.

(68) Entity D receives multicast packet E, looks up a multicast forwarding table (referring to Table 19) based on multicast routing identifier 2 (that is, 000000110) of node D1 in multicast packet E, determines that all bits whose values are 1 among the nine bits correspond to entity E, and sends multicast packet E to entity E.

**Table 19**

| Table index | Next-hop address |
| --- | --- |
| 0 (corresponding to the first bit) | Address of entity C |
| 1 (corresponding to the second bit) | Address of entity C |
| 2 (corresponding to the third bit) | Address of entity C |
| 3 (corresponding to the fourth bit) | Address of entity C |
| 4 (corresponding to the fifth bit) | Address of entity C |
| 5 (corresponding to the sixth bit) | Address of entity C |
| 6 (corresponding to the seventh bit) | Address of entity E |
| 7 (corresponding to the eighth bit) | Address of entity E |
| 8 (corresponding to the ninth bit) | Address of entity E |

(69) Entity E receives multicast packet E, looks up a multicast forwarding table (referring to Table 20) based on multicast routing identifier 2 (that is, 000000110) of node D1 in multicast packet E, determines that a bit whose value is 1 among the nine bits corresponds to entity U and entity V, and sends unicast packet F to entity U and entity V, where unicast packet F includes data in multicast packet A.

**Table 20**

| Table index | Next-hop address |
|---|---|
| 0 (corresponding to the first bit) | Address of entity D |
| 1 (corresponding to the second bit) | Address of entity D |
| 2 (corresponding to the third bit) | Address of entity D |
| 3 (corresponding to the fourth bit) | Address of entity D |
| 4 (corresponding to the fifth bit) | Address of entity D |
| 5 (corresponding to the sixth bit) | Address of entity D |
| 6 (corresponding to the seventh bit) | Address of entity U |
| 7 (corresponding to the eighth bit) | Address of entity V |
| 8 (corresponding to the ninth bit) | Address of entity W |

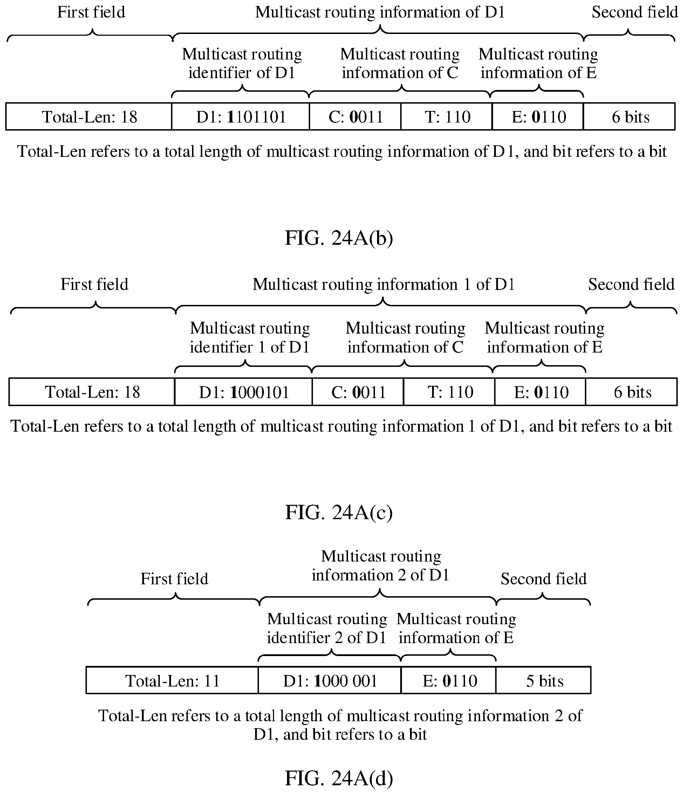

In the third case, referring to FIG. 24A(a), a first node set corresponding to node D1 is {node O, node P, node Q, node C, node D, node E}. Node O, node Q, node C, and node E are subnodes of node D 1. Because node 5 and entity A have a topological connection, multicast packet A sent by node 5 to node D1 (for multicast routing information of node D1 in multicast packet A, refer to FIG. 24A(b)) is received by entity A in node D1. The multicast routing information of node D1 in multicast packet A includes multicast routing information of two non-leaf subnodes (that is, node C and node E). A length of the multicast routing information of node E is configured in entity A, and a length of the multicast routing information of node C may be obtained through calculation by using a total length of the multicast routing information of node D1. Entity A, entity B, and entity D store multicast forwarding table 1, and multicast forwarding table 1 is a multicast forwarding table corresponding to node D1. Entity C and entity E store two multicast forwarding tables. The multicast forwarding tables 1 stored in entity C and entity E are both multicast forwarding tables corresponding to node D1, multicast forwarding table 2 stored in entity C is a multicast forwarding table corresponding to node C, and multicast forwarding table 2 stored in entity E is a multicast forwarding table corresponding to node E. The multicast routing identifier of node D1 and a multicast routing identifier derived from the multicast routing identifier, a multicast routing identifier of node C, and a multicast routing identifier of node E all include a multicast forwarding table identifier field. The field is the first bit in these multicast routing identifiers. A value 1 of the bit indicates that the multicast forwarding table corresponding to D1 is looked up, and a value 0 of the bit indicates that multicast forwarding table 2 is looked up.

(71) If receiving multicast packet A, and determining that a value of the first bit in a multicast routing identifier (that is, 1101101) of node D1 in multicast packet A is 1, entity A looks up the multicast forwarding table (referring to Table 21) based on last six bits in the multicast routing identifier of node D1, and determines that the first and second bits whose values are 1 among the six bits correspond to entity O and entity Q and that the other bits whose values are 1 correspond to entity B.

**Table 21**

| Table index | Next-hop address |
|---|---|
| 0 (corresponding to the first bit) | Address of entity O |
| 1 (corresponding to the second bit) | Address of entity P |
| 2 (corresponding to the third bit) | Address of entity Q |
| 3 (corresponding to the fourth bit) | Address of entity B |
| 4 (corresponding to the fifth bit) | Address of entity B |
| 5 (corresponding to the sixth bit) | Address of entity B |

(72) After finding entity O and entity Q, entity A sends unicast packet B to entity O and entity Q, where unicast packet B includes data in multicast packet A.

(73) After finding entity B, entity A sends multicast packet C to entity B, where multicast packet C includes multicast routing identifier 1 (that is, 1000101) of node D1, multicast routing information of node C, and multicast routing information and data of node E. For multicast routing information 1 of node D1 in multicast packet C, refer to FIG. 24A(c).

It should be noted that, because the first three bits in the multicast routing identifier of node D1 are processed by entity A, before sending multicast packet C, entity A updates the multicast routing identifier of node D1 to multicast routing identifier 1 of node D1.

(74) If receiving multicast packet C, and determining that a value of the first bit in multicast routing identifier 1 (that is, 1000101) of node D1 in multicast packet C is 1, entity B looks up the multicast forwarding table (referring to Table 22) based on the last six bits in multicast routing identifier 1 of node D1, determines that all bits whose values are 1 among the six bits correspond to entity C, and sends multicast packet C to entity C.

**Table 22**

| Table index | Next-hop address |
| --- | --- |
| 0 (corresponding to the first bit) | Address of entity A |
| 1 (corresponding to the second bit) | Address of entity A |
| 2 (corresponding to the third bit) | Address of entity A |
| 3 (corresponding to the fourth bit) | Address of entity C |
| 4 (corresponding to the fifth bit) | Address of entity C |
| 5 (corresponding to the sixth bit) | Address of entity C |

(75) If receiving multicast packet C, and determining that a value of the first bit in multicast routing identifier 1 (that is, 1000101) of node D1 in multicast packet C is 1, entity C looks up multicast forwarding table 1 (referring to Table 23) based on last six bits in multicast routing identifier 1 of node D1, and determines that the first bit (that is, the fourth bit) whose value is 1 among the six bits corresponds to entity C (that is, entity C) and that the other bits whose values are 1 correspond to entity D.

**Table 23**

| Table index | Next-hop address |
| --- | --- |
| 0 (corresponding to the first bit) | Address of entity B |
| 1 (corresponding to the second bit) | Address of entity B |
| 2 (corresponding to the third bit) | Address of entity B |
| 3 (corresponding to the fourth bit) | Address of entity C |
| 4 (corresponding to the fifth bit) | Address of entity D |
| 5 (corresponding to the sixth bit) | Address of entity D |

(76) After finding entity C (that is, entity C), entity C obtains multicast routing information of a node (that is, node C) corresponding to the first bit (that is, the fourth bit) whose value is 1 among the six bits, and determines that a value of the first bit in the multicast routing identifier (that is, 0011) of node C is 0. In this case, entity C looks up multicast forwarding table 2 (referring to Table 11) based on the last three bits in the multicast routing identifier of node C. If it is determined that a bit whose value is 1 among the three bits corresponds to entity S and entity T, entity C sends a packet to entity S and entity T. Unicast packet D sent to entity S includes data in multicast packet A, and multicast packet D sent to entity T includes multicast routing information and data of node T in multicast packet A. For multicast information of node T included in multicast packet D, refer to FIG. 22(e).

Node T receives multicast packet D, looks up a multicast forwarding table (referring to Table 12) based on multicast routing identifier 110 of node T in multicast packet D, determines that a bit whose value is 1 among the three bits corresponds to entity X and entity Y, and sends unicast packet E to entity X and entity Y, where unicast packet E includes data in multicast packet A. (77) After finding entity D, entity C sends multicast packet F to entity D, where multicast packet F includes multicast routing identifier 2 (that is, 1000001) of node D1, and multicast routing information and data of node E. For multicast routing information 2 of node D 1 in multicast packet F, refer to FIG. 24A(d).

It should be noted that, because the multicast routing information of node C is processed by entity C, before sending multicast packet F, entity C updates multicast routing identifier 1 of node D1 to multicast routing identifier 2 of node D1.

(78) If receiving multicast packet F, and determining that a value of the first bit in multicast routing identifier 2 (that is, 1000001) of node D1 in multicast packet F is 1, entity D looks up multicast forwarding table 1 (referring to Table 24) based on the last six bits in multicast routing identifier 2 of node D1, determines that a bit whose value is 1 among the six bits corresponds to entity E, and sends multicast packet F to entity E.

**Table 24**

| Table index | Next-hop address |
|---|---|
| 0 (corresponding to the first bit) | Address of entity C |
| 1 (corresponding to the second bit) | Address of entity C |
| 2 (corresponding to the third bit) | Address of entity C |
| 3 (corresponding to the fourth bit) | Address of entity C |
| 4 (corresponding to the fifth bit) | Address of entity C |
| 5 (corresponding to the sixth bit) | Address of entity E |

(79) If receiving multicast packet F, and determining that a value of the first bit in multicast routing identifier 2 (that is, 1000001) of node D1 in multicast packet F is 1, entity E looks up multicast forwarding table 1 (referring to Table 25) based on the last six bits in multicast routing identifier 2 of node D1, determines that a bit whose value is 1 among the six bits corresponds to entity E (that is, entity E), obtains multicast routing information of a node (that is, node E) corresponding to the first bit whose value is 1 (that is, the sixth bit) among the six bits, and determines that a value of the first bit in the multicast routing identifier (that is, 0110) of node E is 0. In this case, entity E looks up multicast forwarding table 2 (referring to Table 15) based on the last three bits in the multicast routing identifier of node E, determines that a bit whose value is 1 among the three bits corresponds to entity U and entity V, and sends unicast packet G to entity U and entity V, where unicast packet G includes data in multicast packet A.

**Table 25**

| Table index | Next-hop address |
|---|---|
| 0 (corresponding to the first bit) | Address of entity D |
| 1 (corresponding to the second bit) | Address of entity D |
| 2 (corresponding to the third bit) | Address of entity D |
| 3 (corresponding to the fourth bit) | Address of entity D |
| 4 (corresponding to the fifth bit) | Address of entity D |
| 5 (corresponding to the sixth bit) | Address of entity E |

Example 2

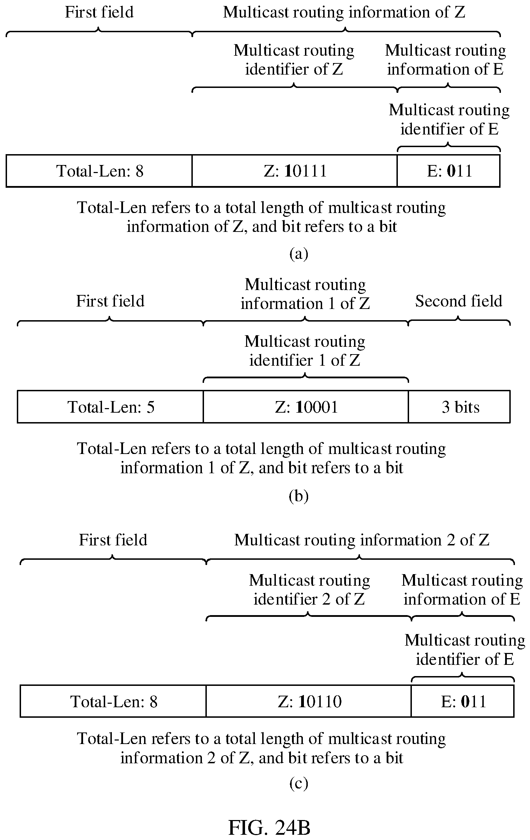

Based on the topological connection and the multicast tree of a part of the entities shown in (a) in FIG. 1B, entity A, entity B, entity C, entity D, and entity E form node Z, and entity E further forms node E. In example 2, the embodiment shown in FIG. 20 is described by using an example in which a multicast routing identifier is a bit sequence. Bits in the bit sequence are in a one-to-one correspondence with nodes in the first node set. When a value of a bit in the bit sequence is 1, it indicates that a node corresponding to the bit is a subnode of node Z. Each node may statically maintain a length of the multicast routing identifier of node Z.
In (a) in FIG. 1B, a first node set corresponding to node Z is {node Q, node R, node E, node V}. Node R, node E, and node V are subnodes of node Z. Because node 3 and entity A have a topological connection, multicast packet A sent by node 3 to node Z (for multicast routing information of node Z in multicast packet A, refer to (a) in FIG. 24B) is received by entity A in node Z. The multicast routing information of node Z in multicast packet A includes multicast routing information of one non-leaf subnode (that is, node E). Entity A, entity B, entity C, entity D, and entity E store multicast forwarding table 1, and multicast forwarding table 1 is a multicast forwarding table corresponding to node Z. Entity E further stores multicast forwarding table 2, and multicast forwarding table 2 is a multicast forwarding table corresponding to node E. The multicast routing identifier of node Z and a multicast routing identifier derived from the multicast routing identifier, and a multicast routing identifier of node E all include a multicast forwarding table identifier field. The field is the first bit in these multicast routing identifiers. A value 1 of the bit indicates that multicast forwarding table 1 is looked up, and a value 0 of the bit indicates that multicast forwarding table 2 is looked up.

A process of sending a multicast packet by each entity in node Z is as follows:

(81) If receiving multicast packet A, and determining that a value of the first bit in a multicast routing identifier (that is, 10111) of node Z in multicast packet A is 1, entity A looks up multicast forwarding table 1 (referring to Table 26) based on last four bits in the multicast routing identifier of node Z, and determines that the first and second bits (that is, the second and third bits) whose values are 1 among the four bits correspond to entity C and that the third bit (that is, the fourth bit) whose value is 1 corresponds to entity B.

**Table 26**

| Table index | Next-hop address |
|---|---|
| 0 (corresponding to the first bit) | Address of entity C |
| 1 (corresponding to the second bit) | Address of entity C |
| 2 (corresponding to the third bit) | Address of entity C |
| 3 (corresponding to the fourth bit) | Address of entity B |

(82) Entity A sends multicast packet B to entity B, and sends multicast packet C to entity C. Multicast packet B includes multicast routing identifier 1 (that is, 10001) of node Z. For multicast routing information 1 of node Z in multicast packet B, refer to (b) in FIG. 24B. Multicast packet C includes multicast routing identifier 2 (that is, 10110) of node Z and multicast routing information of node E. For multicast routing information 2 of node Z in multicast packet C, refer to (c) in FIG. 24B.

Because entity B does not process the second and third bits among the last four bits in the multicast routing identifier of node Z, before sending multicast packet B, entity A may update the multicast routing identifier of node Z to multicast routing identifier 1 of node Z. Because entity C does not process the fourth bit among the last four bits in the multicast routing identifier of node Z, before sending multicast packet C, entity A may update the multicast routing identifier of node Z to multicast routing identifier 2 of node Z.

(83) If receiving multicast packet B, and determining that a value of the first bit in multicast routing identifier 1 (that is, 10001) of node Z in multicast packet B is 1, entity B looks up multicast forwarding table 1 (referring to Table 27) based on the last four bits in multicast routing identifier 1 of node Z, determines that the first bit (that is, the fourth bit) whose value is 1 among the four bits corresponds to entity D, and sends multicast packet B to entity D. If receiving multicast packet B, and determining that a value of the first bit in multicast routing identifier 1 (that is, 10001) of node Z in multicast packet B is 1, entity D looks up multicast forwarding table 1 (referring to Table 28) based on the last fourth bits in multicast routing identifier 1 of node Z, determines that the first bit (that is, the fourth bit) whose value is 1 among the four bits corresponds to entity V, and sends unicast packet D to entity V, where unicast packet D includes data in multicast packet A.

**Table 27**

| Table index | Next-hop address |
|---|---|
| 0 (corresponding to the first bit) | Address of entity C |
| 1 (corresponding to the second bit) | Address of entity C |
| 2 (corresponding to the third bit) | Address of entity C |
| 3 (corresponding to the fourth bit) | Address of entity D |

**Table 28**

| Table index | Next-hop address |
|---|---|
| 0 (corresponding to the first bit) | Address of entity B |
| 1 (corresponding to the second bit) | Address of entity B |
| 2 (corresponding to the third bit) | Address of entity E |
| 3 (corresponding to the fourth bit) | Address of entity V |

(84) If receiving multicast packet C, and determining that a value of the first bit in multicast routing identifier 2 (that is, 10110) of node Z in multicast packet C is 1, entity C looks up multicast forwarding table 1 (referring to Table 29) based on the last four bits in multicast routing identifier 2 of node Z, determines that the first bit (that is, the second bit) whose value is 1 among the four bits corresponds to entity R, sends unicast packet E to entity R, where unicast packet E includes data in multicast packet A, and the second bit (that is, the third bit) whose value is 1 corresponds to entity E, and sends multicast packet F to entity E. Multicast packet F includes multicast routing identifier 3 (that is, 10010) of node Z.

It should be noted that, before sending multicast packet F, entity C has processed the second bit among the last four bits of multicast routing identifier 2 of node Z, and therefore updates multicast routing identifier 2 of node Z to multicast routing identifier 3 of node Z.

**Table 29**

| Table index | Next-hop address |
|---|---|
| 0 (corresponding to the first bit) | Address of entity Q |
| 1 (corresponding to the second bit) | Address of entity R |
| 2 (corresponding to the third bit) | Address of entity E |
| 3 (corresponding to the fourth bit) | Address of entity B |

(85) If receiving multicast packet F, and determining that a value of the first bit in multicast routing identifier 3 (that is, 10010) of node Z in multicast packet F is 1, entity E looks up multicast forwarding table 1 (referring to Table 30) based on the last four bits in multicast routing identifier 3 of node Z, determines that a bit (that is, the third bit) whose value is 1 among the four bits corresponds to entity E (that is, entity E), and determines that a value of the first bit in the multicast routing identifier (that is, 011) of node E is 0. In this case, entity E looks up multicast forwarding table 2 (referring to Table 31) based on the last two bits in the multicast routing identifier of node E, obtains entity S and entity T, and sends unicast packet G to entity S and entity T, where unicast packet G includes data in multicast packet A.

**Table 30**

| Table index | Next-hop address |
|---|---|
| 0 (corresponding to the first bit) | Address of entity C |
| 1 (corresponding to the second bit) | Address of entity C |
| 2 (corresponding to the third bit) | Address of entity E |
| 3 (corresponding to the fourth bit) | Address of entity D |

**Table 31**

| Table index | Next-hop address |
|---|---|
| 0 (corresponding to the first bit) | Address of entity S |
| 1 (corresponding to the second bit) | Address of entity T |

Example 3

Based on the topological connection and the multicast tree of a part of the entities shown in (b) in FIG. 1B, entity A, entity B, entity C, entity D, and entity E form node Z, entity A and entity B further form entity X, and entity E further forms node E. In example 3, the embodiment shown in FIG. 20 is described by using an example in which a multicast routing identifier is a bit sequence. Bits in the bit sequence are in a one-to-one correspondence with nodes in the first node set. When a value of a bit in the bit sequence is 1, it indicates that a node corresponding to the bit is a subnode of node Z. Each node may statically maintain a length of the multicast routing identifier of node Z.

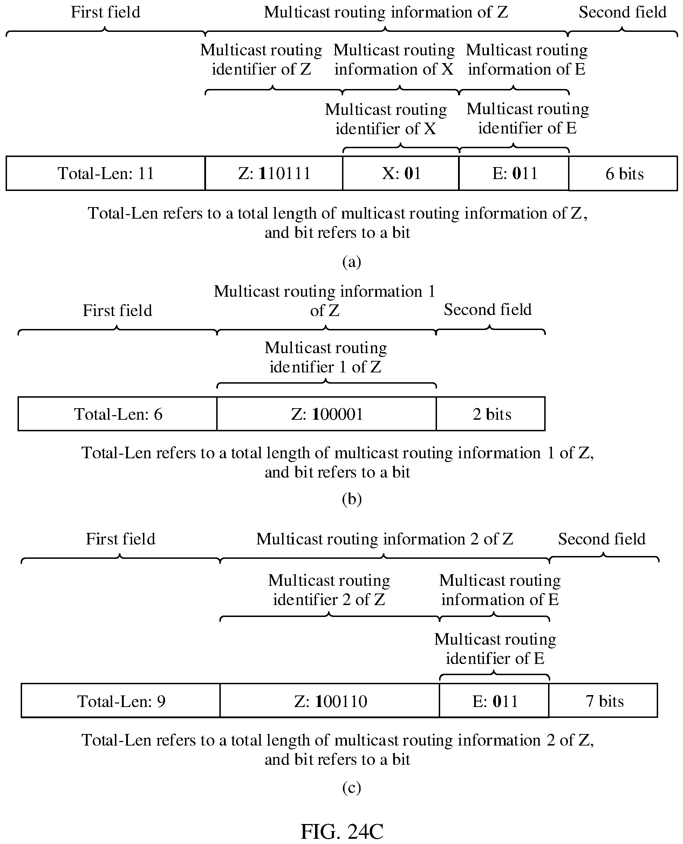

In (b) in FIG. 1B, a first node set corresponding to node Z is {node X, node Q, node R, node E, node V}. Node X, node R, node E, and node V are subnodes of node Z. Because node 3 and entity A have a topological connection, multicast packet A sent by node 3 to node Z (for multicast routing information of node Z in multicast packet A, refer to (a) in FIG. 24C) is received by entity A in node Z. The multicast routing information of node Z in multicast packet A includes multicast routing information of two non-leaf subnodes (that is, node X and node E). Entity A, entity B, entity C, entity D, and entity E store multicast forwarding table 1, and multicast forwarding table 1 is a multicast forwarding table corresponding to node Z. Entity A and entity B further store multicast forwarding table 2, and multicast forwarding table 2 in entity A and entity B is a multicast forwarding table corresponding to node X. Entity E further stores multicast forwarding table 2, and multicast forwarding table 2 in entity E is a multicast forwarding table corresponding to node E. The multicast routing identifier of node Z and a multicast routing identifier derived from the multicast routing identifier, a multicast routing identifier of node X, and a multicast routing identifier of node E all include a multicast forwarding table identifier field. The field is the first bit in these multicast routing identifiers. A value 1 of the bit indicates that multicast forwarding table 1 is looked up, and a value 0 of the bit indicates that multicast forwarding table 2 is looked up.

A process of sending a multicast packet by each entity in node Z is as follows:

(91) If receiving multicast packet A, and determining that a value of the first bit in a multicast routing identifier (that is, 110111) of node Z in multicast packet A is 1, entity A looks up multicast forwarding table 1 (referring to Table 32) based on last five bits in the multicast routing identifier of node Z, and determines that the first bit (that is, the first bit) whose value is 1 among the five bits corresponds to entity A, and that the second bit (that is, the third bit) whose value is 1 and the third bit (that is, the fourth bit) whose value is 1 correspond to entity C, and that the fourth bit (that is, the fifth bit) whose value is 1 corresponds to entity B.

**Table 32**

| Table index | Next-hop address |
|---|---|
| 0 (corresponding to the first bit) | Address of entity A |
| 1 (corresponding to the second bit) | Address of entity C |
| 2 (corresponding to the third bit) | Address of entity C |
| 3 (corresponding to the fourth bit) | Address of entity C |
| 4 (corresponding to the fifth bit) | Address of entity B |

(92) After finding entity A (that is, entity A), entity A obtains multicast routing information of a node (that is, node X) corresponding to the first bit (that is, the first bit) whose value is 1 among the five bits, looks up a multicast forwarding table (referring to Table 33) based on a multicast routing identifier (that is, 1) of node X, determines entity O, and sends unicast packet H to entity O, where unicast packet H includes data in multicast packet A.

**Table 33**

| Table index | Next-hop address |
|---|---|
| 0 (corresponding to the first bit) | Address of entity O |

(93) Entity A sends multicast packet B to entity B, and sends multicast packet C to entity C. Multicast packet B includes multicast routing identifier 1 (that is, 100001) of node Z. For multicast routing information 1 of node Z in multicast packet B, refer to (b) in FIG. 24C. Multicast packet C includes multicast routing identifier 2 (that is, 100110) of node Z and multicast routing information of node E. For multicast routing information 2 of node Z in multicast packet C, refer to (c) in FIG. 24C.

Because entity B does not process the third and fourth bits among the last five bits in the multicast routing identifier of node Z, before sending multicast packet B, entity A may update the multicast routing identifier of node Z to multicast routing identifier 1 of node Z. Because entity C does not process the fifth bit among the last five bits in the multicast routing identifier of node Z, before sending multicast packet C, entity A may update the multicast routing identifier of node Z to multicast routing identifier 2 of node Z.

(94) If receiving multicast packet B, and determining that a value of the first bit in multicast routing identifier 1 (that is, 100001) of node Z in multicast packet B is 1, entity B looks up multicast forwarding table 1 (referring to Table 34) based on the last five bits in multicast routing identifier 1 of node Z, determines that the first bit (that is, the fifth bit) whose value is 1 among the five bits corresponds to entity D, and sends multicast packet B to entity D. If receiving multicast packet B, and determining that a value of the first bit in multicast routing identifier 1 (that is, 100001) of node Z in multicast packet B is 1, entity D looks up multicast forwarding table 1 (referring to Table 35) based on the last five bits in multicast routing identifier 1 of node Z, determines that the first bit (that is, the fifth bit) whose value is 1 among the five bits corresponds to entity V, and sends unicast packet D to entity V, where unicast packet D includes data in multicast packet A.

**Table 34**

| Table index | Next-hop address |
|---|---|
| 0 (corresponding to the first bit) | Address of entity B |
| 1 (corresponding to the second bit) | Address of entity C |
| 2 (corresponding to the third bit) | Address of entity C |
| 3 (corresponding to the fourth bit) | Address of entity C |
| 4 (corresponding to the fifth bit) | Address of entity D |

**Table 35**

| Table index | Next-hop address |
|---|---|
| 0 (corresponding to the first bit) | Address of entity B |
| 1 (corresponding to the second bit) | Address of entity B |
| 2 (corresponding to the third bit) | Address of entity B |
| 3 (corresponding to the fourth bit) | Address of entity E |
| 4 (corresponding to the fifth bit) | Address of entity V |

(95) If receiving multicast packet C, and determining that a value of the first bit in multicast routing identifier 2 (that is, 100110) of node Z in multicast packet C is 1, entity C looks up multicast forwarding table 1 (referring to Table 36) based on the last five bits in multicast routing identifier 2 of node Z, determines that the first bit (that is, the third bit) whose value is 1 among the five bits corresponds to entity R, sends unicast packet E to entity R, where unicast packet E includes data in multicast packet A, and the second bit (that is, the fourth bit) whose value is 1 corresponds to entity E, and sends multicast packet F to entity E. Multicast packet F includes multicast routing identifier 3 (that is, 100010) of node Z.

It should be noted that, before sending multicast packet F, entity C has processed the third bit among the last five bits of multicast routing identifier 2 of node Z, and therefore updates multicast routing identifier 2 of node Z to multicast routing identifier 3 of node Z.

**Table 36**

| Table index | Next-hop address |
|---|---|
| 0 (corresponding to the first bit) | Address of entity A |
| 1 (corresponding to the second bit) | Address of entity Q |
| 2 (corresponding to the third bit) | Address of entity R |
| 3 (corresponding to the fourth bit) | Address of entity E |
| 4 (corresponding to the fifth bit) | Address of entity B |

(96) If receiving multicast packet F, and determining that a value of the first bit in multicast routing identifier 3 (that is, 100010) of node Z in multicast packet F is 1, entity E looks up multicast forwarding table 1 (referring to Table 37) based on the last five bits in multicast routing identifier 3 of node Z, determines that a bit (that is, the fourth bit) whose value is 1 among the five bits corresponds to entity E (that is, entity E), obtains multicast routing information of a node (that is, node E) corresponding to the fourth bit among the last five bits in multicast routing identifier 3 of node Z, and determines that a value of the first bit in the multicast routing identifier (that is, 011) of node E is 0. In this case, entity E looks up multicast forwarding table 2 (referring to Table 38) based on the last two bits in the multicast routing identifier of node E, obtains entity S and entity T, and sends unicast packet G to entity S and entity T, where unicast packet G includes data in multicast packet A.

**Table 37**

| Table index | Next-hop address |
|---|---|
| 0 (corresponding to the first bit) | Address of entity C |
| 1 (corresponding to the second bit) | Address of entity C |
| 2 (corresponding to the third bit) | Address of entity C |
| 3 (corresponding to the fourth bit) | Address of entity E |
| 4 (corresponding to the fifth bit) | Address of entity D |

**Table 38**

| Table index | Next-hop address |
|---|---|
| 0 (corresponding to the first bit) | Address of entity S |
| 1 (corresponding to the second bit) | Address of entity T |

Compared with PIM-SM, the method provided in the foregoing embodiment of this application has the following advantages:

1. A quantity of entries in a multicast forwarding table in a node does not increase as a quantity of multicast streams increases. Therefore, even if the quantity of multicast streams is large, it is not necessary to extend more table space in a router to support forwarding of a multicast packet. Therefore, scalability is good.
2. The multicast packet is generated from a source node, and the multicast packet includes multicast routing information of a non-leaf subnode. Therefore, a forwarding path may be actively controlled by adjusting the multicast packet. For example, if there are a plurality of paths, a controller or the source node may select an optimal path by using a control plane algorithm.
3. The multicast packet is generated from the source node. Therefore, when a node joins or leaves a multicast tree, the source node can learn the case, and manageability is high. For example, the source node may collect user preferences by using an application layer, and adjust data in the multicast packet according to the preferences.
4. The node does not need to send join signaling. Therefore, the node does not need to process a large amount of periodic signaling, thereby avoiding increase of computational load, power consumption, and processing resources of the node.

Compared with BIER, the method provided in the foregoing embodiment of this application has the following advantages:

1. A multicast packet includes multicast routing information of a non-leaf subnode, and the non-leaf subnode may forward the multicast packet based on the multicast routing information of the non-leaf subnode. Therefore, a quantity of packets is not excessively large, and multicast efficiency is high.
2. The multicast packet is generated from a source node, and the multicast packet includes the multicast routing information of the non-leaf subnode. Therefore, a forwarding path may be actively controlled by adjusting the multicast packet. For example, if there are a plurality of paths, a controller or the source node may select an optimal path by using a control plane algorithm.

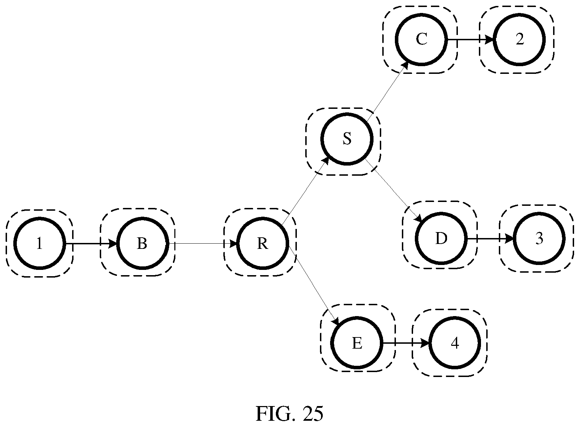

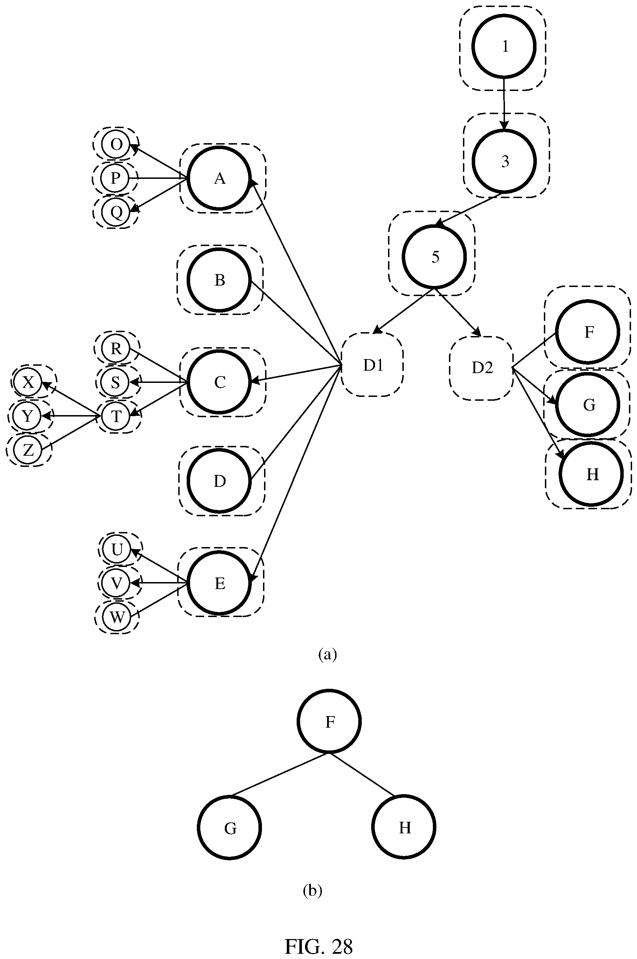

To make embodiments of this application clearer, the following uses Embodiment 1, Embodiment 2, and Embodiment 3 as examples to describe the method provided in the foregoing embodiment. In Embodiment 1, the method provided in the foregoing embodiment is described by using an example in which a multicast tree is a multicast tree shown in FIG. 25 and a multicast routing identifier of a node is implemented in the foregoing manner 21. In Embodiment 2, the method provided in the foregoing embodiment is described by using an example in which a multicast tree is the multicast tree shown in FIG. 25 and a multicast routing identifier of a node is implemented in the foregoing manner 22. In Embodiment 3, the method provided in the foregoing embodiment is described by using an example in which a multicast tree is a multicast tree shown in FIG. 28 and a multicast routing identifier of a node is implemented in the foregoing manner 22.

**Embodiment 1**

In a multicast tree shown in FIG. 25, a first node set corresponding to node B includes two nodes (that is, node 1 and node R). In this case, a bit width of an Idx field of node B is 1, node B has one subnode (that is, node R), and an index of node R is 1. Therefore, in a multicast routing identifier of node B, a value of a Cnt field is 1, there is one Idx field, and a value of the Idx field is also 1. A first node set corresponding to node R includes three nodes (that is, node B, node S, and node E). In this case, a bit width of an Idx field of node R is 2, node R has two subnodes: node S and node E, and indexes of node S and node E are 1 and 2 respectively. Therefore, a value of a Cnt field in the multicast routing identifier of node B is 2, there are two Idx fields, and values of the two Idx fields are 1 and 2 respectively. A first node set corresponding to node S includes three nodes (that is, node R, node C, and node D). In this case, a bit width of an Idx field of node S is 2, node S has two subnodes: node C and node D, and indexes of node C and node D are 1 and 2 respectively. Therefore, a value of a Cnt field in a multicast routing identifier of node S is 2, there are two Idx fields, and values of the two Idx fields are 1 and 2 respectively. A first node set corresponding to node C includes two nodes (that is, node S and node 2). In this case, a bit width of an Idx field of node C is 1, and node C has one subnode. The subnode is node 2, and an index of node 2 is 1. Therefore, in a multicast routing identifier of node C, a value of a Cnt field is 1, there is one Idx field, and a value of the Idx field is 1. A first node set corresponding to node D includes two nodes

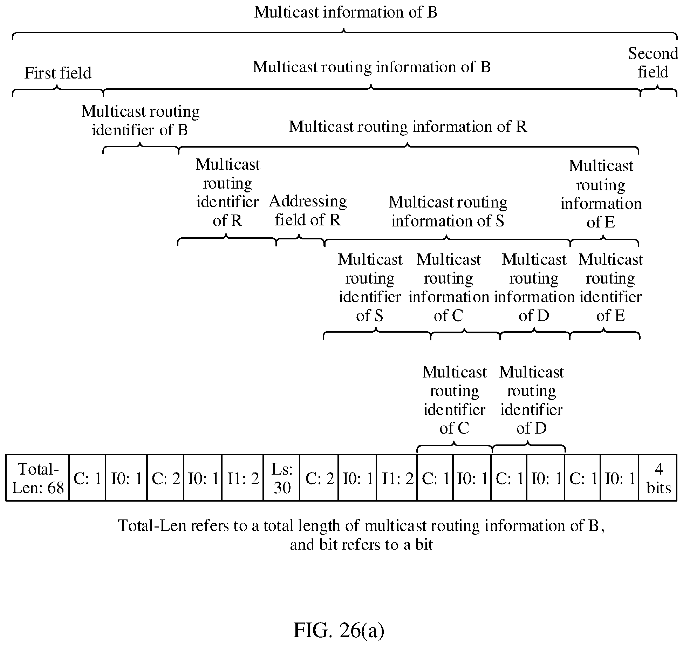

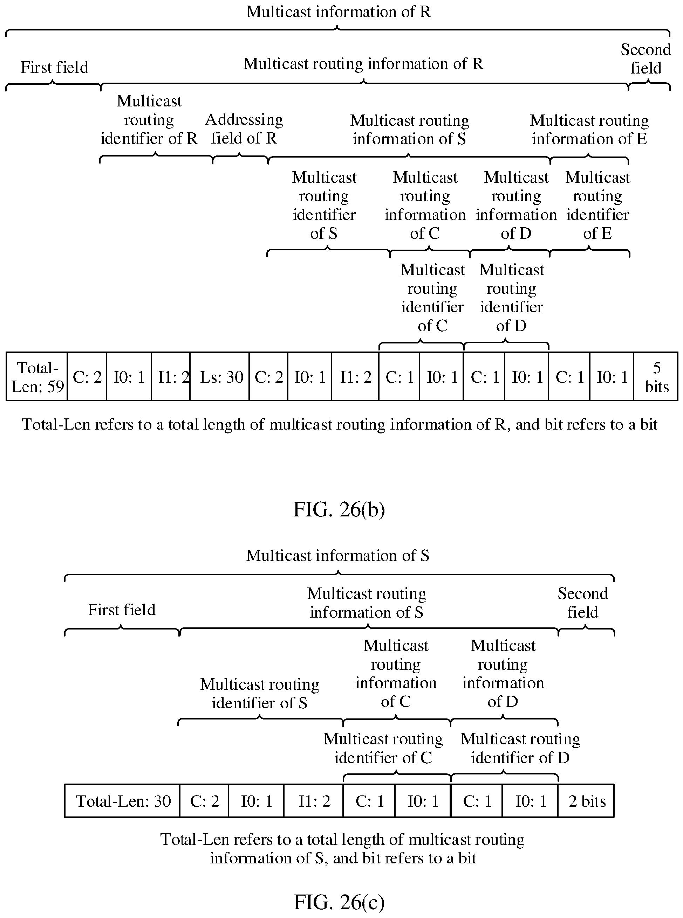

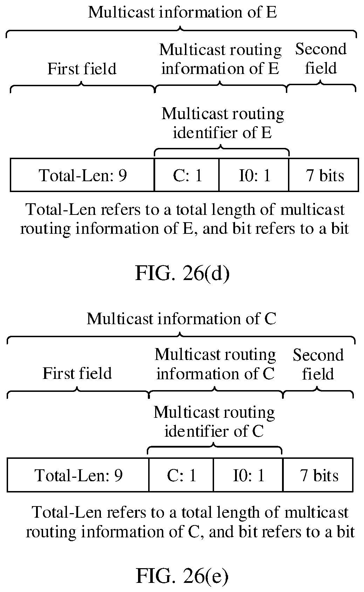

(that is, node S and node 3). In this case, a bit width of an Idx field of node D is 1, and node D has one subnode. The subnode is node 3, and an index of node 3 is 1. Therefore, in a multicast routing identifier of node D, a value of a Cnt field is 1, there is one Idx field, and a value of the Idx field is 1. A first node set corresponding to node E includes two nodes (that is, node R and node 4). In this case, a bit width of an Idx field of node E is 1, and node E has one subnode. The subnode is node 4, and an index of node 4 is 1. Therefore, in a multicast routing identifier of node E, a value of a Cnt field is 1, there is one Idx field, and a value of the Idx field is 1. It is assumed that bit widths of a first field and the Cnt field are 1 byte. For a multicast packet (denoted as multicast packet 1) sent by node 1 to node B, refer to FIG. 26(a). In FIG. 26(a), FIG. 26(b), FIG. 26(c), FIG. 26(d), and FIG. 26(e), C before ":" represents the Cnt field, 10 before ":" represents the first Idx field, I1 before ":" represents the second Idx field, and Ls before ":" represents a length of multicast routing information of node S, a value after ":" represents a value of the field. A bit width of Ls is 1 byte.

It should be noted that, because node B has only one subtree, that is, node B has only one non-leaf subnode, a position of multicast routing information of the non-leaf subnode may be obtained through calculation by using a length indicated by the first field and a length of another field. Therefore, multicast packet 1 may not carry an addressing field of node B. Based on multicast packet 1 received by node B, a process in which each node in the multicast tree sends the multicast packet is as follows:

(101) Node B parses multicast packet 1, determines a position of a Cnt field (the 9th to 16th bits in multicast information of node B) based on a length of a first field and a length of the Cnt field, determines, based on a value at the position, that a value of the Cnt field is 1, learns that there is one Idx field subsequently (that is, node B has one subnode), determines a position of the Idx field (the 17th bit in the multicast information of node B) based on a length of the Idx field, determines, based on a value at the position, that a value of the Idx field is 1, and looks up a multicast forwarding table (referring to the following Table 39) of node B for a next-hop address corresponding to the value of the Idx field, to obtain an address of node R. Node B determines a position of multicast routing information of node R in multicast packet 1 (the 18th to 76th bits in the multicast information of node B) based on the length of the first field, a length of a multicast routing identifier of node B, and a total length of multicast routing information of node B that is indicated by the first field, extracts the multicast routing information of node R based on the position, performs multicast encapsulation to obtain multicast packet 2, and sends multicast packet 2 to node R. For a structure of multicast information of node R in multicast packet 2, refer to FIG. 26(b). A length of the multicast routing information of node R is 59. Therefore, when encapsulating multicast packet 2, node B may add a first field and a second field, where a value of the first field is 59, and a length of the second field is 5 bits. Multicast packet 2 may further include unicast encapsulation. A source address in the unicast encapsulation is an address of node B, and a destination address is an address of node R.

**Table 39: Multicast forwarding table of node B**

| Node index | Next-hop address |
| --- | --- |
| 0 | Address of node 1 |
| 1 | Address of node R |

It should be noted that because node R has two subtrees, that is, node R has two non-leaf subnodes, a position of multicast routing information of one non-leaf subnode may be indicated by an addressing field of node R in multicast packet 2, and a position of multicast routing information of the other non-leaf subnode may be obtained through calculation based on a length indicated by the first field in multicast packet 2, a length indicated by the addressing field of node R, and a length of another field.

(102) Node R receives and parses multicast packet 2, determines the position of the Cnt field (the 9th to 16th bits in the multicast information of node R) based on the length of the first field and the length of the Cnt field, determines, based on a value at the position, that the value of the Cnt field is 2, learns that there are two Idx fields subsequently (that is, node R has two subnodes), determines positions of the two Idx fields based on lengths of the Idx fields (a position of the first Idx field is the 17th and 18th bits in the multicast information of node R, and a position of the second Idx field is the 19th and 20th bits in the multicast information of node R), determines, based on values at the positions, that a value of the first Idx field is 1 and that a value of the second Idx field is 2, and looks up a multicast forwarding table (referring to the following Table 40) of node R for a next-hop address corresponding to the values of the Idx fields, to obtain addresses of node S and node E.

**Table 40: Multicast forwarding table of node R**

| Node index | Next-hop address |
|---|---|
| 0 | Address of node B |
| 1 | Address of node S |
| 2 | Address of node E |

(103) Node R determines a position (the 29th to 58th bits in the multicast information of node R) of multicast routing information of node S in multicast packet 2 based on the length of the first field, a length of a multicast routing identifier of node R, the length of the addressing field of node R, the length of the multicast routing information of node S indicated by the addressing field of node R, and a total length of the multicast routing information of node R indicated by the first field, extracts the multicast routing information of node S based on the position, performs multicast encapsulation to obtain multicast packet 3, and sends multicast packet 3 to node S. For a structure of multicast information of node S in multicast packet 3, refer to FIG. 26(c). A length of the multicast routing information of node S is 30. Therefore, when encapsulating multicast packet 3, node R may add a first field and a second field, where a value of the first field is 30, and a length of the second field is 2 bits. Multicast packet 3 may further include unicast encapsulation. A source address in the unicast encapsulation is an address of node R, and a destination address is an address of node S.

It should be noted that node C has only one subnode, that is, node 2, and node 2 is a leaf node; and node D has only one subnode, that is, node 3, and node 3 is a leaf node. In this case, quantities of Idx fields of node C and node D do not change, and both are 1. Therefore, node S may statically maintain lengths of Idx fields of node C and node D. In this case, multicast packet 3 may not include an addressing field of node S.

(104) Node R determines a position (the 59th to 67th bits in the multicast information of node R) of multicast routing information of node E in multicast packet 2 based on the length of the first field, the length of the multicast routing identifier of node R, the length of the addressing field of node R, the length of the multicast routing information of node S indicated by the addressing field of node R, and the total length of the multicast routing information of node R indicated by the first field, extracts the multicast routing information of node E based on the position, performs multicast encapsulation to obtain multicast packet 4, and sends multicast packet 4 to node E. For a structure of multicast information of node E in multicast packet 4, refer to FIG. 26(d). A length of the multicast routing information of node E is 9. Therefore, when encapsulating multicast packet 4, node R may add a first field and a second field, where a value of the first field is 9, and a length of the second field is 7 bits. Multicast packet 4 may further include unicast encapsulation. A source address in the unicast encapsulation is an address of node R, and a destination address is an address of node E.

(105) Node S receives and parses multicast packet 3, determines the position of the Cnt field (the 9th to 16th bits in the multicast information of node S) based on the length of the first field and the length of the Cnt field, determines, based on a value at the position, that the value of the Cnt field is 2, learns that there are two Idx fields subsequently (that is, node S has two subnodes), determines positions of the two Idx fields based on lengths of the Idx fields (a position of the first Idx field is the 17th and 18th bits in the multicast information of node S, and a position of the second Idx field is the 19th and 20th bits in the multicast information of node S), determines, based on values at the positions, that a value of the first Idx field is 1 and that a value of the second Idx field is 2, and looks up a multicast forwarding table (referring to the following Table 41) of node S for a next-hop address corresponding to the values of the Idx fields, to obtain addresses of node C and node D.

**Table 41: Multicast forwarding table of node S**

| Node index | Next-hop address |
|---|---|
| 0 | Address of node R |

(continued)

| Node index | Next-hop address |
|---|---|
| 1 | Address of node C |
| 2 | Address of node D |

(106) Node S determines a position of multicast routing information of node C in multicast packet 3 (the 21st to 29th bits in the multicast information of node S) based on the length of the first field, a length of a multicast routing identifier of node S, and a statically maintained length (that is, 9) of the multicast routing information of node C, extracts the multicast routing information of node C based on the position, performs multicast encapsulation to obtain multicast packet 5, and sends multicast packet 5 to node C. For a structure of multicast information of node C in multicast packet 5, refer to FIG. 26(e). The length of the multicast routing information of node C is 9. Therefore, when encapsulating multicast packet 5, node S may add a first field and a second field, where a value of the first field is 9, and a length of the second field is 7 bits. Multicast packet 5 may further include unicast encapsulation. A source address in the unicast encapsulation is an address of node S, and a destination address is an address of node C.

(107) Node S determines a position (the 30th to 38th bits in the multicast information of node S) of multicast routing information of node D in multicast packet 3 based on the length of the first field, the length of the multicast routing identifier of node S, the statically maintained length (that is, 9) of the multicast routing information of node C, and a total length of the multicast routing information of node S indicated by the first field, extracts the multicast routing information of node D based on the position, performs multicast encapsulation to obtain multicast packet 6, and sends multicast packet 6 to node D. A structure of multicast information of node D in multicast packet 6 is similar to a structure of the multicast routing information of node C, and may be understood with reference. Details are not described again.

(108) Node C receives and parses multicast packet 5, determines the position of the Cnt field (the 9th to 16th bits in the multicast information of node C) based on the length of the first field and the length of the Cnt field, determines, based on a value at the position, that the value of the Cnt field is 1, learns that there is one Idx field subsequently (that is, node C has one subnode), determines a position of the Idx field (the 17th bit in the multicast information of node C) based on a length of the Idx field, determines, based on a value at the position, that a value of the Idx field is 1, looks up a multicast forwarding table (referring to the following Table 42) of node C for a next-hop address corresponding to the value of the Idx field, to obtain an address of node 2, and sends unicast packet 6 to node 2, where unicast packet 6 includes data in multicast packet 1.

**Table 42: Multicast forwarding table of node C**

| Node index | Next-hop address |
|---|---|
| 0 | Address of node S |
| 1 | Address of node 2 |

Multicast packet processing processes of node D, node E, and node C are similar, and may be understood with reference. Details are not described again.

**Embodiment 2**

In a multicast tree shown in FIG. 25, a first node set corresponding to node B includes two nodes (that is, node 1 and node R). In this case, a bit width of a bit sequence of node B is 2, where the first bit corresponds to node 1, the second bit corresponds to node R, and node R is a subnode of node B. Therefore, values of the two bits are 01. A first node set corresponding to node R includes three nodes (that is, node B, node S, and node E). In this case, a bit width of a bit sequence of node R is 3, where the first bit corresponds to node B, the second bit corresponds to node S, the third bit corresponds to node E, and node S and node E are subnodes of node R. Therefore, values of the three bits are 011. A first node set corresponding to node S includes three nodes (that is, node R, node C, and node D). In this case, a bit width of a bit sequence of node S is 3, where the first bit corresponds to node R, the second bit corresponds to node C, the third bit corresponds to node D, and node C and node D are subnodes of node S. Therefore, values of the three bits are 011. A first node set corresponding to node C includes two nodes (that is, node S and node 2). In this case, a bit width of a bit sequence of node C is 2, where the first bit corresponds to node S, the second bit corresponds to node 2, and node 2 is a subnode of node C. Therefore, values of the two bits are 01. A first node set corresponding to node D includes two nodes (that is, node S and node 3). In this case, a bit width of a bit sequence of node D is 3, where the first bit corresponds to node S, the second bit corresponds to node 3, and node 3 is a subnode of node D.

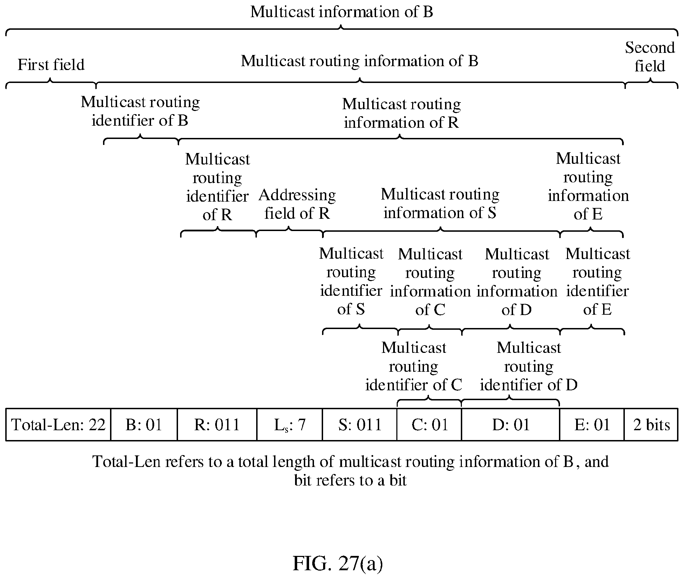

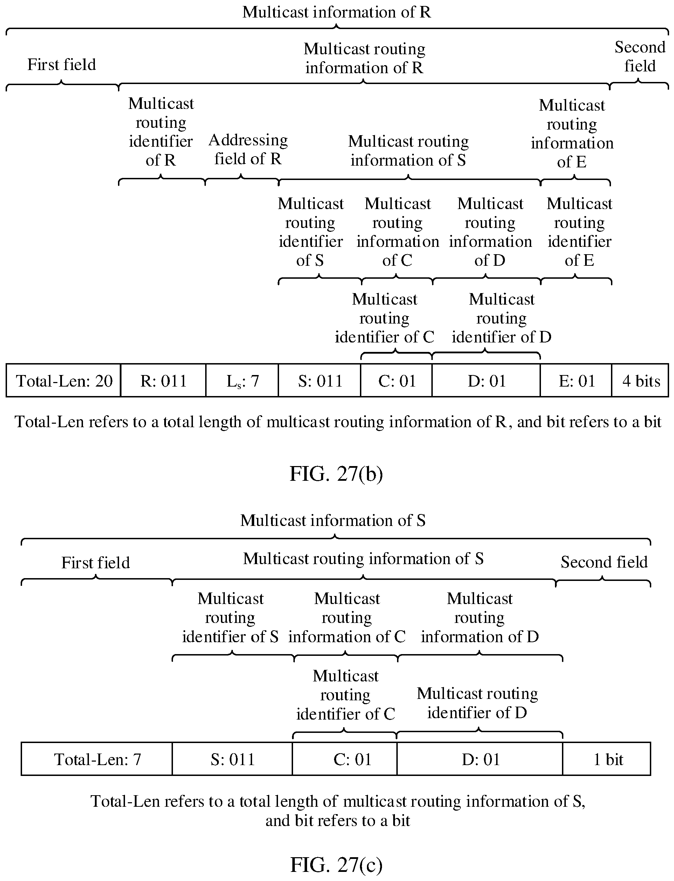

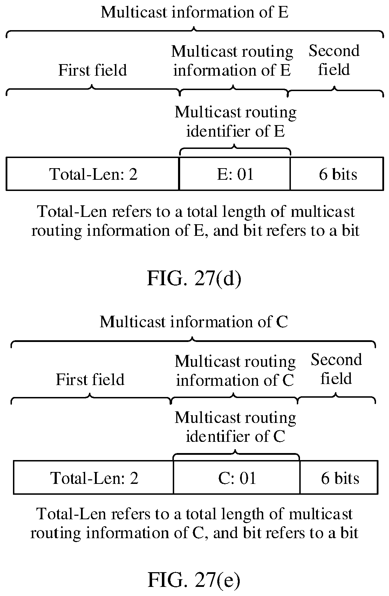

Therefore, values of the two bits are 01. A first node set corresponding to node E includes two nodes (that is, node R and node 4). In this case, a bit width of a bit sequence of node E is 2, where the first bit corresponds to node R, the second bit corresponds to node 4, and node 4 is a subnode of node E. Therefore, values of the two bits are 01. It is assumed that a bit width of a first field is 1 byte. For a multicast packet (denoted as multicast packet 1) sent by node 1 to node B, refer to FIG. 27(a). In FIG. 27(a), FIG. 27(b), FIG. 27(c), FIG. 27(d), and FIG. 27(e), for any field except the first field, a second field, and an addressing field of node R, a letter before ":" represents a node corresponding to the field, and a value after ":" represents a bit sequence corresponding to the field; and in the addressing field of node R, Ls before ":" refers to a length of multicast routing information of node S, a value after ":" indicates a value of this field, and a bit width of Ls is 1 byte.

It should be noted that, because node B has only one subtree, that is, node B has only one non-leaf subnode, a position of multicast routing information of the non-leaf subnode may be obtained through calculation by using a length indicated by the first field and a length of another field. Therefore, multicast packet 1 may not carry an addressing field of node B. Based on multicast packet 1 received by node B, a process in which each node in the multicast tree sends the multicast packet is as follows:

(111) Node B parses multicast packet 1, determines a position of a bit sequence (the 9th and 10th bits in multicast information of node B) based on a length of a first field and a length of the bit sequence, determines, based on the position, that a value of the bit sequence is 01, and looks up a multicast forwarding table (referring to the following Table 43) of node B for a next-hop address corresponding to a value of a bit (that is, the second bit) that is not 0, to obtain an address of node R. Node B determines a position of multicast routing information of node R in multicast packet 1 (the 11th to 30th bits in the multicast information of node B) based on the length of the first field, a length of a multicast routing identifier of node B, and a total length of multicast routing information of node B that is indicated by the first field, extracts the multicast routing information of node R based on the position, performs multicast encapsulation to obtain multicast packet 2, and sends multicast packet 2 to node R. For a structure of multicast information of node R in multicast packet 2, refer to FIG. 27(b). A length of the multicast routing information of node R is 20. Therefore, when encapsulating multicast packet 2, node B may add a first field and a second field, where a value of the first field is 20, and a length of the second field is 4 bits. Multicast packet 2 may further include unicast encapsulation. A source address in the unicast encapsulation is an address of node B, and a destination address is an address of node R.

**Table 43: Multicast forwarding table of node B**

| Bit in a bit sequence | Next-hop address |
| --- | --- |
| First | Address of node 1 |
| Second | Address of node R |

It should be noted that because node R has two subtrees, that is, node R has two non-leaf subnodes, a position of multicast routing information of one non-leaf subnode may be indicated by an addressing field of node R in multicast packet 2, and a position of multicast routing information of the other non-leaf subnode may be obtained through calculation based on a length indicated by the first field in multicast packet 2, a length indicated by the addressing field of node R, and a length of another field.

(112) Node R receives and parses multicast packet 2, determines the position of the bit sequence (the 9th to 11th bits in the multicast information of node R) based on the length of the first field and the length of the bit sequence, determines, based on the position, that a value of the bit sequence is 011, and looks up a multicast forwarding table (referring to the following Table 44) of node R for next-hop addresses corresponding to bits (that is, the second bit and the third bit) that are not 0, to obtain addresses of node S and node E.

**Table 44: Multicast forwarding table of node R**

| Bit in a bit sequence | Next-hop address |
| --- | --- |
| First | Address of node B |
| Second | Address of node S |
| Third | Address of node E |

(113) Node R determines a position (the 20th to 26th bits in the multicast information of node R) of multicast routing information of node S in multicast packet 2 based on the length of the first field, a length of a multicast routing identifier of node R, the length of the addressing field of node R, a length of the multicast routing information of node S indicated by the addressing field of node R, and a total length of the multicast routing information of node R indicated by the first field, extracts the multicast routing information of node S based on the position, performs multicast encapsulation to obtain multicast packet 3, and sends multicast packet 3 to node S. For a structure of multicast information of node S in multicast packet 3, refer to FIG. 27(c). A length of the multicast routing information of node S is 7. Therefore, when encapsulating multicast packet 3, node R may add a first field and a second field, where a value of the first field is 7, and a length of the second field is 1 bit. Multicast packet 3 may further include unicast encapsulation. A source address in the unicast encapsulation is an address of node R, and a destination address is an address of node S.

It should be noted that a first node set corresponding to node C and node D includes only two nodes and that one of the two nodes is a leaf node. Therefore, bit widths of multicast routing identifiers of node C and node D do not change, and both are 2. Therefore, node S may statically maintain the bit widths of the multicast routing identifiers of node C and node D. In this case, multicast packet 3 may not include an addressing field of node S.

(114) Node R determines a position (the 27th and 28th bits in the multicast information of node R) of multicast routing information of node E in multicast packet 2 based on the length of the first field, the length of the multicast routing identifier of node R, the length of the addressing field of node R, the length of the multicast routing information of node S indicated by the addressing field of node R, and the total length of the multicast routing information of node R indicated by the first field, extracts the multicast routing information of node E based on the position, performs multicast encapsulation to obtain multicast packet 4, and sends multicast packet 4 to node E. For a structure of multicast information of node E in multicast packet 4, refer to FIG. 27(d). A length of the multicast routing information of node E is 2. Therefore, when encapsulating multicast packet 4, node R may add a first field and a second field, where a value of the first field is 2, and a length of the second field is 6 bits. Multicast packet 4 may further include unicast encapsulation. A source address in the unicast encapsulation is an address of node R, and a destination address is an address of node E.

(115) Node S receives and parses multicast packet 3, determines the position of the bit sequence (the 9th to 11th bits in the multicast information of node S) based on the length of the first field and the length of the bit sequence, determines, based on the position, that the value of the bit sequence is 011, and looks up a multicast forwarding table (referring to the following Table 45) of node S for next-hop addresses corresponding to bits (that is, the second bit and the third bit) that are not 0, to obtain addresses of node C and node D.

**Table 45: Multicast forwarding table of node S**

| Bit in a bit sequence | Next-hop address |
| --- | --- |
| First | Address of node R |
| Second | Address of node C |
| Third | Address of node D |

(116) Node S determines a position of multicast routing information of node C in multicast packet 3 (the 12th and 13th bits in the multicast information of node S) based on the length of the first field, a length of a multicast routing identifier of node S, and a total length of the multicast routing information of node S that is indicated by the first field, extracts the multicast routing information of node C based on the position, performs multicast encapsulation to obtain multicast packet 5, and sends multicast packet 5 to node C. For a structure of multicast information of node C in multicast packet 5, refer to FIG. 27(e). A length of the multicast routing information of node C is 2. Therefore, when encapsulating multicast packet 5, node S may add a first field and a second field, where a value of the first field is 2, and a length of the second field is 6 bits. Multicast packet 5 may further include unicast encapsulation. A source address in the unicast encapsulation is an address of node S, and a destination address is an address of node C.

(117) Node S determines a position (the 14th and 15th bits in the multicast information of node S) of multicast routing information of node D in multicast packet 3 based on the length of the first field, the length of the multicast routing identifier of node S, and the total length of the multicast routing information of node S that is indicated by the first field, extracts the multicast routing information of node D based on the position, performs multicast encapsulation to obtain multicast packet 6, and sends multicast packet 6 to node D. A structure of multicast information of node D in multicast packet 6 is similar to a structure of the multicast routing information of node C, and may be understood with reference. Details are not described again.

(118) Node C receives and parses multicast packet 5, determines the position of the bit sequence (the 9th and 10th bits in the multicast information of node C) based on the length of the first field and the length of the bit sequence, determines, based on the position, that the value of the bit sequence is 01, and looks up a multicast forwarding table (referring to the following Table 46) of node C for a next-hop address corresponding to a bit (that is, the second bit) that is not 0, to obtain an address of node 2, and sends unicast packet 6 to node 2, where unicast packet 6 includes data in multicast packet 1.

**Table 46: Multicast forwarding table of node C**

| Bit in a bit sequence | Next-hop address |
| --- | --- |
| First | Address of node S |
| Second | Address of node 2 |

Multicast packet processing processes of node D, node E, and node C are similar, and may be understood with reference. Details are not described again.

**Embodiment 3**

In a multicast tree shown in (a) in FIG. 28, a multicast source is node 1, and multicast destination nodes include node O, node Q, node S, node X, node Y, node U, node V, node G, and node H. Entity A, entity B, entity C, entity D, and entity E form node D1. For topological connections between entities in node D1 and between an entity in node D1 and another entity outside node D1, refer to FIG. 21. Entity F, entity G, and entity H form node D2. For a topological connection between entities in node D2, refer to (b) in FIG. 28. Entity F in node D2 is topologically connected to node 5.

A first node set corresponding to node 3 includes two nodes (that is, node 1 and node 5). In this case, a bit width of a bit sequence of node 3 is 2, where the first bit corresponds to node 1, the second bit corresponds to node 5, and node 5 is a subnode of node 3. Therefore, values of the two bits are 01.

A first node set corresponding to node 5 includes three nodes (that is, node 3, node D1, and node D2). In this case, a bit width of a bit sequence of node 5 is 3, where the first bit corresponds to node 3, the second bit corresponds to node D1, the third bit corresponds to node D2, and node D1 and node D2 are subnodes of node 5. Therefore, values of the three bits are 011.

A first node set corresponding to node D1 includes five nodes (that is, node A, node B, node C, node D, and node E). In this case, a bit width of a bit sequence of node D1 is 5, and five bits sequentially correspond to node A, node B, node C, node D, and node E. Node A, node C, and node E are subnodes of node D1. Therefore, values of the five bits are 10101.

A first node set corresponding to node A includes three nodes (that is, node O, node P, and node Q). In this case, a bit width of a bit sequence of node A is 3, where the first bit corresponds to node O, the second bit corresponds to node P, the third bit corresponds to node Q, and node O and node Q are subnodes of node A. Therefore, values of the three bits are 101.

A first node set corresponding to node C includes three nodes (that is, node R, node S, and node T). In this case, a bit width of a bit sequence of node C is 3, where the first bit corresponds to node R, the second bit corresponds to node S, the third bit corresponds to node T, and node S and node T are subnodes of node C. Therefore, values of the three bits are 011.

A first node set corresponding to node T includes three nodes (that is, node X, node Y, and node Z). In this case, a bit width of a bit sequence of node T is 3, where the first bit corresponds to node X, the second bit corresponds to node Y, the third bit corresponds to node Z, and node X and node Y are subnodes of node T. Therefore, values of the three bits are 110.

A first node set corresponding to node E includes three nodes (that is, node U, node V, and node W). In this case, a bit width of a bit sequence of node E is 3, where the first bit corresponds to node U, the second bit corresponds to node V, the third bit corresponds to node W, and node U and node V are subnodes of node E. Therefore, values of the three bits are 110.

A first node set corresponding to node D2 includes three nodes (that is, node F, node G, and node H). In this case, a bit width of a bit sequence of node D2 is 3, where the first bit corresponds to node F, the second bit corresponds to node G, the third bit corresponds to node H, and node G and node H are subnodes of node D2. Therefore, values of the three bits are 011.

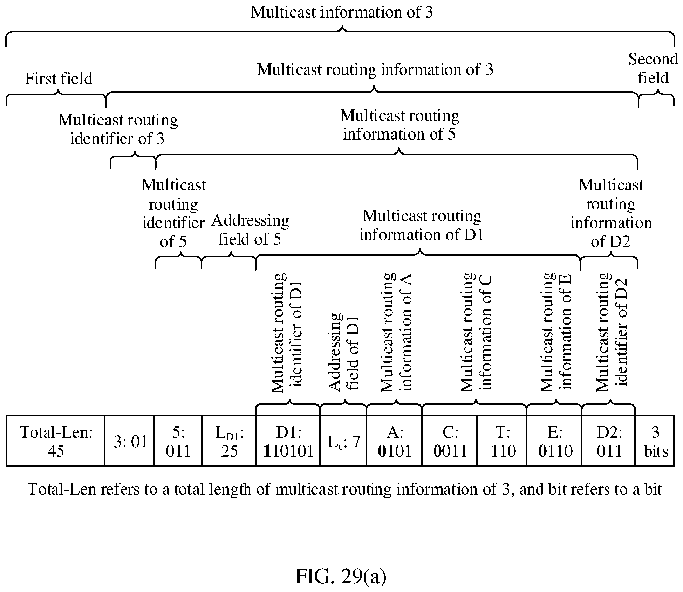

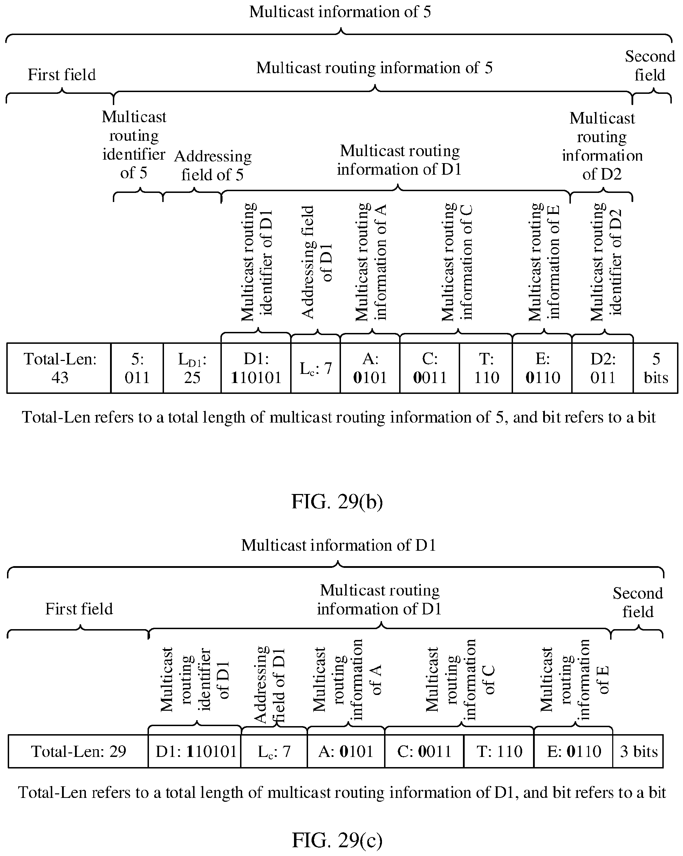

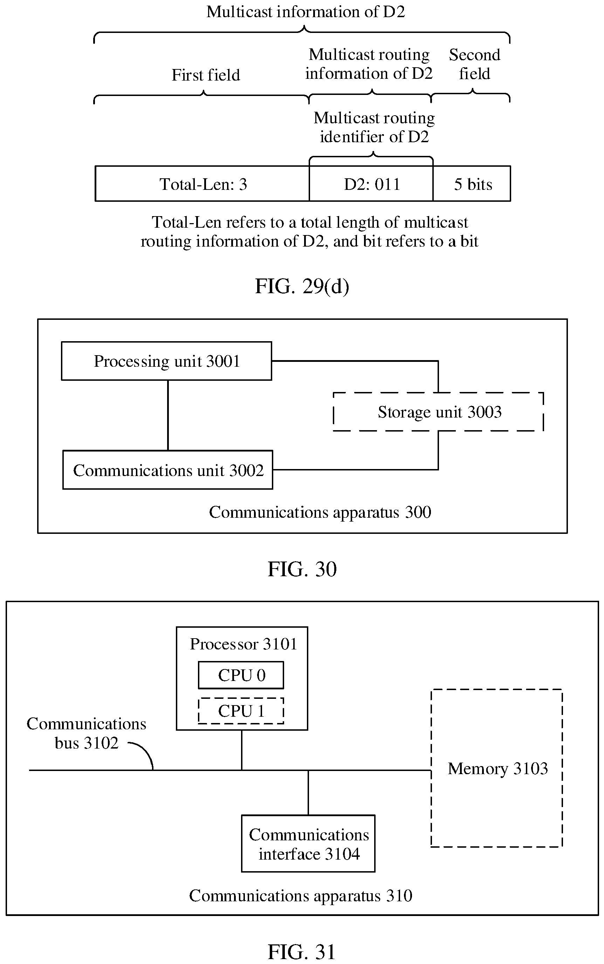

It is assumed that a bit width of a first field is 1 byte. For a multicast packet (denoted as multicast packet 1) sent by node 1 to node B, refer to FIG. 29(a). In FIG. 29(a), FIG. 29(b), FIG. 29(c), and FIG. 29(d), for any field except the first field, a second field, an addressing field of node 5, and an addressing field of node D1, a letter before ":" represents a node corresponding to the field, and a value after ":" represents a bit sequence corresponding to the field; in the addressing field of node 5, $L_{D1}$ before ":" refers to a length of multicast routing information of node D1, a value after ":" indicates a value of the field, and a bit width of $L_{D1}$ is 1 byte; and in the addressing field of node D1, Lc before ":" refers to an addressing field of node C, a value after ":" indicates a value of the field, and a bit width of Lc is 1 byte.

It should be noted that, because node 3 has only one subtree, that is, node 3 has only one non-leaf subnode, a position of multicast routing information of the non-leaf subnode may be obtained through calculation by using a length indicated by the first field and a length of another field. Therefore, multicast packet 1 may not carry an addressing field of node 3. Based on multicast packet 1 generated by node 1, a process in which each node in the multicast tree sends the multicast packet is as follows:

(121) Node 1 sends multicast packet 1 to node 3. Node 3 receives and parses multicast packet 1, determines a position of a bit sequence (the 9th and 10th bits in multicast information of node 3) based on a length of a first field and a length of the bit sequence, determines, based on the position, that a value of the bit sequence is 01, and looks up a multicast forwarding table (referring to the following Table 47) of node 3 for a next-hop address corresponding to a value of a bit (that is, the second bit) that is not 0, to obtain an address of node 5. Node 3 determines a position of multicast routing information of node 5 in multicast packet 1 (the 11th to 53rd bits in the multicast information of node 3) based on the length of the first field, the length of the bit sequence of node 3, and a total length of multicast routing information of node 3 that is indicated by the first field, extracts the multicast routing information of node 5 based on the position, performs multicast encapsulation to obtain multicast packet 2, and sends multicast packet 2 to node 5. For a structure of multicast information of node 5 in multicast packet 2, refer to FIG. 29(b). A length of the multicast routing information of node 5 is 43. Therefore, when encapsulating multicast packet 2, node 3 may add a first field and a second field, where a value of the first field is 43, and a length of the second field is 5 bits. Multicast packet 2 may further include unicast encapsulation. A source address in the unicast encapsulation is an address of node 3, and a destination address is an address of node 5.

**Table 47: Multicast forwarding table of node 3**

| Bit in a bit sequence | Next-hop address |
| --- | --- |
| First | Address of node 1 |
| Second | Address of node 5 |

(122) Node 5 receives and parses multicast packet 2, determines the position of the bit sequence (the 9th to 11th bits in the multicast information of node 5) based on the length of the first field and the length of the bit sequence, determines, based on the position, that a value of the bit sequence is 011, and looks up a multicast forwarding table (referring to the following Table 48) of node 5 for next-hop addresses corresponding to bits (that is, the second bit and the third bit) that are not 0, to obtain addresses of entity A and entity F.

**Table 48: Multicast forwarding table of node 5**

| Bit in a bit sequence | Next-hop address |
| --- | --- |
| First | Address of node 3 |
| Second | Address of entity A |
| Third | Address of entity F |

(123) Node 5 determines a position (the 20th to 48th bits in the multicast information of node 5) of multicast routing information of node D 1 in multicast packet 2 based on the length of the first field, the length of the bit sequence of node 5, a length of an addressing field of node 5, a length of the multicast routing information of node D1 indicated by the addressing field of node 5, and a total length of the multicast routing information of node 5 indicated by the first field, extracts the multicast routing information of node D1 based on the position, performs multicast encapsulation to obtain multicast packet 3, and sends multicast packet 3 to entity A. For a structure of multicast information of node D1 in multicast packet 3, refer to FIG. 29(c). A length of the multicast routing information of node D1 is 29. Therefore, when encapsulating multicast packet 3, node 5 may add a first field and a second field, where a value of the first field is 29, and a length of the second field is 3 bits. Multicast packet 3 may further include unicast encapsulation. A source address in the unicast encapsulation is an address of node 5, and a destination address is an address of entity A in node D1.

(124) Entity A in node D1 receives multicast packet 3, and forwards the multicast packet. For a specific process, refer to the foregoing step (51) to step (59). It may be understood that the multicast packet A is replaced with multicast packet 3.

(125) Node 5 determines a position (the 49th to 51st bits in the multicast information of node 5) of multicast routing information of node D2 in multicast packet 2 based on the length of the first field, a length of a multicast routing identifier of node 5, the length of the addressing field of node 5, the length of the multicast routing information of node D1 indicated by the addressing field of node 5, and the total length of the multicast routing information of node 5 indicated by the first field, extracts the multicast routing information of node D2 based on the position, performs multicast encapsulation to obtain multicast packet 4, and sends multicast packet 4 to entity F. For a structure of multicast information of node D2 in multicast packet 4, refer to FIG. 29(d). A length of the multicast routing information of node D2 is 3. Therefore, when encapsulating multicast packet 4, node 5 may add a first field and a second field, where a value of the first field is 3, and a length of the second field is 5 bits. Multicast packet 4 may further include unicast encapsulation. A source address in the unicast encapsulation is an address of node 5, and a destination address is an address of entity F in node D2.

(126) Entity F in node D2 receives and parses multicast packet 4, determines the position of the bit sequence (the $9^{th}$ to $11^{th}$ bits in the multicast information of node D2) based on the length of the first field and the length of the bit sequence, determines, based on the position, that a value of the bit sequence is 011, and looks up a multicast forwarding table (referring to the following Table 49) of node D2 for next-hop addresses corresponding to bits (that is, the second bit and the third bit) that are not 0, to obtain an address of entity G and an address of entity H, and sends unicast packet 5 to entity G and entity H, where unicast packet 5 includes data in multicast packet 1.

**Table 49: Multicast forwarding table of node D2**

| Bit in a bit sequence | Next-hop address |
| --- | --- |
| First | Address of entity F |
| Second | Address of entity G |
| Third | Address of entity H |

In the foregoing embodiment, the method provided in this application is described by using an example in which the multicast packet does not include a type field. If a current node supports a plurality of types of multicast routing identifiers, the multicast packet may include a type field, and the node may parse the type field to obtain a type of the multicast routing identifier, and identify the multicast routing identifier based on the type of the multicast routing identifier.

In the foregoing embodiments, a bit width of any field in the multicast packet is an example. In actual implementation, the bit width of any field may not be byte-aligned, or may be byte-aligned (for example, the field is 1 byte, 2 bytes, or more bytes). This is not limited in this application.

In the foregoing embodiments, after receiving a multicast packet, a node (or an entity in the node) may determine, according to an indication of a field in outer encapsulation, whether a packet header of the multicast packet includes multicast encapsulation. If a destination address in the outer encapsulation is an address of the node (or the entity), and it is determined that the packet header of the multicast packet includes the multicast encapsulation, the node (or the entity) may remove the outer encapsulation to obtain the multicast encapsulation, and perform corresponding processing on the multicast packet based on the multicast encapsulation.

In the foregoing embodiments, before sending a multicast packet to a plurality of nodes (or entities), a node (or an entity) may replicate the received multicast packet, and send N-1 copies of the multicast packet to N nodes (or entities), and edit the replicated multicast packet and the received multicast packet to obtain multicast packets that need to be sent. If the multicast packet is sent to only one node (or entity), the multicast packet may not be replicated, and the received multicast packet is directly edited. When a node (or an entity) replicates a multicast packet, the node (or entity) may replicate all multicast packets at a time, and then edit and send the multicast packets in parallel. Alternatively, one multicast packet may be replicated at a time, and the multicast packet may be edited and sent.

In this application, in the multicast packets shown in (a) in FIG. 13, (b) in FIG. 13, (a) in FIG. 14, (b) in FIG. 14, FIG. 22(b), FIG. 22(c), FIG. 22(d), FIG. 22(e), FIG. 23(b), FIG. 23(c), FIG. 23(d), FIG. 24A(b), FIG. 24A(c), FIG. 24A(d), (a) in FIG. 24B, (b) in FIG. 24B, (c) in FIG. 24B, (a) in FIG. 24C, (b) in FIG. 24C, (c) in FIG. 24C, FIG. 26(a), FIG. 26(b), FIG. 26(c), FIG. 26(d), FIG. 26(e), FIG. 27(a), FIG. 27(b), FIG. 27(c), FIG. 27(d), FIG. 27(e), FIG. 29(a), FIG. 29(b), FIG. 29(c), and FIG. 29(d), the part before ":" is a mnemonic symbol, and there is no mnemonic symbol or ":" in an actual packet. In the accompanying drawings of this application, positions of the fields are merely examples. In actual implementation, positions of some fields may be different from those in the figures. This is not limited in this application.

It should be noted that, in the description of embodiments of this application, that a node (or an entity) sends a multicast packet to another node (or entity) means that a source address of the multicast packet is an address of the node (or entity), and that a destination address of the multicast packet is an address of the another node (or entity). In the foregoing embodiments of this application, a meaning indicated when a value of any bit (which may be a single bit or may be a bit in a bit sequence) is 1 may also be represented by 0, and a meaning indicated when a value of any bit is 0 may also be represented by 1. This is not limited. For example, in the foregoing embodiments, when a value of a bit in the bit sequence is 1, it indicates that the bit is a subnode of node D1, or when a value of the bit is 0, it indicates that the bit is not a subnode of node D1. In actual implementation, when a value of a bit in the bit sequence is 0, it indicates that the bit is a subnode of node D1, or when a value of the bit is 1, it indicates that the bit is not a subnode of node D1. Other bits are similar, and are not described one by one.

EP 4 300 913 A1

The solutions provided in embodiments of this application have been described above mainly from a perspective of the method. It may be understood that, to implement the foregoing functions, the node or entity includes at least one of a corresponding hardware structure and a software module for performing each function. A person skilled in the art should be easily aware that units and algorithm steps in the examples described with reference to embodiments disclosed in this specification can be implemented by hardware or a combination of hardware and computer software in this application. Whether a function is performed by hardware or by driving hardware by computer software depends on particular applications and design constraints of the technical solutions. A person skilled in the art may use different methods to implement the described functions for each particular application, but it should not be considered that the implementation goes beyond the scope of this application.

In embodiments of this application, the node or entity may be divided into functional units based on the foregoing method examples. For example, the functional units may be obtained through division in a one-to-one correspondence with the functions, or two or more functions may be integrated into one processing unit. The integrated unit may be implemented in a form of hardware, or may be implemented in a form of a software functional unit. It should be noted that the unit division in embodiments of this application is an example, and is merely logical function division. There may be another division manner in an actual implementation.

For example, FIG. 30 is a possible schematic diagram of a structure of a communications apparatus (denoted as a communications apparatus 300) in the foregoing embodiment. The communications apparatus 300 includes a processing unit 3001 and a communications unit 3002. Optionally, the communications apparatus further includes a storage unit 3003. The communications apparatus 300 may be configured to show a structure of a node or an entity in the foregoing embodiment. When the schematic diagram of the structure shown in FIG. 30 is used to show the structure of the first node in the foregoing embodiment, the processing unit 3001 is configured to control and manage actions of the first node. For example, the processing unit 3001 is configured to perform steps 601 and 602 in FIG. 6, steps 1901 to 1904 in FIG. 19, and/or actions performed by the first node in another process described in embodiments of this application. The processing unit 3001 may communicate with another node or entity by using the communications unit 3002, for example, communicate with the second node in FIG. 6. The storage unit 3003 is configured to store program code and data of the first node.

When the schematic diagram of the structure shown in FIG. 30 is used to show the structure of the second node in the foregoing embodiment, the processing unit 3001 is configured to control and manage actions of the second node. For example, the processing unit 3001 is configured to perform step 602 in FIG. 6, step 1904 in FIG. 19, and/or actions performed by the second node in another process described in embodiments of this application. The processing unit 3001 may communicate with another node or entity by using the communications unit 3002, for example, communicate with the first node in FIG. 6. The storage unit 3003 is configured to store program code and data of the second node.

When the schematic diagram of the structure shown in FIG. 30 is used to show the structure of the first entity in the foregoing embodiment, the processing unit 3001 is configured to control and manage actions of the first entity. For example, the processing unit 3001 is configured to perform steps 2001 to 2003 in FIG. 20, and/or actions performed by the first entity in another process described in embodiments of this application. The processing unit 3001 may communicate with another node or entity by using the communications unit 3002, for example, communicate with the second entity. The storage unit 3003 is configured to store program code and data of the first entity.

When the schematic diagram of the structure shown in FIG. 30 is used to show the structure of another entity or node in the foregoing embodiment, the processing unit 3001 is configured to control and manage actions of the node or entity. The node or entity is configured to perform actions performed by the node or entity in the process described in embodiments of this application. For example, the communications apparatus 300 may be a device, or may be a chip or a chip system.

When the communications apparatus 300 is a device, the processing unit 3001 may be a processor, and the communications unit 3002 may be a communications interface, a transceiver, an input interface, and/or an output interface. Optionally, the transceiver may be a transceiver circuit. Optionally, the input interface may be an input circuit, and the output interface may be an output circuit.

When the communications apparatus 300 is a chip or a chip system, the processing unit 3001 may be a processor, a processing circuit, a logic circuit, or the like. The communications unit 3002 may be a communications interface, an input interface and/or an output interface, an interface circuit, an output circuit, an input circuit, a pin, a related circuit, or the like in the chip or the chip system. When the integrated unit in FIG. 30 is implemented in the form of a software functional module and sold or used as an independent product, the integrated unit may be stored in a computer-readable storage medium. Based on such an understanding, the technical solutions of embodiments of this application essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) or a processor (processor) to perform all or a part of the steps of the methods in embodiments of this application. The storage medium that stores the computer software product includes any medium that can store program code, such as a USB flash drive, a removable hard disk, a read-only memory (read-only memory, ROM), a random access memory (random access memory, RAM), a magnetic disk, or an optical disc.

When the processing unit 3001 is a processor, and the communications unit 3002 is a communications interface, and the storage unit 3003 is a memory, the communications apparatus in this embodiment of this application may be the communications apparatus 310 shown in FIG. 31.

FIG. 31 is a schematic diagram of a hardware structure of a communications apparatus according to an embodiment of this application. The communications apparatus may be a node or an entity in this specification. The communications apparatus 310 includes at least one processor 3101, a communications bus 3102, and at least one communications interface 3104. Optionally, the communications apparatus further includes a memory 3103. FIG. 31 is drawn by using an example in which the communications apparatus 310 includes one processor 3101 and one communications interface 3104.

The processor 3101, the communications interface 3104, and the memory 3103 may be connected by using a communications bus 3102 to implement mutual communication and transfer a control signal and/or a data signal. The memory 3103 is configured to store a computer program. The processor 3101 is configured to invoke the computer program from the memory 3103 and run the computer program, to control the communications interface 3104 to receive and send signals.

In a first possible implementation, the processor 3101 may be a central processing unit (central processing unit, CPU), a microprocessor, an application-specific integrated circuit (application-specific integrated circuit, ASIC), or one or more integrated circuits configured to control program execution in the solution of this application. The communications interface 3104 may be any transceiver-type apparatus.

In a second possible implementation, the processor 3101 may be a logic circuit, and the communications interface 3104 may include an input interface and/or an output interface.

The communications interface 3104 uses any apparatus such as a transceiver, and is configured to communicate with another device or a communications network.

The memory 3103 may be a ROM, another type of static storage device that can store static information and instructions, a RAM, or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium that can be configured to carry or store expected program code in a form of an instruction or a data structure and that can be accessed by a computer. However, the memory 3103 is not limited thereto. The memory may exist independently, and is connected to the processor by using the communications bus 3102. Alternatively, the memory may be integrated with the processor.

The memory 3103 is configured to store the computer-executable instructions for executing the solutions of this application, and the processor 3101 controls execution. The processor 3101 is configured to execute the computer-executable instructions stored in the memory 3103, to implement the method provided in embodiments of this application.

Optionally, the computer-executable instructions in this embodiment of this application may also be referred to as application program code. This is not specifically limited in this embodiment of this application.

When the schematic diagram of the structure shown in FIG. 31 is used to show the structure of the first node in the foregoing embodiment, the processor 3101 is configured to control and manage actions of the first node. For example, the processor 3101 is configured to perform steps 601 and 602 in FIG. 6, steps 1901 to 1904 in FIG. 19, and/or actions performed by the first node in another process described in embodiments of this application. The processor 3101 may communicate with another node or entity by using the communications unit 3104, for example, communicate with the second node in FIG. 6. The memory 3103 is configured to store program code and data of the first node.

When the schematic diagram of the structure shown in FIG. 31 is used to show the structure of the second node in the foregoing embodiment, the processor 3101 is configured to control and manage actions of the second node. For example, the processor 3101 is configured to perform step 602 in FIG. 6, step 1904 in FIG. 19, and/or actions performed by the second node in another process described in embodiments of this application. The processor 3101 may communicate with another node or entity by using the communications interface 3104, for example, communicate with the first node in FIG. 6. The memory 3103 is configured to store program code and data of the second node.

When the schematic diagram of the structure shown in FIG. 31 is used to show the structure of the first entity in the foregoing embodiment, the processor 3101 is configured to control and manage actions of the first entity. For example, the processor 3101 is configured to perform steps 2001 to 2003 in FIG. 20, and/or actions performed by the first entity in another process described in embodiments of this application. The processor 3101 may communicate with another node or entity by using the communications interface 3104, for example, communicate with the second entity. The memory 3103 is configured to store program code and data of the first entity.

When the schematic diagram of the structure shown in FIG. 30 is used to show the structure of another entity or node in the foregoing embodiment, the processing unit 3001 is configured to control and manage actions of the node or entity. The node or entity is configured to perform actions performed by the node or entity in the process described in embodiments of this application. An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a communications system. The communications system includes one or more nodes in the foregoing embodiments, or the communications system includes one or more entities in the foregoing embodiments, or the communications system includes one or more nodes and one or more entities in the foregoing embodiments.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When the computer-executable instructions are loaded and executed on the computer, the processes or functions according to embodiments of this application are all or partially generated. The computer may be a general-purpose computer, a dedicated computer, a computer network, or another programmable apparatus. The computer instructions may be stored in the computer-readable storage medium or may be transmitted from the computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or may be a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, the word "comprise"

(comprising) does not exclude another component or step, and "a" or "one" does not exclude a case of plurality. A single processor or another unit may implement several functions listed in the claims. Some measures are described in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, this specification and accompanying drawings are merely example descriptions of this application defined by the appended claims, and are considered as any of or all modifications, variations, combinations, or equivalents that cover the scope of this application. Apparently, a person skilled in the art can make various changes and variations to this application without departing from the spirit and scope of this application. Therefore, this application is also intended to cover the changes and variations provided that the changes and variations of this application fall within the scope of the claims of this application or equivalent technologies thereof.

**Claims**

1. A multicast packet sending method, comprising:

    obtaining, by a first node, a first multicast packet, wherein the first multicast packet comprises multicast information of a second node, the second node is a non-leaf subnode of the first node in a multicast tree, the multicast information of the second node comprises multicast routing information of the second node, multicast routing information of a node comprises a multicast routing identifier of the node and multicast routing information of a non-leaf subnode of the node in the multicast tree, and a multicast routing identifier of a node is used by the node to determine a subnode of the node in the multicast tree; and
    sending, by the first node, the first multicast packet to the second node.

2. The method according to claim 1, wherein a multicast routing identifier of a node is used by the node to determine, in a first node set corresponding to the node, a subnode of the node in the multicast tree, and the first node set corresponding to the node comprises a part or all of potential subnodes of the node.

3. The method according to claim 1 or 2, wherein a multicast routing identifier of a node comprises subnode quantity information of the node and an identifier of each subnode of the node.

4. The method according to any one of claims 1 to 3, wherein a multicast routing identifier of a node comprises a third field and X fourth fields, the third field indicates a quantity X of subnodes of the node, and one fourth field indicates an identifier of one subnode of the node.

5. The method according to any one of claims 1 to 3, wherein a multicast routing identifier of a node comprises N third fields, N is a quantity of nodes in a first node set corresponding to the node, one third field indicates whether a node in the first node set is a subnode of the node in the multicast tree, and the first node set corresponding to the node comprises a part or all of potential subnodes of the node.

6. The method according to any one of claims 1 to 3, wherein a multicast routing identifier of a node comprises a third field, the third field comprises a first group identifier, the first group identifier indicates a first node group corresponding to the node, and all nodes in the first node group corresponding to the node are subnodes of the node.

7. The method according to any one of claims 1 to 6, wherein multicast routing information of a node further comprises an addressing field of the node, and the addressing field of the node is used by the node to determine a position of multicast routing information of a non-leaf subnode of the node.

8. The method according to claim 7, wherein the addressing field of the node indicates a length of the multicast routing information of the non-leaf subnode of the node; or the addressing field of the node indicates a start position or an end position of the multicast routing information of the non-leaf subnode of the node; or the addressing field of the node comprises a plurality of delimitation fields, and the multicast routing information of the non-leaf subnode of the node is separated by the plurality of delimitation fields.

9. The method according to any one of claims 1 to 8, wherein the multicast information of the second node further comprises a first field of the second node, and the first field indicates a length of the multicast routing information of the second node or a length of the multicast information of the second node.

10. The method according to any one of claims 1 to 9, wherein the multicast information of the second node further comprises a second field, and the second field is used to align bytes of the multicast information of the second node.

11. The method according to any one of claims 1 to 10, wherein the first multicast packet is an Internet protocol IP packet, a destination address in the first multicast packet is an address of the second node, the first multicast packet further comprises data, and the multicast information of the second node in the first multicast packet is located between an IP header and the data of the first multicast packet.

12. The method according to any one of claims 1 to 11, wherein the obtaining, by a first node, a first multicast packet comprises:

   receiving, by the first node, a second multicast packet, wherein the second multicast packet comprises multicast routing information of the first node;
   determining, by the first node, that the second node is a non-leaf subnode of the first node;
   obtaining, by the first node, the multicast routing information of the second node based on the multicast routing information of the first node; and
   performing, by the first node, packet encapsulation based on the multicast routing information of the second node to obtain the first multicast packet.

13. The method according to claim 12, wherein the obtaining, by the first node, the multicast routing information of the second node based on the multicast routing information of the first node comprises:

   determining, by the first node, a position of the multicast routing information of the second node based on an addressing field in the multicast routing information of the first node; and
   obtaining, by the first node, the multicast routing information of the second node based on the position of the multicast routing information of the second node.

14. The method according to any one of claims 1 to 11, wherein the first node is a source node of the multicast tree, and the obtaining, by a first node, a first multicast packet comprises:
generating, by the first node, the first multicast packet.

15. The method according to any one of claims 1 to 11, wherein the first node is a source node of the multicast tree, and the obtaining, by a first node, a first multicast packet comprises:

generating, by the first node, a second multicast packet, wherein the second multicast packet comprises multicast routing information of the first node;
determining, by the first node, that the second node is a non-leaf subnode of the first node;
obtaining, by the first node, the multicast routing information of the second node based on the multicast routing information of the first node; and
performing, by the first node, packet encapsulation based on the multicast routing information of the second node to obtain the first multicast packet.

16. The method according to any one of claims 1 to 15, wherein the first node comprises at least one entity, the second node comprises at least one entity, and the first multicast packet is a multicast packet sent by an entity in the first node to an entity in the second node.

17. The method according to any one of claims 1 to 16, wherein a multicast routing identifier of a node is specifically used by an entity in the node to determine a subnode of the node in the multicast tree.

18. A multicast packet sending method, applied to a first entity, wherein the first entity belongs to a first node, and the method comprises:

receiving, by the first entity, a third multicast packet, wherein the third multicast packet comprises first multicast routing information of the first node, the first multicast routing information of the first node comprises a first multicast routing identifier of the first node and multicast routing information of a non-leaf subnode corresponding to the first multicast routing identifier of the first node, multicast routing information of a node comprises a multicast routing identifier of the node and multicast routing information of a non-leaf subnode of the node in a multicast tree, the multicast routing identifier of the node is used by an entity in the node to determine a subnode of the node in the multicast tree, and the first multicast routing identifier of the first node is the same as a multicast routing identifier of the first node or is obtained by updating a multicast routing identifier of the first node;
determining, by the first entity, a second entity based on the first multicast routing identifier of the first node, wherein the second entity is an entity in the first node; and
sending, by the first entity, a fourth multicast packet to the second entity, wherein the fourth multicast packet comprises second multicast routing information of the first node, the second multicast routing information of the first node comprises a second multicast routing identifier of the first node and multicast routing information of a part or all of non-leaf subnodes corresponding to a third multicast routing identifier of the first node, the third multicast routing identifier of the first node is the same as the first multicast routing identifier of the first node or is obtained by updating the first multicast routing identifier of the first node, and the second multicast routing identifier of the first node is the same as the third multicast routing identifier of the first node or is obtained by updating the third multicast routing identifier of the first node.

19. The method according to claim 18, wherein the determining, by the first entity, a second entity based on the first multicast routing identifier of the first node comprises:
looking up, by the first entity, a multicast forwarding table based on the first multicast routing identifier of the first node to obtain the second entity.

20. The method according to claim 18 or 19, wherein the method further comprises:

determining, by the first entity, a first subnode based on the first multicast routing identifier of the first node, wherein the first subnode is a subnode corresponding to the first entity, among subnodes of the first node in the multicast tree; and
sending, by the first entity, a fifth multicast packet to the first subnode, wherein the fifth multicast packet comprises multicast routing information of the first subnode.

21. The method according to claim 20, wherein the first entity does not belong to the first subnode, and the sending, by the first entity, a fifth multicast packet to the first subnode comprises:

sending, by the first entity, the fifth multicast packet to a third entity in the first subnode.

22. The method according to claim 20 or 21, wherein the first entity belongs to the first subnode, and the method further comprises:

determining, by the first entity, a second subnode based on a multicast routing identifier of the first subnode, wherein the second subnode is a subnode corresponding to the first entity, among subnodes of the first subnode in the multicast tree.

23. The method according to any one of claims 20 to 22, wherein the first entity belongs to the first subnode, the first subnode further comprises a fourth entity, and the method further comprises:
sending, by the first entity, a sixth multicast packet to the fourth entity, wherein the sixth multicast packet comprises first multicast routing information of the first subnode, the first multicast routing information of the first subnode comprises a first multicast routing identifier of the first subnode and multicast routing information of a part or all of non-leaf subnodes corresponding to a second multicast routing identifier of the first subnode, the second multicast routing identifier of the first subnode is the same as a multicast routing identifier of the first subnode or is obtained by updating a multicast routing identifier of the first subnode, and the first multicast routing identifier of the first subnode is the same as the second multicast routing identifier of the first subnode or is obtained by updating the second multicast routing identifier of the first subnode.

24. A first node, comprising a processing unit and a communications unit, wherein

the processing unit is configured to obtain a first multicast packet, wherein the first multicast packet comprises multicast information of a second node, the second node is a non-leaf subnode of the first node in a multicast tree, the multicast information of the second node comprises multicast routing information of the second node, multicast routing information of a node comprises a multicast routing identifier of the node and multicast routing information of a non-leaf subnode of the node in the multicast tree, and a multicast routing identifier of a node is used by the node to determine a subnode of the node in the multicast tree; and
the communications unit is configured to send the first multicast packet to the second node.

25. The first node according to claim 24, wherein a multicast routing identifier of a node is used by the node to determine, in a first node set corresponding to the node, a subnode of the node in the multicast tree, and the first node set corresponding to the node comprises a part or all of potential subnodes of the node.

26. The first node according to claim 24 or 25, wherein a multicast routing identifier of a node comprises subnode quantity information of the node and an identifier of each subnode of the node.

27. The first node according to any one of claims 24 to 26, wherein a multicast routing identifier of a node comprises a third field and X fourth fields, the third field indicates a quantity X of subnodes of the node, and one fourth field indicates an identifier of one subnode of the node.

28. The first node according to any one of claims 24 to 26, wherein a multicast routing identifier of a node comprises N third fields, N is a quantity of nodes in a first node set corresponding to the node, one third field indicates whether a node in the first node set is a subnode of the node in the multicast tree, and the first node set corresponding to the node comprises a part or all of potential subnodes of the node.

29. The first node according to any one of claims 24 to 26, wherein a multicast routing identifier of a node comprises a third field, the third field comprises a first group identifier, the first group identifier indicates a first node group corresponding to the node, and all nodes in the first node group corresponding to the node are subnodes of the node.

30. The first node according to any one of claims 24 to 29, wherein multicast routing information of a node further comprises an addressing field of the node, and the addressing field of the node is used by the node to determine a position of multicast routing information of a non-leaf subnode of the node.

31. The first node according to claim 30, wherein the addressing field of the node indicates a length of the multicast routing information of the non-leaf subnode of the node; or the addressing field of the node indicates a start position or an end position of the multicast routing information of the non-leaf subnode of the node; or the addressing field of the node comprises a plurality of delimitation fields, and the multicast routing information of the non-leaf subnode of the node is separated by the plurality of delimitation fields.

32. The first node according to any one of claims 24 to 31, wherein the multicast information of the second node further comprises a first field of the second node, and the first field indicates a length of the multicast routing information of the second node or a length of the multicast information of the second node.

33. The first node according to any one of claims 24 to 32, wherein the multicast information of the second node further comprises a second field, and the second field is used to align bytes of the multicast information of the second node.

34. The first node according to any one of claims 24 to 33, wherein the first multicast packet is an Internet protocol IP packet, a destination address in the first multicast packet is an address of the second node, the first multicast packet further comprises data, and the multicast information of the second node in the first multicast packet is located between an IP header and the data of the first multicast packet.

35. The first node according to any one of claims 24 to 34, wherein the processing unit is specifically configured to:

receive a second multicast packet by using the communications unit, wherein the second multicast packet comprises multicast routing information of the first node;
determine that the second node is a non-leaf subnode of the first node;
obtain the multicast routing information of the second node based on the multicast routing information of the first node; and
perform packet encapsulation based on the multicast routing information of the second node to obtain the first multicast packet.

36. The first node according to claim 35, wherein the processing unit is specifically configured to:

determine a position of the multicast routing information of the second node based on an addressing field in the multicast routing information of the first node; and
obtain the multicast routing information of the second node based on the position of the multicast routing information of the second node.

37. The first node according to any one of claims 24 to 34, wherein the first node is a source node of the multicast tree, and the processing unit is specifically configured to:
generate the first multicast packet.

38. The first node according to any one of claims 24 to 34, wherein the first node is a source node of the multicast tree, and the processing unit is specifically configured to:

generate a second multicast packet, wherein the second multicast packet comprises multicast routing information of the first node;
determine that the second node is a non-leaf subnode of the first node;
obtain the multicast routing information of the second node based on the multicast routing information of the first node; and
perform packet encapsulation based on the multicast routing information of the second node to obtain the first multicast packet.

39. The first node according to any one of claims 24 to 38, wherein the first node comprises at least one entity, the second node comprises at least one entity, and the first multicast packet is a multicast packet sent by an entity in the first node to an entity in the second node.

40. The first node according to any one of claims 24 to 39, wherein a multicast routing identifier of a node is specifically used by an entity in the node to determine a subnode of the node in the multicast tree.

41. A first entity, wherein the first entity belongs to a first node, and the first entity comprises a communications unit and a processing unit, wherein

the communications unit is configured to receive a third multicast packet, wherein the third multicast packet comprises first multicast routing information of the first node, the first multicast routing information of the first node comprises a first multicast routing identifier of the first node and multicast routing information of a non-leaf subnode corresponding to the first multicast routing identifier of the first node, multicast routing information

52

of a node comprises a multicast routing identifier of the node and multicast routing information of a non-leaf subnode of the node in a multicast tree, the multicast routing identifier of the node is used by an entity in the node to determine a subnode of the node in the multicast tree, and the first multicast routing identifier of the first node is the same as a multicast routing identifier of the first node or is obtained by updating a multicast routing identifier of the first node;

the processing unit is configured to determine a second entity based on the first multicast routing identifier of the first node, wherein the second entity is an entity in the first node; and

the communications unit is further configured to send a fourth multicast packet to the second entity, wherein the fourth multicast packet comprises second multicast routing information of the first node, the second multicast routing information of the first node comprises a second multicast routing identifier of the first node and multicast routing information of a part or all of non-leaf subnodes corresponding to a third multicast routing identifier of the first node, the third multicast routing identifier of the first node is the same as the first multicast routing identifier of the first node or is obtained by updating the first multicast routing identifier of the first node, and the second multicast routing identifier of the first node is the same as the third multicast routing identifier of the first node or is obtained by updating the third multicast routing identifier of the first node.

42. The first entity according to claim 41, wherein
the processing unit is specifically configured to look up a multicast forwarding table based on the first multicast routing identifier of the first node to obtain the second entity.

43. The first entity according to claim 41 or 42, wherein

the processing unit is further configured to determine a first subnode based on the first multicast routing identifier of the first node, wherein the first subnode is a subnode corresponding to the first entity, among subnodes of the first node in the multicast tree; and

the communications unit is further configured to send a fifth multicast packet to the first subnode, wherein the fifth multicast packet comprises multicast routing information of the first subnode.

44. The first entity according to claim 43, wherein the first entity does not belong to the first subnode; and
the communications unit is specifically configured to send the fifth multicast packet to a third entity in the first subnode.

45. The first entity according to claim 43 or 44, wherein the first entity belongs to the first subnode; and
the processing unit is further configured to determine a second subnode based on a multicast routing identifier of the first subnode, wherein the second subnode is a subnode corresponding to the first entity, among subnodes of the first subnode in the multicast tree.

46. The first entity according to any one of claims 43 to 45, wherein the first entity belongs to the first subnode, and the first subnode further comprises a fourth entity; and
the communications unit is further configured to send a sixth multicast packet to the fourth entity, wherein the sixth multicast packet comprises first multicast routing information of the first subnode, the first multicast routing information of the first subnode comprises a first multicast routing identifier of the first subnode and multicast routing information of a part or all of non-leaf subnodes corresponding to a second multicast routing identifier of the first subnode, the second multicast routing identifier of the first subnode is the same as a multicast routing identifier of the first subnode or is obtained by updating a multicast routing identifier of the first subnode, and the first multicast routing identifier of the first subnode is the same as the second multicast routing identifier of the first subnode or is obtained by updating the second multicast routing identifier of the first subnode.

47. A communications apparatus, comprising a processor, wherein
the processor is connected to a memory, the memory is configured to store computer-executable instructions, and the processor executes the computer-executable instructions stored in the memory, so that the communications apparatus implements the method according to any one of claims 1 to 17 or the method according to any one of claims 18 to 23.

48. A computer-readable storage medium, comprising instructions, wherein when the instructions are run on a computer, the computer is enabled to perform the method according to any one of claims 1 to 17 or the method according to any one of claims 18 to 23.

Sender

Receiver

Node

FIG. 1A

(a)

(b)

FIG. 1B

Node    Entity

FIG. 2

Node    Entity

FIG. 3A

Router A
(supporting
multicast)

Multicast packet
——————————→

Router B
(not supporting
multicast)

Multicast packet
——————————→

Router C
(supporting
multicast)

FIG. 3B

Multicast source

Group address: 224.10.10.10
Port list: port 1 and port 2

MFIB

Port 1                    Port 2

R1                                          R2

Group address: 224.10.10.10
Port list: port 1

Group address: 224.10.10.10
Port list: port 1 and port 2

Port 1                    Port 1                    Port 2

DR 1                      DR 2                      DR 3

Group address: 224.10.10.10
Port list: port 1

Group address: 224.10.10.10
Port list: port 1

Group address: 224.10.10.10
Port list: port 1

Port 1                    Port 1                    Port 1

Receiver 1               Receiver 2               Receiver 3

FIG. 4

FIG. 5

601. Obtain a first multicast packet, where the first multicast packet includes multicast information of the second node, the second node is a non-leaf subnode of the first node in a multicast tree, the multicast information of the second node includes multicast routing information of the second node, multicast routing information of a node includes a multicast routing identifier of the node and multicast routing information of a non-leaf subnode of the node in the multicast tree, and a multicast routing identifier of a node is used by the node to determine a subnode of the node in the multicast tree

602. First multicast packet

FIG. 6

| Multicast routing identifier of node $2_0$ | Multicast routing information of a first non-leaf subnode of node $2_0$ | Multicast routing information of a second non-leaf subnode of node $2_0$ | ... | Multicast routing information of an $M2^{nd}$ non-leaf subnode of node $2_0$ |
|---|---|---|---|---|

Multicast routing information of a second node

| Multicast routing identifier of the second node | Multicast routing information of node $2_0$ | Multicast routing information of node $2_1$ | ... | Multicast routing information of node $2_{M1-1}$ |
|---|---|---|---|---|

First multicast packet →

| Multicast information of the second node | Payload |
|---|---|

Packet header

Node $2_0$: first non-leaf subnode of the second node

Node $2_1$: second non-leaf subnode of the second node

Node $2_{M1-1}$: $M1^{st}$ non-leaf subnode of the second node

FIG. 7

Multicast routing information of node R

| Multicast routing identifier of node R | Multicast routing information of node S |
|---|---|

Multicast packet sent by node B to node R →

| Multicast information of node R | Payload |
|---|---|

Packet header

FIG. 8

| Multicast routing identifier of node $2_0$ | Addressing field of node $2_0$ | Multicast routing information of a first non-leaf subnode of node $2_0$ | Multicast routing information of a second non-leaf subnode of node $2_0$ | ... | Multicast routing information of an $M2^{nd}$ non-leaf subnode of node $2_0$ |
|---|---|---|---|---|---|

Multicast routing information of a second node

| First field | Multicast routing identifier of the second node | Addressing field of the second node | Multicast routing information of node $2_0$ | Multicast routing information of node $2_1$ | ... | Multicast routing information of node $2_{M1-1}$ | Second field |
|---|---|---|---|---|---|---|---|

First multicast packet →

| Outer encapsulation | Multicast information of the second node | Inner encapsulation | Payload |
|---|---|---|---|

Packet header

Node $2_0$: first non-leaf subnode of the second node

Node $2_1$: second non-leaf subnode of the second node

Node $2_{M1-1}$: $M1^{st}$ non-leaf subnode of the second node

FIG. 9

Multicast routing
information of node R

| First field | Multicast routing identifier of node R | Addressing field of node R | Multicast routing information of node S | Second field |
|---|---|---|---|---|

Multicast packet
sent by node B ⟶
to node R

| Outer encapsulation | Multicast information of node R | Inner encapsulation | Payload |
|---|---|---|---|

Packet header

FIG. 10

Cnt: count                     Idx: index

| Cnt | Idx$_1$ | Idx$_2$ | ... | Idx$_x$ |
|---|---|---|---|---|

Multicast routing identifier

(a)

Bit: bit

| Bit sequence |
|---|

Multicast routing identifier

(b)

GID: group identifier

| GID |
|---|

Multicast routing identifier

(c)

FIG. 11

**First case**

| Table index | Next-hop address |
|---|---|
| 0 | Address of node A |
| 1 | Address of node B |
| 2 | Address of node C |
| 3 | Address of node D |
| 4 | Address of node E |
| 5 | Address of node F |

Bit string: 0 1 0 0 1 1

**Second case**

| Table index | Next-hop address |
|---|---|
| 0 | Address of node A |
| 1 | Address of node B |
| 2 | Address of node C |
| 3 | Address of node D |
| 4 | Address of node E |
| 5 | Address of node F |

Bit string: 0 1 0 0 1 1

**Third case**

| Table index | Next-hop address |
|---|---|
| 1 | Address of node A |
| 2 | Address of node B |
| 3 | Address of node C |
| 4 | Address of node D |
| 5 | Address of node E |
| 6 | Address of node F |

Bit string: 0 1 0 0 1 1

**Fourth case**

| Table index | Next-hop address |
|---|---|
| 1 | Address of node A |
| 2 | Address of node B |
| 3 | Address of node C |
| 4 | Address of node D |
| 5 | Address of node E |
| 6 | Address of node F |

Bit string: 0 1 0 0 1 1

FIG. 12

Total-Len refers to a total length of multicast routing information of A0

First field   Multicast routing information of A0

| | Multicast routing identifier of A0 | Multicast routing information of A1 | Multicast routing information of A2 |

Multicast packet received by A0

| Total-Len: 8 | A0: 1 110 | A1: 11 | A2: 10 |

| Table index | Next-hop address |
| --- | --- |
| 0 | Address of A1 |
| 1 | Address of A2 |
| 2 | Address of A3 |
| 3 | Address of B |
| 4 | Address of C |
| 5 | Address of D |
| 6 | Address of E |
| 7 | Address of F |
| 8 | Address of G |

Set identifier

(a)

Total-Len refers to a total length of multicast routing information of A0, and bit refers to a bit

First field   Multicast routing information of A0   Second field

Multicast routing identifier of A0

Multicast packet received by A0

| Total-Len: 7 | A0: 0 111000 | 1 bit |

| Table index | Next-hop address |
| --- | --- |
| 0 | Address of A1 |
| 1 | Address of A2 |
| 2 | Address of A3 |
| 3 | Address of B |
| 4 | Address of C |
| 5 | Address of D |
| 6 | Address of E |
| 7 | Address of F |
| 8 | Address of G |

Set identifier

(b)

FIG. 13

Total-Len refers to a total length of multicast
routing information of A1, and bit refers to a bit

| | First field | Multicast routing information of A1 | Second field |
|---|---|---|---|
| Multicast packet received by A1 | Total-Len: 2 | A1: 11 | 6 bits |

(a)

Total-Len refers to a total length of multicast
routing information of A2, and bit refers to a bit

| | First field | Multicast routing information of A2 | Second field |
|---|---|---|---|
| Multicast packet received by A2 | Total-Len: 2 | A2: 10 | 6 bits |

(b)

## FIG. 14

Type: type          Cnt: count          Idx: index

| Type | Cnt | $Idx_1$ | $Idx_2$ | ... | $Idx_x$ |
|---|---|---|---|---|---|

Multicast routing identifier

(a)

Type: type          Bit: bit

| Type | Bit sequence |
|---|---|

Multicast routing identifier

(b)

Type: type     GID: group identifier

| Type | GID |
|---|---|

Multicast routing identifier

(c)

## FIG. 15

First case: $L_0, L_1, ..., L_{M-2}$
Second case: $L_0, L_1, ..., L_{M-1}$

| First field | Multicast routing identifier | Addressing field | Recursive unit 0 | Recursive unit 1 | ... | Recursive unit M−1 | Second field |
|---|---|---|---|---|---|---|---|

Multicast routing information

Multicast information

FIG. 16

FIG. 17

Delimitation field

| Sixth field | Multicast routing identifier | Recursive unit 0 | | Recursive unit 1 | | ... | | Recursive unit M−1 | Second field |
|---|---|---|---|---|---|---|---|---|---|

Multicast routing information

Multicast information

FIG. 18

First node

Second node

1901. Receive a seventh multicast packet (including multicast information and data of the first node)

1902. If the first node determines that the second node is a leaf subnode of the first node, extract data in the seventh multicast packet

1903. Assemble a first unicast packet based on the data

1904. First unicast packet

FIG. 19

A first entity receives a third multicast packet, where the third multicast packet includes first multicast routing information of a first node ⟋ 2001

The first entity determines a second entity based on a first multicast routing identifier of the first node, where the second entity is an entity in the first node ⟋ 2002

The first entity sends a fourth multicast packet to the second entity, where the fourth multicast packet includes second multicast routing information of the first node ⟋ 2003

FIG. 20

FIG. 21

FIG. 22(a)

| First field | | Multicast routing information of D1 | | | | | Second field |

| | Multicast routing identifier of D1 | Addressing field of D1 | Multicast routing information of A | Multicast routing information of C | Multicast routing information of E | | |

| | | | Multicast routing identifier of A | Multicast routing identifier of C | Multicast routing information of T | Multicast routing identifier of E |

Multicast routing identifier of T

| Total-Len: 29 | D1: 110101 | L1: 7 | A: 0101 | C: 0011 | T: 110 | E: 0110 | 3 bits |

Total-Len refers to a total length of multicast routing information of D1, and bit refers to a bit

FIG. 22(b)

| First field | | Multicast routing information 1 of D1 | | | Second field |

| | Multicast routing identifier 1 of D1 | Addressing field of D1 | Multicast routing information of C | Multicast routing information of E | |

| | | | Multicast routing identifier of C | Multicast routing information of T | Multicast routing identifier of E |

Multicast routing identifier of T

| Total-Len: 25 | D1: 100101 | L1: 7 | C: 0011 | T: 110 | E: 0110 | 7 bits |

Total-Len refers to a total length of multicast routing information 1 of D1, and bit refers to a bit

FIG. 22(c)

First field

Multicast routing
information 2 of D1

Second
field

Multicast routing    Multicast routing
identifier 2 of D1    information of E

Multicast routing
identifier of E

| Total-Len: 10 | D1: 100001 | E: 0110 | 6 bits |
|---|---|---|---|

Total-Len refers to a total length of multicast routing
information 2 of D1, and bit refers to a bit

FIG. 22(d)

Multicast information of T

First field

Multicast routing
information of T

Second
field

Multicast routing
identifier of T

| Total-Len: 3 | T: 110 | 5 bits |
|---|---|---|

Total-Len refers to a total length of multicast routing
information of T, and bit refers to a bit

FIG. 22(e)

71

FIG. 23(a)

| First field | Multicast routing information of D1 | | Second field |
|---|---|---|---|
| | Multicast routing identifier of D1 | Multicast routing information of T | |
| Total-Len: 12 | D1: 101 011 110 | T: 110 | 4 bits |

Total-Len refers to a total length of multicast routing information of D1, and bit refers to a bit

FIG. 23(b)

| First field | Multicast routing information 1 of D1 | | Second field |
|---|---|---|---|
| | Multicast routing identifier 1 of D1 | Multicast routing information of T | |
| Total-Len: 12 | D1: 000 011 110 | T: 110 | 4 bits |

Total-Len refers to a total length of multicast routing information 1 of D1, and bit refers to a bit

FIG. 23(c)

| First field | Multicast routing information 2 of D1 | Second field |
|---|---|---|
| | Multicast routing identifier 2 of D1 | |
| Total-Len: 9 | D1: 000 000 110 | 7 bits |

Total-Len refers to a total length of multicast routing information 2 of D1, and bit refers to a bit

FIG. 23(d)

FIG. 24A(a)

| First field | Multicast routing information of D1 | | | | Second field |
|---|---|---|---|---|---|
| | Multicast routing identifier of D1 | Multicast routing information of C | | Multicast routing information of E | |
| Total-Len: 18 | D1: **1101101** | C: **0011** | T: 110 | E: **0110** | 6 bits |

Total-Len refers to a total length of multicast routing information of D1, and bit refers to a bit

FIG. 24A(b)

| First field | Multicast routing information 1 of D1 | | | | Second field |
|---|---|---|---|---|---|
| | Multicast routing identifier 1 of D1 | Multicast routing information of C | | Multicast routing information of E | |
| Total-Len: 18 | D1: **1000101** | C: **0011** | T: 110 | E: **0110** | 6 bits |

Total-Len refers to a total length of multicast routing information 1 of D1, and bit refers to a bit

FIG. 24A(c)

| First field | Multicast routing information 2 of D1 | | Second field |
|---|---|---|---|
| | Multicast routing identifier 2 of D1 | Multicast routing information of E | |
| Total-Len: 11 | D1: **1000 001** | E: **0110** | 5 bits |

Total-Len refers to a total length of multicast routing information 2 of D1, and bit refers to a bit

FIG. 24A(d)

| First field | Multicast routing information of Z | |
| | Multicast routing identifier of Z | Multicast routing information of E |
| | | Multicast routing identifier of E |
| Total-Len: 8 | Z: 10111 | E: 011 |

Total-Len refers to a total length of multicast routing information of Z, and bit refers to a bit

(a)

| First field | Multicast routing information 1 of Z | Second field |
| | Multicast routing identifier 1 of Z | |
| Total-Len: 5 | Z: 10001 | 3 bits |

Total-Len refers to a total length of multicast routing information 1 of Z, and bit refers to a bit

(b)

| First field | Multicast routing information 2 of Z | |
| | Multicast routing identifier 2 of Z | Multicast routing information of E |
| | | Multicast routing identifier of E |
| Total-Len: 8 | Z: 10110 | E: 011 |

Total-Len refers to a total length of multicast routing information 2 of Z, and bit refers to a bit

(c)

FIG. 24B

| First field | Multicast routing information of Z | | | Second field |
|---|---|---|---|---|
| | Multicast routing identifier of Z | Multicast routing information of X | Multicast routing information of E | |
| | | Multicast routing identifier of X | Multicast routing identifier of E | |
| Total-Len: 11 | Z: 110111 | X: 01 | E: 011 | 6 bits |

Total-Len refers to a total length of multicast routing information of Z, and bit refers to a bit

(a)

| First field | Multicast routing information 1 of Z | Second field |
|---|---|---|
| | Multicast routing identifier 1 of Z | |
| Total-Len: 6 | Z: 100001 | 2 bits |

Total-Len refers to a total length of multicast routing information 1 of Z, and bit refers to a bit

(b)

| First field | Multicast routing information 2 of Z | | Second field |
|---|---|---|---|
| | Multicast routing identifier 2 of Z | Multicast routing information of E | |
| | | Multicast routing identifier of E | |
| Total-Len: 9 | Z: 100110 | E: 011 | 7 bits |

Total-Len refers to a total length of multicast routing information 2 of Z, and bit refers to a bit

(c)

FIG. 24C

FIG. 25

Multicast information of B

First field

Multicast routing information of B

Second field

Multicast routing identifier of B

Multicast routing information of R

Multicast routing identifier of R

Addressing field of R

Multicast routing information of S

Multicast routing information of E

Multicast routing identifier of S

Multicast routing information of C

Multicast routing information of D

Multicast routing identifier of E

Multicast routing identifier of C

Multicast routing identifier of D

| Total-Len: 68 | C: 1 | I0: 1 | C: 2 | I0: 1 | I1: 2 | Ls: 30 | C: 2 | I0: 1 | I1: 2 | C: 1 | I0: 1 | C: 1 | I0: 1 | C: 1 | I0: 1 | 4 bits |
|---|---|---|---|---|---|---|---|---|---|---|---|---|---|---|---|---|

Total-Len refers to a total length of multicast routing information of B, and bit refers to a bit

FIG. 26(a)

Multicast information of R

| | | First field | | Multicast routing information of R | | | | | | | | | | | | | Second field |

Multicast routing information of R

First field | Second field

Multicast routing identifier of R | Addressing field of R | Multicast routing information of S | Multicast routing information of E

Multicast routing identifier of S | Multicast routing information of C | Multicast routing information of D | Multicast routing identifier of E

Multicast routing identifier of C | Multicast routing identifier of D

| Total-Len: 59 | C: 2 | I0: 1 | I1: 2 | Ls: 30 | C: 2 | I0: 1 | I1: 2 | C: 1 | I0: 1 | C: 1 | I0: 1 | C: 1 | I0: 1 | 5 bits |

Total-Len refers to a total length of multicast routing information of R, and bit refers to a bit

FIG. 26(b)

Multicast information of S

First field | Multicast routing information of S | Second field

Multicast routing identifier of S | Multicast routing information of C | Multicast routing information of D

Multicast routing identifier of C | Multicast routing identifier of D

| Total-Len: 30 | C: 2 | I0: 1 | I1: 2 | C: 1 | I0: 1 | C: 1 | I0: 1 | 2 bits |

Total-Len refers to a total length of multicast routing information of S, and bit refers to a bit

FIG. 26(c)

Multicast information of E

| First field | Multicast routing information of E | Second field |
|---|---|---|

Multicast routing identifier of E

| Total-Len: 9 | C: 1 | I0: 1 | 7 bits |
|---|---|---|---|

Total-Len refers to a total length of multicast routing information of E, and bit refers to a bit

FIG. 26(d)

Multicast information of C

| First field | Multicast routing information of C | Second field |
|---|---|---|

Multicast routing identifier of C

| Total-Len: 9 | C: 1 | I0: 1 | 7 bits |
|---|---|---|---|

Total-Len refers to a total length of multicast routing information of C, and bit refers to a bit

FIG. 26(e)

Multicast information of B

First field | Multicast routing information of B | Second field

Multicast routing identifier of B | Multicast routing information of R

Multicast routing identifier of R | Addressing field of R | Multicast routing information of S | Multicast routing information of E

Multicast routing identifier of S | Multicast routing information of C | Multicast routing information of D | Multicast routing identifier of E

Multicast routing identifier of C | Multicast routing identifier of D

| Total-Len: 22 | B: 01 | R: 011 | $L_s$: 7 | S: 011 | C: 01 | D: 01 | E: 01 | 2 bits |
| --- | --- | --- | --- | --- | --- | --- | --- | --- |

Total-Len refers to a total length of multicast routing information of B, and bit refers to a bit

FIG. 27(a)

| Multicast information of R | | | | | | | Second field |
|---|---|---|---|---|---|---|---|
| First field | Multicast routing information of R | | | | | | |
| Multicast routing identifier of R | Addressing field of R | Multicast routing information of S | | | | Multicast routing information of E | |
| | | Multicast routing identifier of S | Multicast routing information of C | Multicast routing information of D | | Multicast routing identifier of E | |
| | | | Multicast routing identifier of C | Multicast routing identifier of D | | | |
| Total-Len: 20 | R: 011 | L$_s$: 7 | S: 011 | C: 01 | D: 01 | E: 01 | 4 bits |

Total-Len refers to a total length of multicast routing information of R, and bit refers to a bit

FIG. 27(b)

| Multicast information of S | | | | | |
|---|---|---|---|---|---|
| First field | Multicast routing information of S | | | | Second field |
| | Multicast routing identifier of S | Multicast routing information of C | Multicast routing information of D | | |
| | | Multicast routing identifier of C | Multicast routing identifier of D | | |
| Total-Len: 7 | S: 011 | C: 01 | D: 01 | | 1 bit |

Total-Len refers to a total length of multicast routing information of S,
and bit refers to a bit

FIG. 27(c)

Multicast information of E

First field | Multicast routing information of E | Second field

Multicast routing identifier of E

Multicast routing identifier of E

| Total-Len: 2 | E: 01 | 6 bits |

Total-Len refers to a total length of multicast routing information of E, and bit refers to a bit

## FIG. 27(d)

Multicast information of C

First field | Multicast routing information of C | Second field

Multicast routing identifier of C

| Total-Len: 2 | C: 01 | 6 bits |

Total-Len refers to a total length of multicast routing information of C, and bit refers to a bit

## FIG. 27(e)

(a)

(b)

FIG. 28

Multicast information of 3

First field

Multicast routing information of 3

Second field

Multicast routing identifier of 3

Multicast routing information of 5

Multicast routing identifier of 5

Addressing field of 5

Multicast routing information of D1

Multicast routing information of D2

Multicast routing identifier of D1

Addressing field of D1

Multicast routing information of A

Multicast routing information of C

Multicast routing information of E

Multicast routing identifier of D2

| Total-Len: 45 | 3: 01 | 5: 011 | $L_{D1}$: 25 | D1: 110101 | $L_c$: 7 | A: 0101 | C: 0011 | T: 110 | E: 0110 | D2: 011 | 3 bits |
|---|---|---|---|---|---|---|---|---|---|---|---|

Total-Len refers to a total length of multicast routing information of 3, and bit refers to a bit

FIG. 29(a)

Multicast information of 5

First field — Multicast routing information of 5 — Second field

Multicast routing identifier of 5 | Addressing field of 5 | Multicast routing information of D1 | Multicast routing information of D2

| | Multicast routing identifier of D1 | Addressing field of D1 | Multicast routing information of A | Multicast routing information of C | Multicast routing information of E | Multicast routing identifier of D2 |

| Total-Len: 43 | 5: 011 | $L_{D1}$: 25 | D1: 110101 | $L_c$: 7 | A: 0101 | C: 0011 | T: 110 | E: 0110 | D2: 011 | 5 bits |
|---|---|---|---|---|---|---|---|---|---|---|

Total-Len refers to a total length of multicast routing information of 5, and bit refers to a bit

FIG. 29(b)

Multicast information of D1

First field — Multicast routing information of D1 — Second field

| | Multicast routing identifier of D1 | Addressing field of D1 | Multicast routing information of A | Multicast routing information of C | Multicast routing information of E | |

| Total-Len: 29 | D1: 110101 | $L_c$: 7 | A: 0101 | C: 0011 | T: 110 | E: 0110 | 3 bits |
|---|---|---|---|---|---|---|---|

Total-Len refers to a total length of multicast routing information of D1, and bit refers to a bit

FIG. 29(c)

EP 4 300 913 A1

Multicast information of D2

|  | Multicast routing information of D2 | Second field |
| :---: | :---: | :---: |
| First field | | |

Multicast routing identifier of D2

| Total-Len: 3 | D2: 011 | 5 bits |

Total-Len refers to a total length of multicast
routing information of D2, and bit refers to a bit

FIG. 29(d)

Processing unit 3001

Storage unit 3003

Communications unit 3002

Communications apparatus 300

FIG. 30

Processor 3101

CPU 0

CPU 1

Communications
bus 3102

Memory 3103

Communications
interface 3104

Communications apparatus 310

FIG. 31

## INTERNATIONAL SEARCH REPORT

| International application No. |
|---|
| **PCT/CN2022/076838** |

| **A.** | **CLASSIFICATION OF SUBJECT MATTER** |
|---|---|

H04L 45/16(2022.01)i

According to International Patent Classification (IPC) or to both national classification and IPC

| **B.** | **FIELDS SEARCHED** |
|---|---|

Minimum documentation searched (classification system followed by classification symbols)

H04L H04W

Documentation searched other than minimum documentation to the extent that such documents are included in the fields searched

Electronic data base consulted during the international search (name of data base and, where practicable, search terms used)

CNTXT; CNKI; VEN; 3GPP; IETF; ENTXTC: 报文, 信息, 组播, 多播, 子节点, 节点, 树, 包括, 包含, 含有, 路由, 转发, 标识, 稀疏模式, message?, information, packet?, multicast+, child w node?, node, tree, include+, contain+, rout+, forward+, transf+, identif+, sparse w mode, PIM 1w SM

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| A | US 2015049760 A1 (VERIZON PATENT AND LICENSING INC.) 19 February 2015 (2015-02-19)<br>  entire document | | 1-48 |
| A | CN 110224935 A (HUAWEI TECHNOLOGIES CO., LTD.) 10 September 2019 (2019-09-10)<br>  entire document | | 1-48 |
| A | JP 2009201054 A (NIPPON TELEGRAPH & TELEPHONE CORP.) 03 September 2009 (2009-09-03)<br>  entire document | | 1-48 |
| A | ROSEN, E. et al. "Ingress Replication Tunnels in Multicast VPN"<br>*IETF rfc7988,* 31 October 2016 (2016-10-31),<br>  entire document | | 1-48 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 April 2022** | **28 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/076838**

| Patent document cited in search report | | | Publication date (day/month/year) | Patent family member(s) | | | Publication date (day/month/year) |
|---|---|---|---|---|---|---|---|
| US | 2015049760 | A1 | 19 February 2015 | US | 9237025 | B2 | 12 January 2016 |
| CN | 110224935 | A | 10 September 2019 | US | 2022103461 | A1 | 31 March 2022 |
| | | | | WO | 2019165900 | A1 | 06 September 2019 |
| | | | | US | 2020403903 | A1 | 24 December 2020 |
| | | | | EP | 3751805 | A1 | 16 December 2020 |
| | | | | CN | 110224935 | B | 23 October 2020 |
| | | | | CN | 112422438 | A | 26 February 2021 |
| | | | | EP | 3751805 | A4 | 14 April 2021 |
| | | | | US | 11233724 | B2 | 25 January 2022 |
| JP | 2009201054 | A | 03 September 2009 | JP | 4809855 | B2 | 09 November 2021 |

Form PCT/ISA/210 (patent family annex) (January 2015)

**REFERENCES CITED IN THE DESCRIPTION**

**Patent documents cited in the description**

- CN 202110304363